# EUROPEAN PATENT SPECIFICATION

(11) **EP 3 509 944 B1**
(45) Date of publication and mention of the grant of the patent: **21.10.2020**
(21) Application number: 17771511.7
(22) Date of filing: 08.09.2017
(51) Int. Cl.: B64C 3/48, B64C 3/52, F01D 5/00, B64C 3/44, B64C 3/54

(54) **BLADE OR WING**
BLATT ODER FLÜGEL
PALE OU AILE

(30) Priority: 09.09.2016 GB 201615399; 22.09.2016 GB 201616161
(43) Date of publication of application: 17.07.2019
(73) Proprietor: Brunel University London, Uxbridge Middlesex UB8 3PH (GB)
(72) Inventor: GATTO, Alvin, Uxbridge Middlesex UB8 3PH (GB)
(74) Representative: Williams Powell
(86) International application number: PCT/GB2017/052627
(87) International publication number: WO 2018/046936

(56) References cited:
- WO-A1-2013/061351
- US-A- 4 863 117
- US-A- 5 681 014
- US-A1- 2011 303 796
- US-A1- 2016 176 502

## Description

The invention relates to a wing, for example for an aircraft, or a blade which is typically designed based on aerodynamic considerations.

WO 2013/061351 discloses aerodynamic profile with variable twist and pitch. US 2011/0303796 discloses morphing control surface transition. US 4863117 discloses profiled wing for controlled deformation and application thereof to beating wing aircraft. US 5681014 discloses torsional twist airfoil control means.

Aircraft control through the use of traditional discrete control surfaces has achieved widespread success over many years (McRuer, 2004). These traditional methods, widely accepted on the vast majority of aircraft, however can be detrimental to an aircraft aerodynamic performance as they rely on hinged control surfaces which can generate significant flow separation when actuated fully. To meet the ever increasing demands for more efficient, robust, and cost effective designs, there is an argument that conventional control surface methodologies need to be re-examined, in favour of more "morphing" technologies and techniques.

Morphing technologies typically revolve around adaptive geometry structures and mechanisms and are very attractive to aircraft designers as they can provide substantial benefits to aircraft performance. Wing warping techniques were employed by the Wright Brothers to control the first powered, heavier than air, aircraft through wing twist via subtended cables (Culick, 2003). However, even with the substantial research efforts over the last few decades morphing concepts still suffer significant challenges. These include added weight, costs, skin, structure, and/or complexity. Jha and Kudva (2004) summarised some of the technical challenges and classifications of morphing aircraft, with the most significant challenges tending to be in the structural design of the concepts and mechanisms employed. For instance, to accommodate comparable control surface deflections of traditional techniques, high levels of structural design and analysis are needed, often requiring heavy actuators which increase overall weight.

Prandtl's Lifting Line Theory was the first mathematical method to estimate the performance of a wing's lift capabilities for an aircraft; being thereafter modified by

Philips (2004a, 2004b) to estimate the influences of wing twist on lift distribution. Following this seminal work, more studies have considered morphing wing and/or winglet twist configuration both theoretically and experimentally, to investigate influences on the aerodynamic performance of an aircraft. Studies using novel design concepts of twisted winglet configuration were presented in (Kaygan and Gatto, 2014, 2015 and Smith et al., 2014). Results indicated that, high winglet twist angle performed well as a mechanism for control, and at up to winglet twist angles of φ=-5° and φ=-3°, comparable to good aerodynamic efficiency was achieved. Contrary to winglet twist, the application of variable wing twist seems to be more attractive concepts for researchers. From the early stages of morphing to up to today, various methods and mechanism have attempted to find out the solutions to provide twist deformation for the wings. Recent works have detailed the deflection of wing twist using torque rods (Garcia et al., 2003) adaptive stiffness structures (Amprikidis and Cooper, 2004; Majji et al., 2007), and threaded rods (Vos et al., 2010). The torque rod twist mechanism for membrane wings was investigated by Garcia et al. (2003). According to his flight testing, comparable to traditional aileron roll rates were achieved via twisting wings. Later on, using Adaptive stiffness structures such as using pneumatic cylinders (Amprikidis and Cooper, 2004) and rotating and translating rib concepts (Majji et al., 2007) were also investigated and both investigations showed good agreement with a wind tunnel experiments and effectively required wing twist or control moments were achieved. Further study for twisted wings was carried out by Vos et al. (2010) using threated torque rod mechanism and Adaptive torsion wing concepts (Ajaj et al., 2011) respectively. According to their research, good aerodynamic benefits have gained due to reduced induced drag. In overall, nevertheless, theoretical and subsequent wind tunnel tests do provide huge benefits in terms of aerodynamics and roll control, the requirements to adapt those mechanisms into a real flight environment still vague due to heavy twist mechanisms, their installation cost, complexity and required higher torque as well as reliefs formed on the skin.

An important component of a compliant morphing structure is the morphing skin, which should be flexible for actuation, but also rigid to allow favourable aerodynamic performance to be obtained. Some prior literature on morphing skins, involve flexible skins such as FMC, elastomeric skin, and corrugated skin, however none have yet to achieve widespread use. This problem is particularly difficult as there are conflicting requirements. The skin needs be capable of transferring aerodynamic loads and be flexible in order to move and/or change shape. These requirements are particularly challenging as the surface should remain smooth and possess a low rate wrinkle at the location of moveable mechanism. Unfortunately, the morphing skin solutions that have been investigated exhibit many wrinkles, which can represent a source of undesired drag increase. The following paragraphs present a survey of morphing skin technologies. Thill et al. (2008) offers potential solutions for flexible morphing skins. According to his article, the flexibility and stiffness problems in morphing air vehicles might be solved by using novel materials such as elastomeric skins, flexible matrix composites, and composite corrugated structures. Flexible matrix composites were investigated by Olympio et al. (2010). They focused in flexible skins comprising with a cellular substructure (Honeycomb) and pretension face sheet for shear morphing application. According to research, honeycomb cellular structure was found to be a way of to reduce the peak strain which is results to reduce actuation energy, but wrinkling was found at face-sheet which disrupts aerodynamic smooth surface finish. Similar to Olympio, elastomeric matrix composites for passive 1D morphing aircraft skin was investigated by Bubert et al. (2010). Flexible honeycomb structure was used and then the structure was covered by elastomeric fiber composite surface layer. Satisfactory results were achieved and 100% surface area change was obtained. Alternatively, use of corrugated skin was investigated by several researchers. The benefits of this material are wing structure could be stiff to withstand the bending due to aerodynamic forces and flexible to deflect to adapt different flight conditions. Yokozeki et al. (2006) demonstrated the use of corrugated composites for flexible wing structures. Tensile and flexural tests were conducted in the longitudinal and transverse direction and hence, composite corrugated structures were found to be rigid against the aerodynamic forces. Moreover, stiff rod and flexible rubber were attempted to use to provide stiffness of morphing skin. Details of structural and aerodynamic behaviours of composite corrugated sandwich structures were investigated by Thill et al. (2010). Research showed that structures generate low drag profile, but additional supports needed to stiff morphing skin as well as to maintain smooth surfaces(Wind tunnel demonstration showed the concepts work well under aerodynamic load (at low speeds)). The comparison studies between experimental and numerical model for mechanical behaviours of coated corrugated panels made of glass fibers were investigated by Dayyani et al. (2014). Results obtained from this study showed good agreement between numerical and experimental testing. Also, they proposed ideas to deal with the smooth surface problem. According to ideas, composite corrugated covered with pre-stretched coating and triangular corrugated core with elastomer coating could be some ways of solution for morphing skin, but the drawback was corrugated skin will require frequently elastomer covering to provide smooth surfaces . In addition, optimization of composite corrugated skin for buckling in morphing aircraft was investigated by Shaw et al. (2015). Their work analyses the performance of corrugated panels under buckling loads, and optimises corrugation patterns for the objectives of weight, buckling performance, and actuation compliance. However, unfortunately substantial research effort has been done so far for aircraft skin; there are still challenges to go through due to required high torque actuators, more stiffness materials with highly flexible as well as smooth aerodynamic surfaces.

Aspects of the present invention according to claim 1 seek to provide an improved blade or wing.

According to an aspect of the invention, as defined in claim 1, there is provided a blade or wing including a blade or wing element including, among other features many adjacent ribs rotatable and/or slidable with respect to one another whereby to vary the aerodynamic configuration or profile of the blade or wing element for example by causing a twist thereof.

In some embodiments the twist can change the longitudinal or spanwise orientation of the wing or blade element.

Preferably, the ribs are rotatable with respect to each other.

In some embodiments, the ribs are rotatable about a main spar, a control rod, or an axis of rotation, that can be substantially longitudinal or spanwise.

In some embodiments, the blade or wing element includes a plurality of actuators, each actuator being coupled to an associated rib and being operable to rotate the respective associated rib.

Preferably, each actuator is coupled to a main spar and is operable to rotate the respective rib with respect to the main spar. The main spar may be a fixed rod. The main spar may provide an axis of rotation of the ribs. The main spar may pass through each of the ribs.

Preferably, the actuators are separated by several ribs.

Preferably, each actuator is coupled to the main spar via a lever arm.

Preferably, each actuator is operable to cause the respective lever arm to rotate about a pivot position in the main spar to cause a rotation of the respective rib.

Preferably, each actuator includes a servomotor.

Preferably, the ribs are coupled together by a linkage member configured to resist relative rotation of the ribs.

In some embodiments, the blade or wing element includes a control rod operable to rotate the ribs and which can in some embodiments provide the axis of rotation.

The control rod can be rotatably coupled to each of the ribs, for example by passing through each of the ribs.

Preferably, the blade or wing element includes at least one stiffening rod coupled to each of the ribs to resist for example excessive relative rotation of the ribs, for example by passing through each of the ribs.

Preferably, the at least one stiffening rod is spaced from an axis of rotation of each rib, the spacing preferably providing separation at least along a rib line of the rib, the rib line being an imaginary line joining leading and trailing edges of the rib.

In some embodiments, the blade or wing element includes an end element, wherein the control rod is preferably secured to the end element to rotate the end element.

In some embodiments, the at least one stiffening rod is coupled or secured to the end element.

Preferably, the at least one stiffening rod is a plurality of stiffening rods.

In some embodiments, the ribs are parallel to each other and transverse, preferably perpendicular, to their axis of rotation.

In some embodiments, the ribs are parallel to each other and transverse, preferably perpendicular, to the control rod or main spar. In some embodiments, the ribs may be configured to rotate in a plane perpendicular to the control rod or main spar. In some embodiments, each rib may be configured to rotate in a plane that is at a non-perpendicular angle to the control rod or main spar.

In some embodiments, the ribs are parallel to each other and transverse to the longitudinal or spanwise direction.

In some embodiments, the ribs are coupled in a longitudinal or spanwise direction of the blade or wing element and are slidable in a direction transverse, for example perpendicular, to the longitudinal or spanwise direction.

In some embodiments, the ribs are coupled in a direction parallel to their axis of rotation and/or the axis of the control rod or main spar and are slidable in a direction transverse, for example perpendicular, to the direction in which they are coupled.

Preferably, the ribs are adjacent and substantially without gaps between adjacent ribs whereby to provide a substantially smooth surface to the blade or wing element.

In some embodiments, the ribs are uncovered, that is to say that they can provide a surface of the blade or wing element.

In some embodiments, the ribs are covered, that is to say that they can provide a mounting surface for a continuous skin of the blade or wing element.

The ribs are preferably flexible for example by being formed of a flexible material. This can assist in rejecting external element ingress (such as rain or dirt). The flexibility of the ribs can help to seal gaps between the rib elements.

Preferably, the ribs are rigid. Each rib is preferably continuous or unitary in that it does not have articulating parts. In some embodiment, each rib extends from a leading edge to a trailing edge of a wing or blade.

In the preferred embodiment, the ribs have a flexible width and rigid height. It is noted in this regard that the term height is used to indicate a different dimension from, typically orthogonal or perpendicular to, the width, but that a particular orientation with respect to the vertical is not implied. Preferably, the ribs are compliant to deformation in width with applied load preferably so that the ribs have compliance between adjacent rigid ribs. This can allow them to more adequately mate with the surfaces and inhibit foreign element ingress to the internal structure. They can act in a similar manner to a rubber seal or washer.

The ribs can comprise an elastomeric material such as rubber to provide compliance in width, and can also comprise a rigid material such as metal such as steel to provide rigidity. They can be arranged as a set of steel and rubber washers, one after the other or in other sequence combinations. For example, each rib can be arranged as a rigid washer adjacent to an elastomeric washer.

In some embodiments, each rib has a transverse height greater than its width, where its width may in some embodiments be its longitudinal or spanwise thickness, or its thickness along its axis of rotation or along the main spar or control rod. In some embodiments, a transverse thickness of each rib in any direction perpendicular to the longitudinal or spanwise direction is greater than the width of the respective rib. In some embodiments, a transverse thickness of each rib in any direction perpendicular to the axis of rotation is greater than the width of the respective rib. In some embodiments, a transverse thickness of each rib in any direction perpendicular to the axis of the main spar or control rod is greater than the width of the respective rib.

According to an aspect of the invention, there is provided a blade or wing including a blade or wing element as above. The blade or wing may include a fixed section in addition to the blade or wing element described above. The fixed section may be coupled to the above described blade or wing element in the longitudinal or spanwise direction for example such that the fixed section and the blade or wing element described above are adjacent in the spanwise direction, or longitudinally adjacent.

In embodiments, the transverse cross-section of each of the ribs corresponds to the transverse cross-section of the fixed section.

According to an aspect of the invention, there is provided a blade or wing assembly including a blade or wing element as described above, and a reference element, the reference element being fixed with respect to a non-actuated configuration of the blade or wing element, wherein the at least one stiffening rod is coupled or secured to the reference element.

According to an aspect of the invention, there is provided a blade or wing assembly including a blade or wing element as described above, and a reference element, the reference element being fixed with respect to a non-actuated configuration of the blade or wing element, wherein the main spar is coupled or secured to the reference element.

The plurality of ribs can be located between the reference element and the end element.

In some embodiments, the plurality of ribs, and in some embodiments also the end element, and in some embodiments also the reference element, are compressed together.

In some embodiments, the assembly includes a compression assembly configured to compress the ribs, and in some embodiments also the end element, and in some embodiments also the reference element, together.

In some embodiments, the or each stiffening rod is provided with a suspension arrangement.

In some embodiments, the assembly includes a compression assembly operable to compress the ribs, and in some embodiments also the end element, and in some embodiments also the reference element, together, in response to rotation of the ribs.

The compression assembly can preferably compress the structure together to keep the surface smooth and free from gaps.

In some embodiments, the at least one stiffening rod is configured to compress the ribs, and in some embodiments also the end element, and in some embodiments also the reference element, together, for example in response to rotation of the ribs.

In some embodiments, the compression assembly can include a resilient assembly for each stiffening rod configured to maintain the respective stiffening rod under tension, and/or to allow a greater length of the respective stiffening rod to pass the ribs, that is to be located in a region of the ribs, in a twisted configuration of the ribs.

In some embodiments, the resilient assembly or suspension arrangement is configured to provide suspension for the or each stiffening rod with respect to the reference element and/or the end element.

In some embodiments, the compression assembly is configured to maintain the ribs under a compressive force irrespective of rotation of the ribs.

In some embodiments, the compression assembly is configured to increase a compressive force on the ribs in response to rotation of the ribs.

Each resilient assembly or suspension arrangement can include a resilient element coupled between the respective stiffening element and the reference element and/or between the respective stiffening element and the end element.

In some embodiments, there can be provided a drive unit operable to cause the ribs to slide or rotate with respect to one another. This can be provided as part of the blade or wing or coupled to the blade or wing element as part of an assembly. The drive unit is in some embodiments operable to rotate the end element.

The drive unit can include one or more control rods, for example the control rod described above. In some embodiments, each of the one or more control rods contributes to the control of each of the plurality of ribs.

The drive unit can include a servo mechanism operable to rotate the control rod. However, in other embodiments, the drive unit can include other actuators such as a linear drive unit or a leadscrew mechanism.

According to an aspect of the invention, there is provided an aerodynamic apparatus, such as aeroplane, helicopter, or wind turbine, including a blade or wing element as described above.

According to an aspect of the invention, there is provided a method of assembling a blade or wing element as above including compressing the plurality of ribs before coupling or securing the at least one stiffening rod.

Preferably, the method includes compressing the end element and the ribs, and optionally also the reference element, together before securing the at least one stiffening rod to the end element and/or to the reference element.

Embodiments use many small-thickness elements (ribs), that in essence are allowed to, very slightly, slide or rotate upon one-another to maintain an aerodynamically smooth and rigid surface skin (minimising drag). This can maintain this rigid, smooth surface while creating quite substantial changes in aerodynamic force from changes in wing twist angle. Normally, a rigid, smooth, surface such as this is not possible due to wrinkling (buckling) on the surface when twist is applied. By solving this problem in the way we have, we have improved the aerodynamic efficiency of such a capability as well as produced a method of generating more effective control forces.

In some embodiments, the ribs are collectively controlled via an internal actuation system. This can include a simple torque tube arrangement which uses a servo drive connected to a tube which is connected to the tip of the wing. Twisting the torque tube actuates the end element which in turn actuates the morphing ribs to move.

Embodiments can be used in many other applications, such as helicopter blade optimisation, wind turbines, aircraft winglet optimisation, etc.

Embodiments provide an active morphing wing with novel adaptive skin for aircraft control and performance.

Preferred embodiments of the invention are described below, with reference to the accompanying drawings.
Figure 1 is a schematic view of an active wing: (a) Wing twist mechanism, (b) Positive twist angle (washin) and negative twist angle (washout).
Figure 2 is a schematic view of active wing structures in AVL: (a) Straight wing (wind tunnel model) and (b) tapered wing (prototype for flight test).
Figure 3 shows boundary condition applied to wing structures: (a) Wind tunnel model and (b) Flight Prototype model.
Figure 4 shows the internal mechanism of an active wing.
Figure 5 shows an experimental Model: (a) Full Wing Profile, (b) Aileron Configurations, (c) Aileron (-30°), and (d)Aileron (+30°).
Figure 6 is a general schematic of the Extra 300-78inch aerobatic plane and wing twist design.
Figure 7 shows internal structure of the morphing elements (Flight Prototype).
Figure 8 shows flight Testing models: (a) Wing with ailerons and (b) Wing with morphing design.
Figure 9 shows an experimental setup for adaptive winglet configuration.
Figure 10 shows twist cases for wind tunnel model: (a) Negative twist (φ = -6°) and (b) positive twist (φ = +6°).
Figure 11 shows maximum negative twist (wash-out) of a morphing design without any flow interaction: (a) Experimental model twist and (b) Numerical modelling twist movement.
Figure 12 shows maximum positive twist (wash-in) of a morphing design without any flow interaction: (a) Experimental model twist movement and (b) Numerical modelling twist movement.
Figure 13 shows a drag coefficient comparison between full wing (baseline) and Morphing wing
Figure 14 shows the effects of changing twist angle on the longitudinal static forces and moments, *Reₙ* = 3.85 × 10⁵.
Figure 15 shows effects of changing twist angle on the lateral static forces and moments, *Reₙ* = 3.85 × 10⁵.
Figure 16 effects of changing twist angle on the longitudinal static forces and moments, *Reₙ* = 5.14 × 10⁵.
Figure 17 shows effects of changing twist angle on the lateral static forces and moments, *Reₙ* = 5.14 × 10⁵.
Figure 18 shows a comparison between plain aileron and twist configuration: (a) *C_{L},* (b) *C_{D},* (c) *C_{Y},* (d) *Cₗ,* (e) *Cₘ,* and (f) *Cₙ*
Figure 19 shows lift to drag ratio for wing twist and aileron configurations.
Figure 20 shows rolling moment Coefficient versus drag coefficient.
Figure 21 shows maximum twist of a morphing design without any flow interaction: (a) Experimental model twist movement (wash-out) and (b) Numerical modelling twist movement (wash-out).
Figure 22 shows maximum twist of the morphing concept without any flow interaction: (a) Experimental model twist movement (wash-in) and (b) Numerical modelling twist movement (wash-in).
Figure 23 shows altitude and Approximate Flight Path for a test flight.
Figure 24 shows flight Data for baseline (aileron) and morphing (twist) configuration: (a) Roll angle for rotation 1 and 2 and (b) Load factor for rotation 1 and 2.
Figure 25 shows flight Data for baseline (aileron) and morphing (twist) configuration: (a) Roll angle for rotation 3 and 4 and (b) Load factor for rotation 3 and 4.
Figure 26 shows a velocity profile for baseline (aileron) and morphing (twist) configurations.
Figure 27 shows a morphing design during flight: (a) and (b) washout, and (c) and (d) washin cases.
Figure 28 shows a morphing designafter flight testing.
Figure 29 shows a top view of an aircraft in accordance with an embodiment of the invention.
Figure 30 shows a top view of a part of a wing in accordance with an embodiment of the invention.
Figure 31 shows a part of a wing with ribs of a morphing section loose.
Figure 32 shows an end view of a morphing wing section according to an embodiment of the invention.
Figure 33 is a schematic diagram of a control unit for an embodiment of the invention.

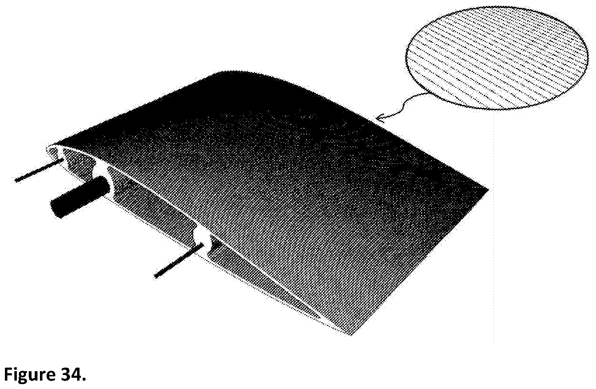

Figure 34 is a perspective view of a morphing wing section according to an embodiment of the invention.
Figure 35 is a schematic diagram showing a resilient assembly for an embodiment of the invention.
Figure 36 is a schematic diagram showing part of a morphing wing section according to an embodiment of the invention.

One embodiment of the invention can be used for providing a wing section of an aircraft such as an aeroplane.

As described below, a morphing wing section can be provided by a plurality of adjacent ribs which can slide and rotate slightly with respect to each other so as to create a smoothly changing twisting wing surface. A control rod and at least one stiffening rod are coupled to the ribs, for example by passing through them, and are secured to an end element of the wing. By rotating the control rod, the end element is rotated, which causes the at least one stiffening rod to bend. The bending of the at least one stiffening rod causes each of the ribs to rotate, with the ribs rotating an increasing amount towards the end element, with each rib sliding slightly with respect to its adjacent rib. The result is a smooth but changeable and controllable twistable wing surface.

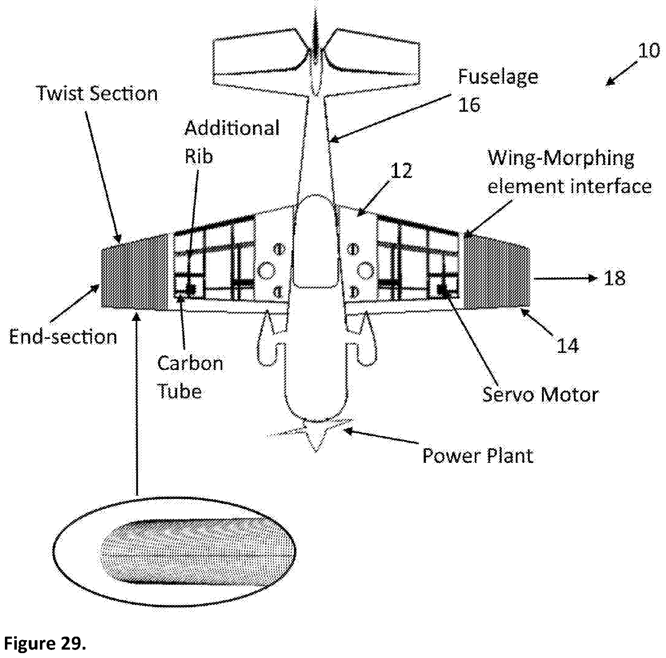

Figure 29 shows a top view of an aeroplane with a morphing wing section at the end of the wing on each side of the aircraft.

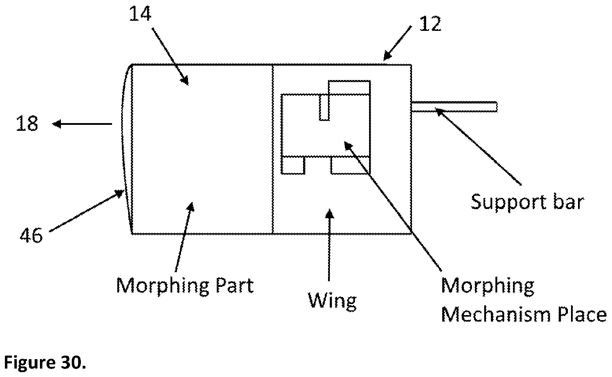

As can be seen from Figure 29 the aircraft 10 includes, as part of the wing extending from each side of the fuselage 16 of the aircraft, a fixed wing section 12 and a morphing wing section 14. This is shown more clearly in Figure 30.

The wing on each side of the fuselage 16 has a longitudinal or spanwise dimension or direction 18 extending away from the fuselage 16. As can be seen from Figure 30, the fixed wing section 12 and the morphing wing section 14 form two zones of the wing which are separate in the spanwise direction.

The wing on each side of the fuselage 16 also has a chord line which is an imaginary line from the leading edge of the wing to the trailing edge of the wing.

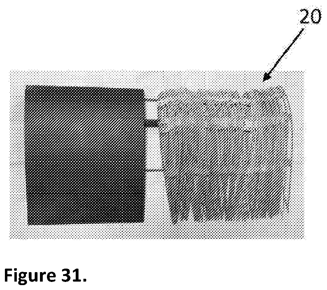

As can be seen in Figure 31 the morphing wing section 14 includes a plurality of adjacent ribs 20. The ribs are parallel to each other and transverse to the spanwise direction. In this embodiment, the ribs are perpendicular to the spanwise direction, although this is not necessary in every embodiment. In some embodiments, the ribs may form an angle of less or more than 90° to the spanwise direction. This can for example be by a rib line forming an angle of less or more than 90° to the spanwise direction, the rib line being an imaginary line joining leading and trailing edges of the rib. However, in such an embodiment, an imaginary height line through the height of the rib perpendicular to the rib line may be perpendicular to the spanwise direction.

Each of the ribs 20 has a transverse cross section which corresponds to the transverse cross section of the fixed wing section 12. The transverse cross section is preferably in a plane parallel to the interface with an adjacent rib and perpendicular to the width of the rib. Having corresponding transverse cross sections means that an outer perimeter of the cross section of each rib 20 preferably corresponds to, and is preferably the same as, the outer perimeter of the cross section of the fixed wing section 12.

In this embodiment, the ribs are adjacent in a spanwise direction.

The ribs have substantially no gaps between them, thereby providing a smooth surface to the morphing wing section.

In this embodiment, the ribs 20 are made of wood, although other materials can be used in other embodiments. Advantageously, the surfaces of the ribs which are to form wing surfaces can be sanded and/or lacquered.

In some embodiments, the ribs can comprise an elastomeric material such as rubber which is compliant to deformation in width to seal gaps between adjacent ribs and prevent ingress of foreign material. Such embodiments can also include a rigid metal support to provide rigidity. In such embodiments, across the width of a rib, the rib may comprise a metal rib element adjacent to an elastomeric rib element, and the ribs may be arranged so that the metal element of one rib is adjacent to the elastomeric element of an adjacent rib.

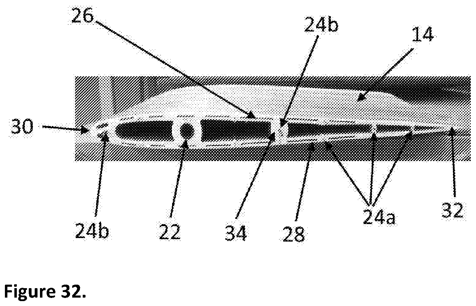

As can be seen particularly in Figure 32, which shows an end view of a morphing wing section 14, and which shows a side view of an end rib 20, in this embodiment each of the ribs 20 includes a frame including a first frame member 26 and a second frame member 28. The first and second frame members 26, 28 are separated along a substantial part of the rib line of the rib, but are joined at a leading edge 30 and at a trailing edge 32 of rib. In this embodiment, the leading edge and trailing edge of the rib are also, respectively, the leading edge and trailing edge of the wing, and the rib line of the rib corresponds to the chord line of the wing.

In the embodiment shown, the first frame member 26 will be at a top surface of the wing, and the second frame member 28 will be at a bottom surface of the wing.

In this embodiment, the rib 20 is substantially hollow between the first and second frame members. However, it is not excluded that the rib could be solid or contain some other filling or support between the frame members.

In this embodiment, the width of the rib is significantly less than the height of the rib.

It is to be noted that although the frame is described as including first and second frame members, the frame may in some embodiments be a monolithic structure.

The frame further includes a plurality of bridging support members 34 which bridge from the first frame member 26 to the second frame member 28 and provide support for the cross-sectional shape of the rib 20.

Each of the ribs 20 includes a plurality of rod coupling elements, including a control rod coupling element 22 and a plurality of stiffness rod coupling elements 24. At least some of the rod coupling elements are spaced, the spacing preferably providing separation at least along the rib line. In other words, at least some of the rod coupling elements are preferably spaced along but not necessary located directly on the rib line, although they can be located directly on the rib line in some embodiments. The rod coupling elements are in this embodiment provided as holes to allow the rods to pass through the ribs 20. The rod coupling elements are for coupling the ribs to control and stiffness rods to allow the ribs to rotate but provide a continuous surface as described below.

In the embodiment of Figure 32, the control rod coupling element 22 is provided at the quarter chord position.

In the embodiment of Figure 32, ten stiffening rod coupling elements 24 are provided, including three smaller coupling elements 24a in each of the first and second frame members, and two smaller coupling elements 24a in bridging support members 34 towards the trailing end of the rib 20. Each of the three smaller coupling elements 24a in the first frame member is arranged to be opposite a counterpart smaller coupling element 24a in the second frame member. In addition, there are provided two larger rod coupling elements 24b at the origin of the chord. The smaller coupling elements 24a are designed to couple to smaller stiffening rods, of 0.5mm diameter in this embodiment. The larger coupling elements 24b are designed to couple to larger stiffening rods, of 1.5mm diameter in this embodiment.

Nevertheless, it is to be noted that in other embodiments, there can be provided different numbers of, different sizes of, and different arrangements of, rod coupling elements.

A control rod 42 passes through the control rod coupling element 22 of each of the ribs of a morphing wing section 14. The control rod coupling element 22 of each rib 20 is configured to allow the control rod 42 to rotate therewithin. In this example, the control rod is a steel shaft encased in a carbon tube. However, other materials can be used for the control rod and for a control rod sheath.

Stiffening rods 44 are coupled to each rib 20 at each of the stiffening rod coupling elements 24. The size of the stiffening rod coupled to each stiffening rod coupling element 24 corresponds to the size of rod for which the stiffening rod coupling element is designed as described above. The stiffening rods have some flexibility but are generally stiff and are configured to limit the degree of rotation or sliding of each rib 20 with respect to its adjacent rib, thereby to ensure that the morphing wing section 14 retains a smooth gradually changing surface when the control rod 42 is actuated to provide rotation to the ribs 20.

In the example shown, the stiffening rods 44 are carbon rods. However, other materials can be used as will be appreciated by the skilled person.

In this embodiment, all of the rods extend parallel to the axis of rotation of the ribs and in the spanwise direction, but it is not excluded that they could for example extend at an angle to the spanwise direction.

The ribs may be rotatable in a plane perpendicular to the axis of the control rod. However, in other embodiments, each rib may be rotatable in a plane that is at a non-perpendicular angle to the axis of the control rod.

As shown in Figure 30, an end element 46 is provided at the end of the morphing wing section opposite in the spanwise direction from the fixed wing section 12.

The control rod 42, and each of the stiffening rods 44, of the morphing wing section, are secured to and terminate in the end element.

In some embodiments, the end element 46 may be a rib 20 with a solid cross section. Preferably, it is rounded in accordance with practices known to the skilled person since it is preferably at the end of the wing. However, it is not excluded that the end element could be an end rib with a further section of wing beyond it.

Generally, each morphing wing section 14 has its own control rod and set of stiffness rods. In other words, one set of control and stiffness rods pass through each rib of a morphing wing section; but there may be a plurality of such sets of rods, each passing through a respective morphing wing section.

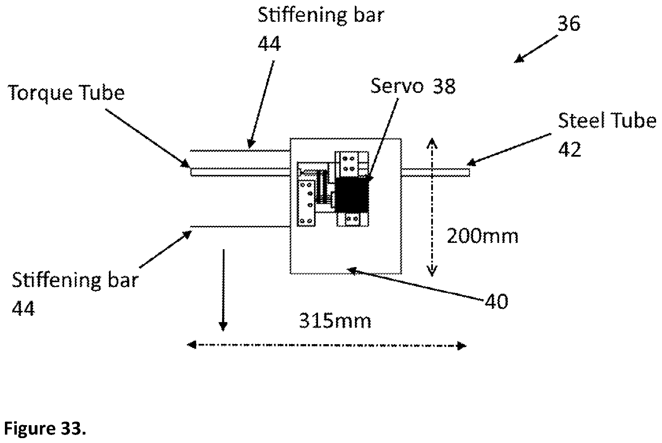

Each morphing wing section 14 has an associated control unit 36. The control unit 36 for a morphing wing section 14 can be seen clearly in Figure 33. The control unit 36 is in this embodiment provided in the fixed wing section 12. However, it can be provided elsewhere, for example in the fuselage.

As can be seen from Figure 33, in this embodiment the control unit 36 includes a servo mechanism 38, along with associated electronics supported on a circuit board or other substrate 40. The servo mechanism 38 is configured to rotate the control rod 42 of the associated morphing wing section 14 in order to provide appropriate twist to the morphing wing section 14 as described in more detail below. The precise arrangement for controlling the control unit 36 to adjust the rotation of the control rod 42 is within the abilities of the skilled person.

The stiffening rods 44 can be securely coupled to the respective control unit 36, for example to the substrate 40 thereof, as shown in Figure 33. However, they do not need to be coupled to the control unit, but are preferably coupled and in some embodiments secured to a section of the aircraft that is fixed with respect to a non-actuating state of the control unit 36, that is not designed to be twisted by the control unit 36, for example in the fixed wing section 12. In some embodiments the coupling of the stiffening rods to the fixed section of the aircraft allows some movement of the stiffening rods in the longitudinal direction of the stiffening rods, for example to allow for a resilient assembly as described below, but movement orthogonal to the longitudinal direction of the stiffening rods is preferably inhibited. This is so that they are caused to bend by rotation of the end element 46.

When the control rod is in a non-actuated state, in which it is not providing rotation to any of the ribs 20, the ribs are held by the control rod and stiffening rods so as to provide a continuous surface which is flush with the surface of the fixed wing section 12.

When the control unit 36 is operated so as to actuate the control rod 42, the control rod causes rotation of the end element 46, causing the angle of the chord line at the end element 46 with respect to the chord line at the fixed wing section 12 to change.

In the actuated state the servos also provide rigidity to the structure.

The rotation of the end element 46 causes bending of the stiffening rods which is resisted by the stiffness of the stiffening rods owing to their being coupled in this example to the control unit 36. The displacement of the stiffening rods from their unbent configuration is greatest adjacent to the end element 46 and smallest adjacent to the fixed wing section 12. The bending of the stiffness rods causes the ribs to rotate owing to the separation of the stiffness rods from the axis of rotation of the ribs. Similarly to the degree of displacement of the stiffness rods, the ribs 20 close to the end element 46 rotate to a larger extent, though not quite as extensively as the end element 46. In addition, all the ribs between the end element 46 and the fixed wing section 12 rotate but to a diminishing extent towards the fixed wing section 12. The ribs therefore align in a very smooth manner causing a very gradual change, or twist, in wing configuration from the fixed wing section 12 to the end element 46.

Typically, when the wing twists, there is an axial load on the stiffening rods due to the very small increase in length required when twisting. In some embodiments, during assembly, the end element and ribs are compressed before the stiffening rods are coupled or secured to the assembly. In this way, the ribs and end element collectively act like a spring when twisted, and maintain a smooth, gap-free surface.

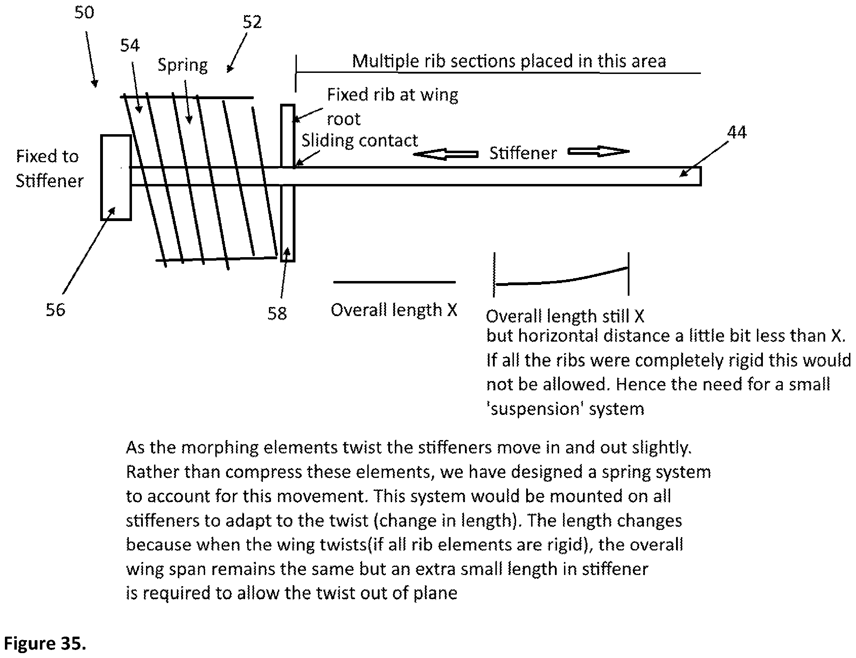

Details of another embodiment are shown in Figure 35. In this embodiment, at an end 50 of each stiffening rod 44 there is provided a suspension arrangement or resilient assembly 52. In this embodiment, the suspension arrangement or resilient assembly 52 includes a resilient element such as a spring 54 coupled between the stiffening rod 44 and the fixed wing section. In this embodiment, the spring 54 is disposed between and configured to press against a first flange 56 fixed with respect to the stiffening rod 44 and a second flange 58 fixed with respect to the fixed wing section. In this embodiment, the second flange 58 is provided by a fixed rib at the wing root. This provides a system whereby the stiffening rods are connected to springs that automatically take up the slack of the extension as the wing twists. However, it is not excluded that the suspension arrangement or resilient assembly could be provided at the end element instead of or as well as at the fixed wing section.

It is to be noted that for a large wing, the rib thickness can be larger without large drag increases. With regard to the internal distribution, size, and material of the stiffening rods, the bigger they are and the more in number makes the structure less/more stiff. They also provide the means to align all the ribs precisely to maintain a smooth overall surface.

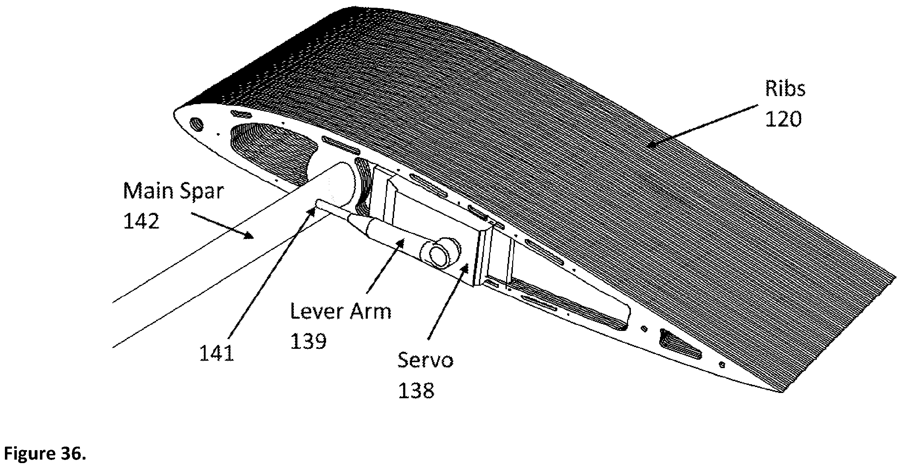

Another embodiment of the invention is shown in Figure 36. Except as otherwise described, the embodiment of Figure 36 can include features as described for other embodiments.

Figure 36 shows a part of a morphing wing section in which a number of the ribs have been removed in order to show clearly the actuation mechanism. In addition, the stiffening rods are not shown in Figure 36, although these can be generally similar to those described elsewhere in this description.

In place of the control rod of other embodiments, the embodiment of Figure 36 includes a main spar 142. The main spar 142 extends as per the control rod described above, and the ribs may rotate about the axis of the main spar 142, but in this embodiment the main spar is not designed to be rotated. Similar to the embodiments above, each rib may be rotatable in a plane perpendicular to the axis of the main spar. However, in other embodiments, each rib may be rotatable in a plane that is at a non-perpendicular angle to the axis of the main spar. One end of the main spar 142 may be secured to a reference element which is fixed with respect to a non-actuated configuration of the morphing wing section. The reference element may be for example the fuselage of an aeroplane, a fixed wing section, or a control unit. The other end of the main spar 142 may be secured to an end element 46 such as described above. However, this is not necessary in the embodiment of Figure 36.

In the embodiment of Figure 36, there are provided a plurality of actuators 138 distributed along the span-wise length of the morphing wing section. Each of these actuators 138 can enact local twist deformation, as described below. The actuators 138 can be operated to work together to twist more of the wing section in the same twist direction, or work against each other to produce localised regions of positive and negative twist in close proximity to each other. This enables the embodiment to adjust wing twist locally and achieve adaptive wing twist distributions that allow maximum efficiency or wing loadings as required.

In the embodiment of Figure 36, each actuator 138 is in the form of a servomotor. Each servomotor 138 is secured to one or more adjacent ribs 120, referred to as the respective associated rib(s). In this embodiment, each servomotor is rigidly embedded within the respective associated rib(s), in this example by being rigidly secured between the first and second frame members of the respective associated rib(s). Accordingly, movement of the actuator 138 causes movement of the respective associated rib(s).

Each actuator 138 is connected to the main spar 142 via a respective lever arm 139. Each lever arm 139 is coupled to the main spar 142 at a respective lever arm junction 141. Each lever arm junction 141 provides a pivot position for the respective lever arm 139, which allows the respective lever arm the ability to rotate about the axis of the main spar, as well as to translate in and out of the body of the main spar 142.

Each actuator 138 is operable to rotate the respective associated rib(s) about the main spar 142.

As discussed above, there are provided a plurality of actuators 138 coupled to the main spar 142 and to respective associated ribs along the span-wise direction of the morphing wing section. The actuators 138 are spaced several ribs apart in the span-wise direction.

Each of the actuators 138 is coupled to a common control unit (not shown) in a manner that is within the abilities of the skilled person.

The control unit is operable to operate each of the actuators independently of each other. When actuated, each servomotor 138 imparts a rotation that causes the lever arm 139 to rotate about the pivot position in the main spar 142. The lever arm 139 being effectively anchored by the main spar 142 causes an adjustable and local rotation capability about the axis of the main spar, rotating the respective associated rib(s) about the main spar 142.

In addition, owing to the presence of the stiffening rods 44 discussed above, ribs adjacent to the respective associated rib(s) receive a force urging them to rotate in a similar manner, thereby maintaining a smooth wing surface.

If different servomotors 138 are rotated to different degrees along the span-wise direction of the morphing wing section, the stiffening rods are caused to bend between these different servomotors 138. The bending of the stiffening rods causes ribs between the different servomotors to rotate to different degrees, causing a gradual change in rotation degree for ribs between the different servomotors. This provides a very smooth gradual change or twist in wing configuration between the different servomotors. In this way, wing twist can be adjusted locally to provide adaptive wing twist distributions that allow maximum efficiency of wing loadings as required.

Although some of the above embodiments include a fixed wing section, this is not necessary in all embodiments. The fixed wing section does not need to be fixed with respect to the fuselage. In addition, the components of the fixed wing section can for example be provided in the fuselage itself.

In some embodiments, the morphing element can be over the complete wing span, not only a portion.

Furthermore, the above described embodiment relates to a morphing wing section. However, in other embodiments, the morphing section can also be applied to a winglet of an aircraft, to a helicopter blade, or to a blade of any aerodynamic apparatus, such as a wind turbine. In such embodiments, there would be provided blade sections rather than wing sections, and instead of a fuselage they may be coupled to a blade hub. The blade of a wind turbine is made up of an aerodynamically shaped profile that produces both lift and drag. The blade can be constructed as a plurality of ribs being actuated as described herein. For this example, a section of (or complete) blade can be comprised of many ribs mounted one-after the other along the span of the blade and allowed to slide relative to one-another to enact a change in twist along the blade span. This behaviour would be synonymous with the application for an aircraft's wing.

One embodiment includes multiple ribs with each rib assembled with multiple carbon rods. As is known for morphing concepts challenges such as surface deformation and the strength under aerodynamic load are the main issues. Therefore, these carbon rods are used at the origin of the wing chord to provide stiffness for the structure and to offer an aerodynamically smooth surface finish while allowing the wing twist. The main Carbon tube is also placed at the quarter chord of the model to provide actuator torque. This also provides durability to the wing structure and alignment together with the other morphing elements.

The morphing elements are made of thin wood materials. The thickness size decision was made from initial structural analysis, with the surface smoothness the main consideration to decide the right size for the morphing elements. Following that, the weight of the morphing elements was also reduced to increase twist angle and to reduce friction effects, hence low actuation energy is required to achieve twist. In assembly, significant attentions needed for the interface between the ribs and rods, consequently they were tightly fitted to reduce any wrinkling and separation on the surface. This helps to achieve the similar drag profile relative the baseline fixed wing configurations. In addition, due to wood's rough surface, morphing elements were sanded and lacquered to receive the full benefits of the morphing twist system. A servo actuator is used with a servo-driven mechanism to actuate the twist. To enact twist deformation on the structure, moment (3.43 Nm) was applied to the main carbon tube. This moment was estimated through the torsion equation with desired twist change (minimum ±6°). Although, the friction effects are negligible in this model due to small surface area between each rib and the interface between the ribs and rods, additional torque was also estimated and the servo actuator was chosen based on high torque requirements. To allow the actuator tube to rotate the entire model, an end section was designed and placed at the tip of the structure with rods a fixed. When servo torque is applied to the carbon tube, the end support would enact twist by rotating all morphing elements correspondingly. This co-ordination was controlled by the carbon rods and the end-section.

One of the important benefits of this design is the ability to maintain a skin with a low drag (smooth surface finish) while twist deformation is in action. Moreover, the structure is lightweight and strong to carry aerodynamic loads. Comparing with other mechanisms in literature, this mechanism largely meets all requirements addressed for morphing wing challenges.

Further details of an experimental example are provided below.

A design of an active wing twist with adaptive skin for morphing aircraft control and performance is provided below. The design includes a pair of active morphing elements which was designed to overcome skin problem as well to actively adjust wing twist angle using servo-driven mechanism. Preliminary design and Finite element analysis were carried out in ANSYS Mechanical and CATIA V5. Also, Athena Vortex Lattice (AVL) used as a CFD tool to analyse aerodynamic response of wing twist. Subsequent to numerical study, wind tunnel model was built and tested. To compare the effect of morphing mechanism with full baseline wing was used. Moreover, aileron configurations were also built and tested in the wind tunnel to investigate achieved roll rate. Afterwards, flight testing was performed with an Extra 300 78 inch remote controller aircraft with the results being compared against existing fixed wing configurations. Results presented below show the design does provide evidence for aerodynamic efficiency with smooth surface finish. Furthermore, it gives a good indication for controlling of an aircraft which was validated through flight testing with similar roll authority achieved compared to traditional aileron configuration.

The motivation for this study was to explore novel concepts of active wing concepts for morphing aircraft control and performance. The primary variables investigated involved changing the twist angle with the main aim being to identify degrees of movement both experimentally and numerically. ANSYS Mechanical and Athena Vortex Lattice software packages were used to obtain the numerical results and also for rib (skin) optimization. Principle aim was then to assess and demonstrate the developed concept within both the wind tunnel and flight test environment. This investigation also aimed to develop an alternative approach for a morphing skin.

### Numerical Analysis

As a first step of the adaptive skin development and to ease the manufacturing difficulty, the straight wing was initially considered and created in AVL to provide aerodynamic data for ANSYS FEA tests. Obtained FEA data was used to compare with a wind tunnel model. Following that the analysis tool for the flight testing model mechanism and structural analysis setups are also described. Both adaptive skin and twist system were analysed in ANSYS and data used for comparison.

### Aerodynamic Load Prediction

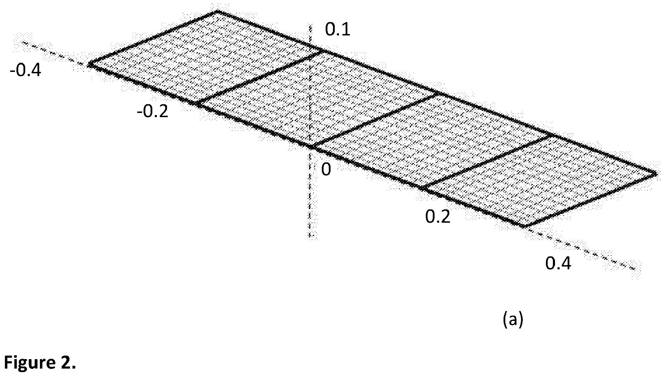

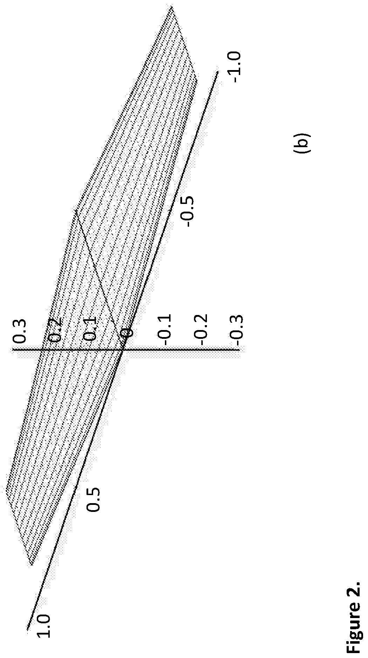

The aerodynamic modelling and numerical computations were carried out using Athena Vortex Lattice (AVL) software. Athena Vortex Lattice is a simulation package that determines the solutions to a linear aerodynamic flow model. For all simulations, modelling was performed from a set of wing panels along the wing span and chord axes (computational model of wing/winglet structure is shown in Figure 2). Each surface panel was assigned as a single horse-shoe vortex with velocities induced by each vortex evaluated at certain control points using the "Biot-Savart law". Forces and moments were obtained from the solved load distribution by applying the "Kutta-Joukowski Theorem" (Saffman, 1992). For all simulations, the free-stream velocity was set to 30 m/s and 40m/s and all results were calculated without the influence of compressibility. In order to be computationally efficient, a grid refinement study was performed on the baseline configuration prior to widespread use of the developed model.

### Finite Element Model Analysis

The Finite Element Modelling (FEM) was carried out using ANSYS Mechanical and CATIA V5 software packages. The wing structure was modelled in CATIA V5 design software and then imported to the ANSYS software structurally and, together with AVL results, investigate further the aerodynamic and structural relationship. The FEM structural model of the wing was also used to assess magnitude of the wing-twist deformation magnitudes for the concept. In order to achieve this, external AVL of aerodynamic loads were applied to this morphing concept. **Table 1** shows the material properties of the wing components. Laser ply (for wind tunnel model) and Balsa (for flight test prototype) were used for ribs, and carbon materials were used for rods and tube to provide strength of the model. To provide twist movement, end-bit part was manufactured which was made of Raku-Tool WB-1700 (for wind tunnel model) and P400 ABS Plastic (for flight test prototype).

**Table 1. Summary of Material Properties**

| Materials | Tensile Strength, MPa |
|---|---|
| Raku-Tool WB-1700 | 85.00 |
| Laser Plywood Sheets | 70.93 |
| Balsa Wood | 30.00 |
| P400 ABS Plastic | 56.58 |
| Carbon Fibre | 600.00 |

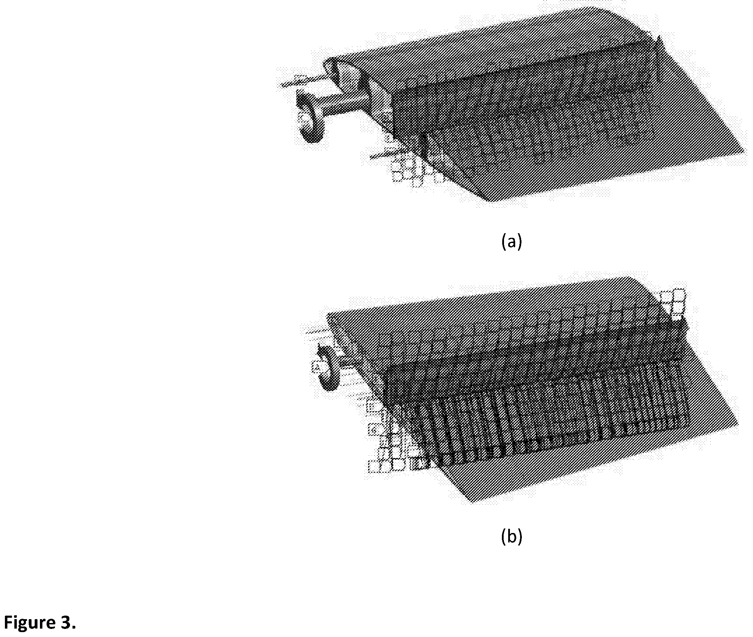

Once the geometry and the materials had been applied, the assembled ribs began to constraint. Figure 3 depicts the boundary conditions applied to the winglet model. For each rib, sliding contact (no separation) properties were used to achieve the twist movements. In these contact properties, separation of the geometries in the contact is not allowed, but small amounts of frictionless sliding can occur along the contact geometries. Also, each rib was connected to the rods via the sliding contact, which provided free rotation during deformation. All three carbon rods were connected to the end section with bonded constraints, which enabled rotation of the end section and subsequent rib twist. In total 960 and 4731 connections were used for wind tunnel model and flight test prototype respectively. To achieve twist deformation on the structure, 3.43 Nm torque was applied to the main carbon tube. Aerodynamic load was also applied to each rib from segmented data obtained from AVL (40N(aerodynamic load) and 3Nm(pitching moment) for wind tunnel model and 80N(aerodynamic load) and 5Nm(pitching moment) for flight test prototype). After setting up the components and constraints, the next task was to apply mesh to the structure.

### Experimental Setup and Apparatus

The experimental testing was carried out at Brunel University, in a 0.46m x 0.46m open circuit low speed wind tunnel, giving a maximum operating free stream velocity of 40 m/s. Three different configurations were used with fixed baseline wing, morphing wing, and wing with an aileron components. For flight testing, the flying site used for this study was Playing Fields. The In total 4 circuits were completed. Two of them were with a fixed wing configuration and the other two were with the morphing configuration. Flight data were recorded for each circuit and then analysed to investigate flight performance.

### Morphing Wing Geometry and Twist Mechanism

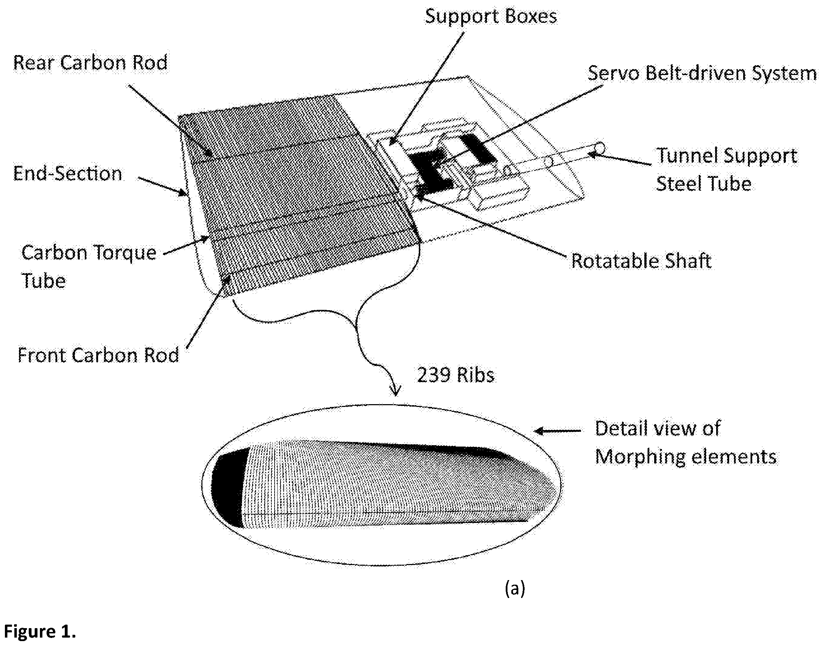

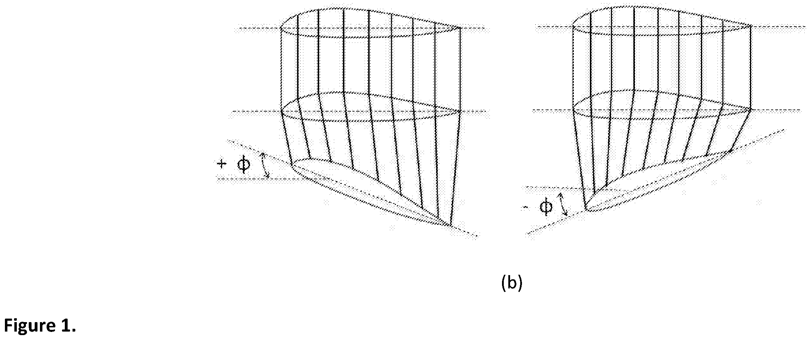

The model choosing for this twist demonstration study and its twist parameters are shown in Figure 1. As can be seen that rectangular wing has been initially investigated due to ease implementation compared to sweep wing geometries. The baseline wing configuration (without morphing) comprised a 12% thick, Zagi airfoil section, no leading edge sweep angle, a 0.330m half wing span, a 0.2m root chord, a 0.2m tip chord, with aspect and tip ratios of 1.65 and 1 respectively. The morphing part had a 0.2m winglet tip chord, and a span of 0.15m.

The morphing actuation mechanism was critical for the concept to work adequately. It is also had to be integrated into the model seamlessly to minimise drag. Once the mechanism is working, the vibration should be minimal in order to achieve accurate system performance. To accommodate this system, a part of the bottom section of the wing was removed and an internal mechanism installed inside the wing. Some support parts were used to provide adequate housing support for the mechanism as is shown in Figure 1. The Carbon Fibre Torsion Tube was fixed to the main wing before installing the mechanism. On the other side of the carbon tube, an end support was fitted.

The morphing mechanism was placed inside the wing profile. The twist mechanism encompassed one Hitec HS-7950 TH high voltage torque servo, which was a titanium gear coreless servo. It is rated at 3.43 N-m torque at 7.4 Volts, and was retrofitted with a belt drive system operating with a 1:1 gear ratio to rotate the shaft, which was positioned at the quarter chord of the overall wing. When the servo torque was applied to this shaft to end-support would enact twist. A belt tensioning system was also set up inside the wing profile to allow belt tension adjustment. The system consisted of the ABS plastic boxes, which were glued to the bottom side of the wing and the top side of the system was free to slide and tension the belt. On this top surface, a bearing was used with a servo shaft connected to provide alignment and support structural bending. Once the belt system was tensioned, the top surface (plate) was screwed to the bottom side to maintain the aerodynamic shape. Space was also left inside the wing section for the servo cable to exit the wind tunnel support and connect to the driving electronics. Additionally, in order to reduce vibration, additional support boxes were also fastened and glued to the inside of the wing profile to further support the servo as well as the gears.

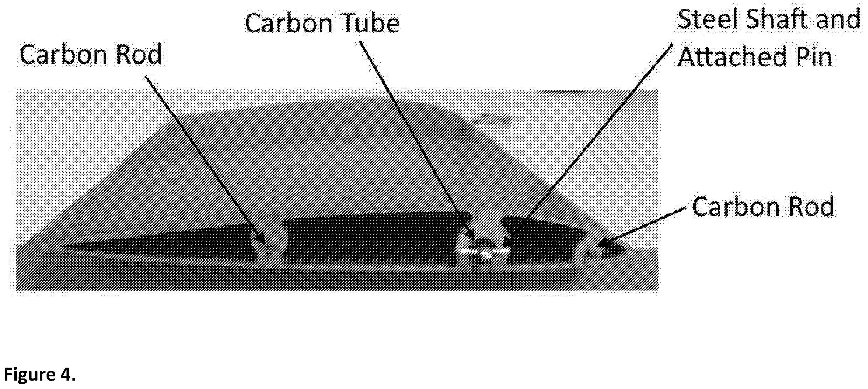

For the morphing section each of the 239 ribs were made from 0.6mm thick laser plywood sheet. For the combined morphing structure, CAD designs were imported into ANSYS to analyse structural performance to ensure it could withstand the required aerodynamic loads. Several rib designs and configurations were tested. After these exploratory investigations (mentioned in result section), it was decided that 2 carbon rods and one carbon tube would provide satisfactory stiffness to the concept. These lightweight and strong carbon fibre rods were both glued and screwed to the main wing. The torsion tube, which was a 10 mm diameter pultruded carbon fibre tube, was also glued to the wing. The parts were then assembled and the end-section was mounted and screwed with nuts and grub screws. Cavities were filled and sanded to create an aerodynamically smooth surface finish. After assembly, the top and bottom sections of the rib surfaces were also sanded in situ to ensure a smooth, aerodynamically clear surface. The completed wing internal mechanism is indicated in Figure 4.

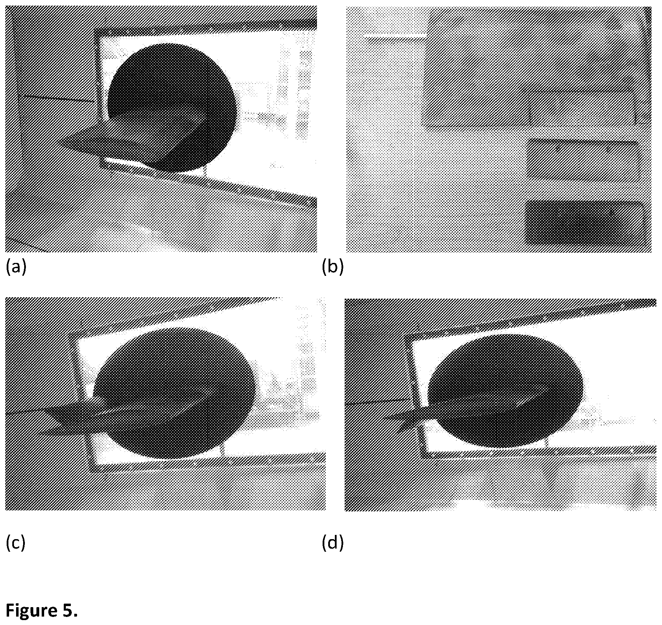

To attach the wing model to the wind tunnel, a 10mm diameter steel tube were also fastened and glued with epoxy resin at the quarter chord point of the wing model. The servo motor cable was then passed from the steel tube and pulled out from the holes created for this purpose on the steel tube. An aluminium cover was also designed to enclose the top of the mechanism. To reduce any undue aerodynamic flow behaviour, the exposed part of the cover was trimmed and sanded back to the main wing surface creating an aerodynamic smooth surface finish. To compare the results of morphing concept, a full wing baselined-fixed was separately manufactured (shown in Figure 5(a). Similar to the other configuration, the wing was made of Raku Tool WB-1700 with an identical span of 0.315m.

In order to make a direct comparison and further validate the morphing concept and a traditional aileron system for roll control, six different ailerons (±10°, ±20° and ±30°) was designed and manufactured (as shown in (b)), and then tested in a wind tunnel (as shown in Figure5(c) and Figure 5(d)). These angular ranges here were selected based on recommendations (Wenzinger, 1935; Shortal et al., 1937) of conventional aircraft ailerons. The aileron was also placed outboard of the trailing edge of the wing with a size chosen at 50mm chord length (0.25% wing chord), and a span of 145 mm. The decision was made based on the standard aileron system (Sandraey, 2012) as well as the calculated twisted wing roll rate (Esdu, 1988). Each aileron was made from a combination of 6mm thick elements in a combined linear array. The final model is shown in Figure 5. This configuration was CNC machined encompassing the aileron with the required space for the aileron removed. To provide an aerodynamic finish, the surface was sanded and coated with black paint. Two locating screws were used to fix the aileron to the wing structure. The screw holes were then filled with putty and sanded smooth. Similar manufacturing procedures were used to construct the other ailerons. In total, 3 different aileron angles were produced with each one providing both a negative and positive test case (a total of 6 configurations). Additionally, the gap between the aileron and the wing structure was sealed to minimise any flow discontinuities (Abbott, 1959).

### Flight Test Model

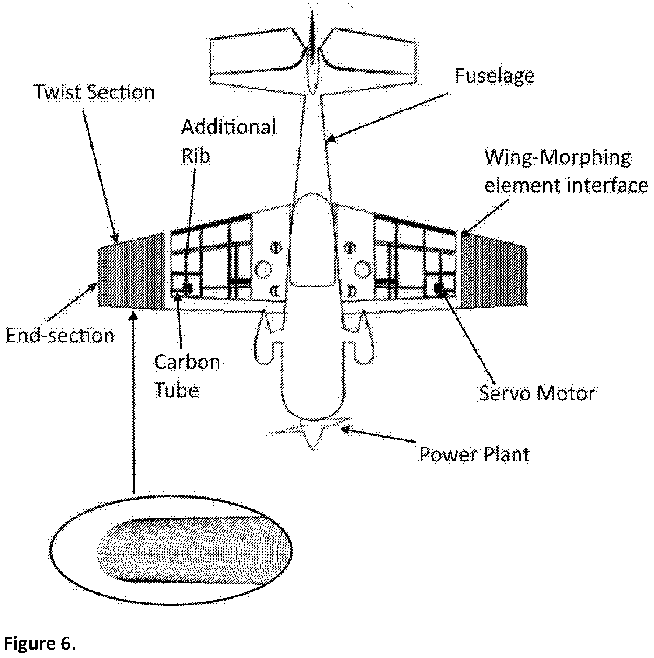

The model chosen for this study was an Extreme flight Extra 300 with a 78-inch wingspan. The baseline wing configuration comprised a symmetrical airfoil section and a 2.5° leading edge sweep angle, a 1.980m wing span, a 0.5m root chord, and a 0.27m tip chord, with aspect and tip ratios of 5.45 and 0.54 respectively. The fuselage part was 1.930m long and the maximum thickness was 0.215m. In this study two wing sets (left and right wing) were used (the schematic view of the plane is shown in Figure 6). The wings had a fixed configuration with a full aileron section. It was decided to make the twistable wing sections 0.3m long according to initial morphing applications (Houghton, 2003).

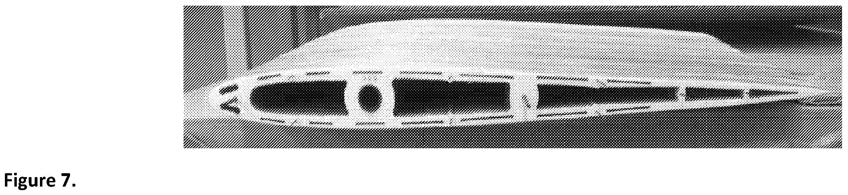

For the twist mechanism, due to the weight requirements for an actual flight environment, balsa wood sheets were used as the main material for the ribs and the inside of the rib sections. The number of stiffening rods selected was based on the achievable twist displacement. The final model consists of 365 balsa wood ribs, which were cut using a Laser Cutter machine. The active wing model also had eight small carbon rods (each with a 0.5mm diameter) that were distributed along the wing span. These rods produced an aerodynamic smooth surface while morphing as well as making the structure able to resist aerodynamic load. Additionally, two 1.5mm diameter carbon rods were used at the origin of the wing chord. These also aimed to provide durability to the wing structure. Furthermore, the main carbon tube (10mm outer-diameter) was used to align the ribs as well as to accommodate the internal shaft to rotate the end-section. The internal mechanism is also shown in Figure 7.

Additional parts were needed to increase the strength of the edge of the fixed wing structure. Therefore 15mm ribs consisting of 1 piece of plywood (6mm thick) and 3 pieces of balsa wood (3mm thick) were glued to the end of the wing structure. Additionally, a carbon tube was used to increase the strength of the wing tip for both wings. This was important due to the morphing element creating additional load when the twist was rotated. The carbon rod tube was then glued to the main wing with the ribs able to rotate with the twist action.

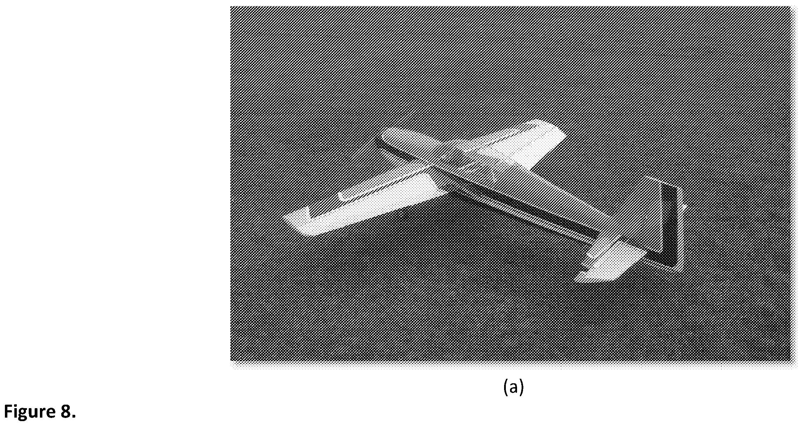

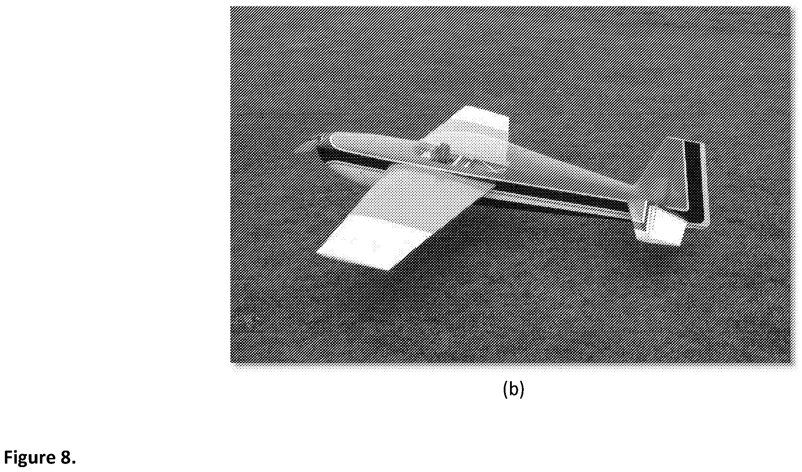

The actuator mechanism for the twist movement consisted of a Hitec HS-7950 TH high voltage torque servo (which is a titanium gear coreless servo, 3.43 N-m maximum Torque at 7.4 Volt), a steel shaft, an attachment pin, bearings, a washer, nuts, and the ABS plastic made end-section. The steel shaft was positioned at the quarter chord of the wing over the span of the structure. The manufactured servo coupling held the connection between the servo motor and the steel shaft. The other side of the steel rod was connected to the end-section using a fitted attachment pin as well as additional nuts. Activating the servo rotated the end-section where all of the interconnection carbon rods were bonded. To align the steel rod with a carbon tube and to reduce any misalignment inside the carbon tube, four bearings were positioned and fixed to the steel rod. A 3mm plywood cut and was also glued to the required position inside the wing to support the servo (Figure 6). The inside of the end section was also carefully removed. The surface needed to be as smooth as possible, because discontinues on the surface have a negative effect on the aircraft's performance. To prevent any undue aerodynamic flow behaviour, the complete morphing elements were sanded. The final model is shown in Figure 8.
After installing all servo mechanisms, shafts and electrical connections, baseline and morphing concept were compared to investigate any differences between these two wing configurations and the baseline wing was found to be lighter (54 gram less) than the morphing wing.

A Futaba R617FS 2.4 GHz FASST 7-Channel receiver was used as the main controlling device. Servo cables, which provide wing twist, pitch, yaw and thrust, were connected to the receiver. These control surfaces were controlled by the transmitter (Futuba T10CG 2.4GHz 10-Channel T-FHSS radio system). An Eagle Tree data flight recorder was used with a Seagull wireless data transmitter that used a static pressure / pitot tube/ transducer combination for flight speed and pressure altitude, a magnetic RPM sensor for motor RPM, a thermocouple for temperature and a two axis accelerometer for g-forces in the rolling axis. Note that the G-force device was positioned on the plane's cg. The Eagle tree recorder also recorded the servo positions and control inputs from the radio. Data were recorded at 10 Hz and saved on an on-board computer. Velocity, altitude and signal strength were continuously transmitted to a ground station. The data recorder utilises a USB cord to communicate with the Eagletree software loaded on a laptop computer. RC Logger Video Telemetry and Orientation G-Force Module was also used to measure pitch angle, roll angle, direction, linear acceleration, angular position, and velocity during flight.

### The Wind Tunnel Measurement Environment

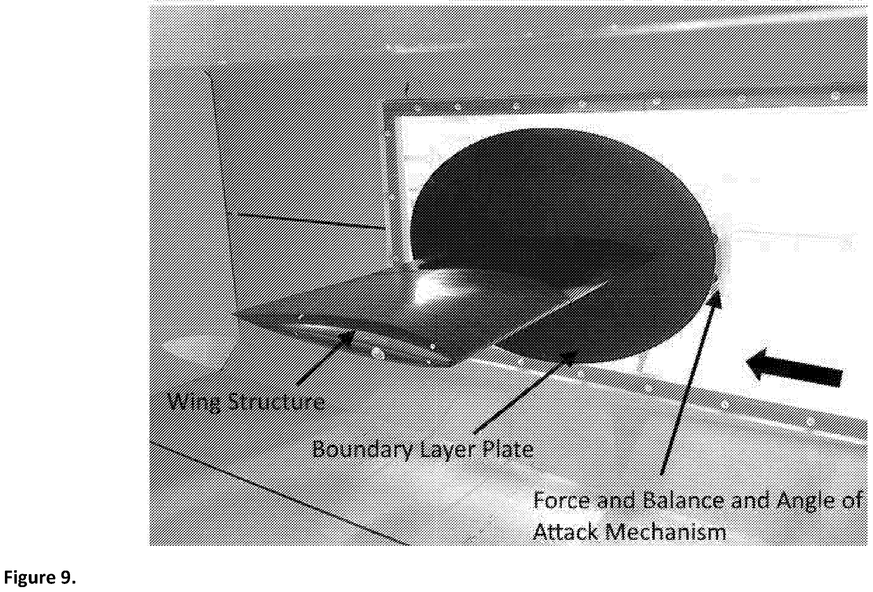

The models as shown in Figure 9, was installed in the middle of the test section. To reduce boundary layer wall effects, an end plate was used (0.37m x 0.25m) according to the results of (Barlow et al., 1999). The boundary layer plate was installed 0.025m off the tunnel wall using adjustable threaded rods. The wing model was also placed 0.001m off the plate to allow free movement in accordance with Mueller et al. (Mueller, 1982). They showed that the gap size needs to be around 0.5% of the span to not have any interference on the results. Also, to reduce any flow interference between the support rod with the plate and the tunnel wall, an airfoil shaped fairing was manufactured and glued with epoxy resin.

The force and moment balance used to measure the performance of the wind tunnel models was an AMTI MC3A-500. To support the load cell on the wind tunnel, an aluminium balance support frame was manufactured and fixed to the tunnel wall. A spirit level and inclinometer were used to ensure that the load cell was level. The model support sting was then mounted to the active plate of the AMTI MC3A-500. To prevent any contact between the support sting and the tunnel wall, a clearance hole was cut out of the tunnel lid. A symmetrical airfoil shaped fairing was manufactured and bonded to the boundary layer. Calibration of the load cell was completed before testing and derivation was found to be less the ±2.5% of full scale output. Force and balance data was measured before each section to compensate of the final test results. No any wind tunnel blockage corrections and artificial mechanism were used.

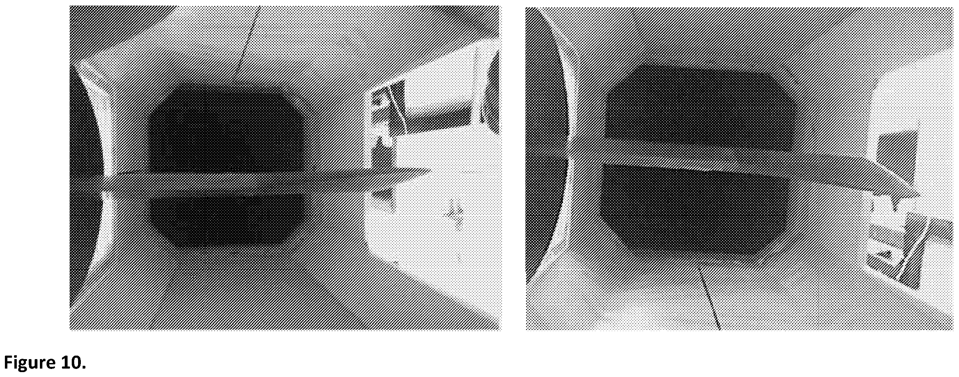

A Futaba R617FS 2.4GHz FASST 7-Channel receiver and Futuba T10CG 2.4GHz 10-Channel T-FHSS radio system (transmitter) were used to control the servo motor of the morphing wing. The Hitec Servo within the model was connected to the receiver and a 6V NiMh battery was utilised as the power source. The model would twist φ= ±6° (Figure 10).

To adjust the angle of attack of the wing configurations, a manual rotation stage was designed and attached to a support bar. This manual rotation stage was also mounted directly onto the force and moment balance, which was connected to the support frame fixed to the outside test-section wall. Using additional bolts, the wing support sting could be adjusted in accordance with the oncoming flow. A digital inclinometer was used to calibrate the angle of attack mechanism (position error ±0.5°). To obtain turbulence intensity, a Streamline CTA Module signal conditioners A/D boar NI e-series, miniature X wire Probe (Dantec 55P61) was used with a 55H24 probe support bar and an A1863 cable. The hot-wire voltage output was measured and averaged with the Stream Wire software. The nominal flow speed was chosen for this study V= 30m/s and V= 40m/s (±0.25 m/s), and turbulent intensity level was measured 0.35%.

### Results and Discussion

The results were divided into three sections. First is the Finite Element Analysis (FEA) of the wing twist structures. Following that, wind tunnel results including aerodynamic force and moment results are discussed, as are comparisons to a traditional wing-aileron system to ascertain any performance enhancements. Final section shows the flight test results with comparing fixed baseline aileron configuration and morphing element.

### Experimental and Numerical Analysis of Wind Tunnel Model

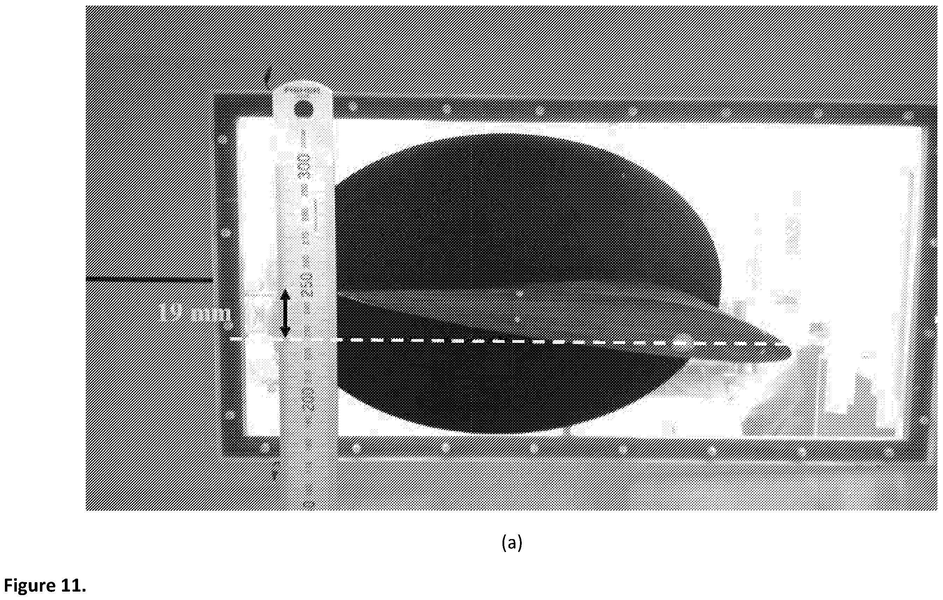

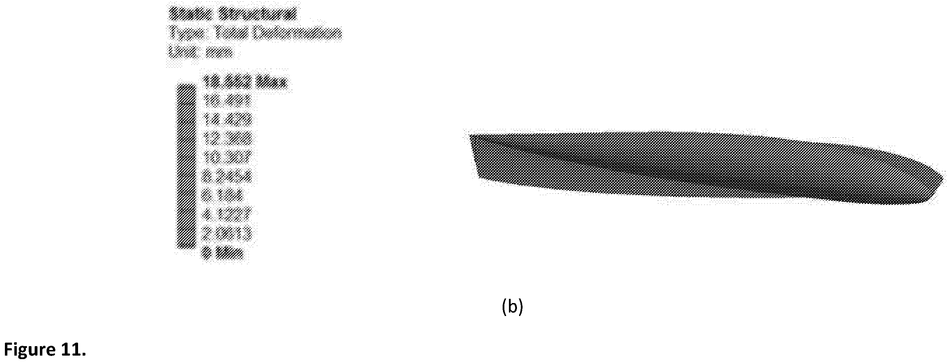

The results taken from ANSYS for the FEA model was compared directly to results from the experimental model under no-wind condition (shown in Figure 11(a) and Figure 11(b)). It can be seen from Figure 11 that there is good agreement between the numerical and experimental model for wash-out (negative twist) deflection (negative twist) with maximum tip deflection was found to be 19mm compared to 18.552mm in from ANSYS.

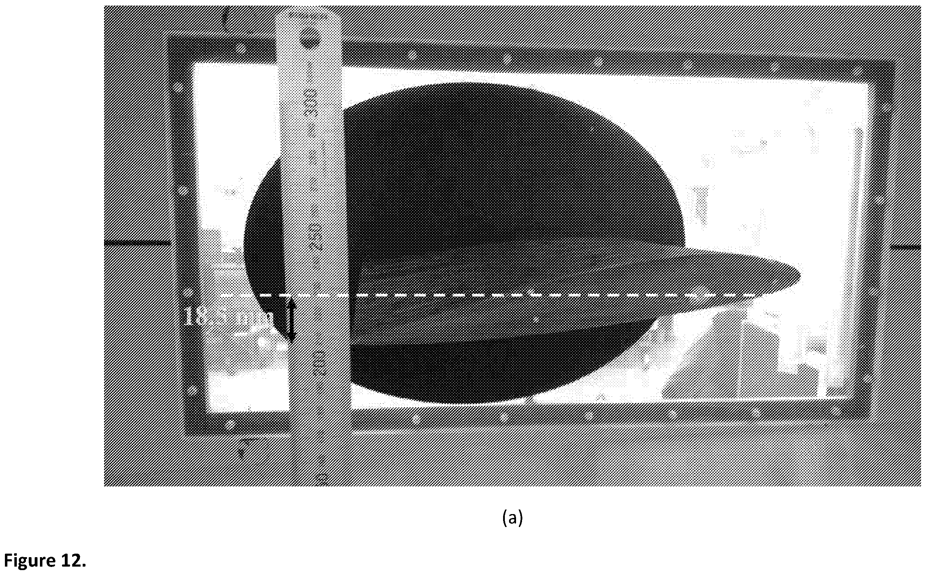

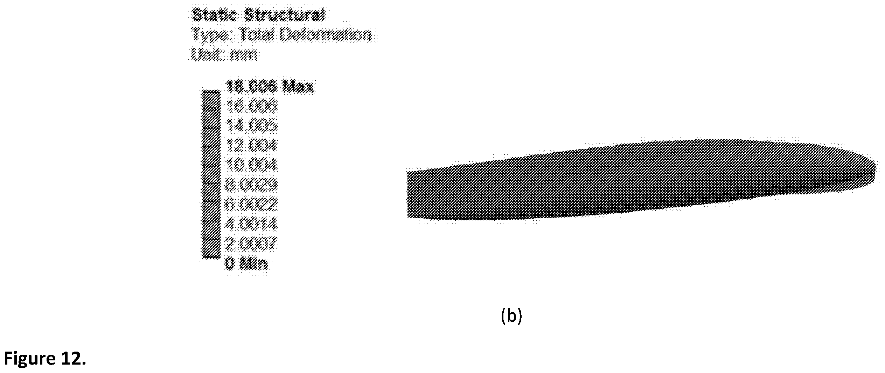

With wash-in (positive twist) deflection (Figure 12), the comparisons between the computational and experimental model gave differences of approximately 0.5mm. A maximum 18.5mm deflection was measured at the tip with the numerical model giving 18.006mm. A few differences could be due to un-modelled friction factors between the components.

### Comparison between the Morphing Concept and Baseline Fixed Wing

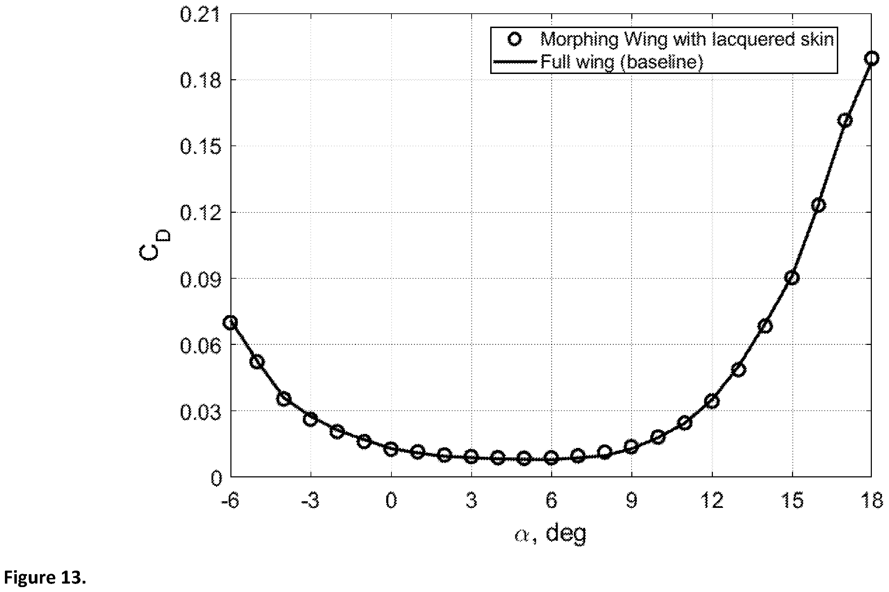

As is well known concepts of aerodynamic, drag coefficient results plays significant role to obtain the aerodynamic performance of the aircraft. To illustrate the effects of morphing wing, initial test were conducted and compared to the baseline fixed wing. The drag coefficient results versus angle of attack for the morphing concept and the baseline fixed wing is shown in Figure 13. It can be seen that the model (morphing wing) provided drag coefficients that were extremely close to that observed for full wing, fixed baseline model in all range of angle of attacks. This actually implies that the proposed design does not have any detrimental effects in aerodynamic.

### Static Forces and Moments

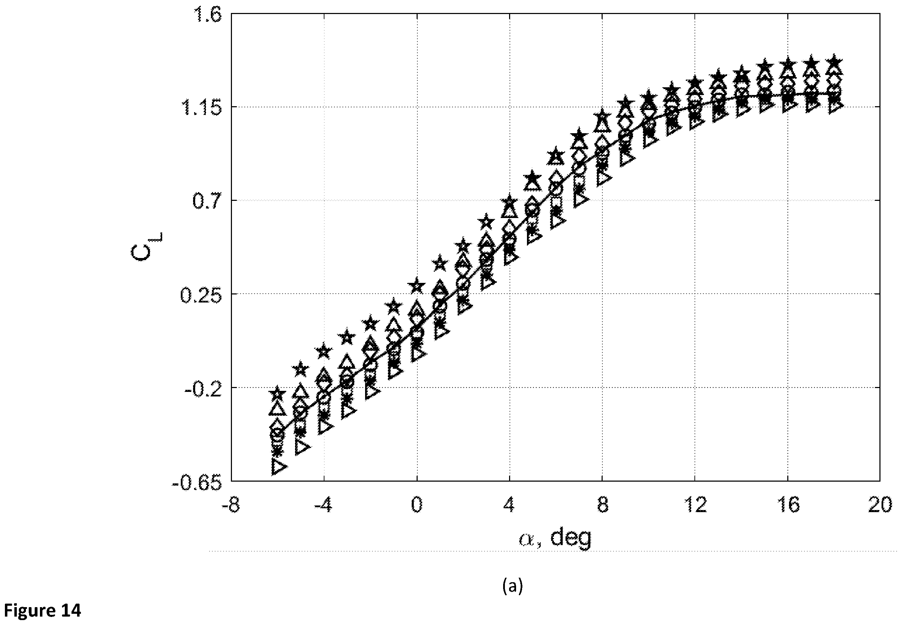

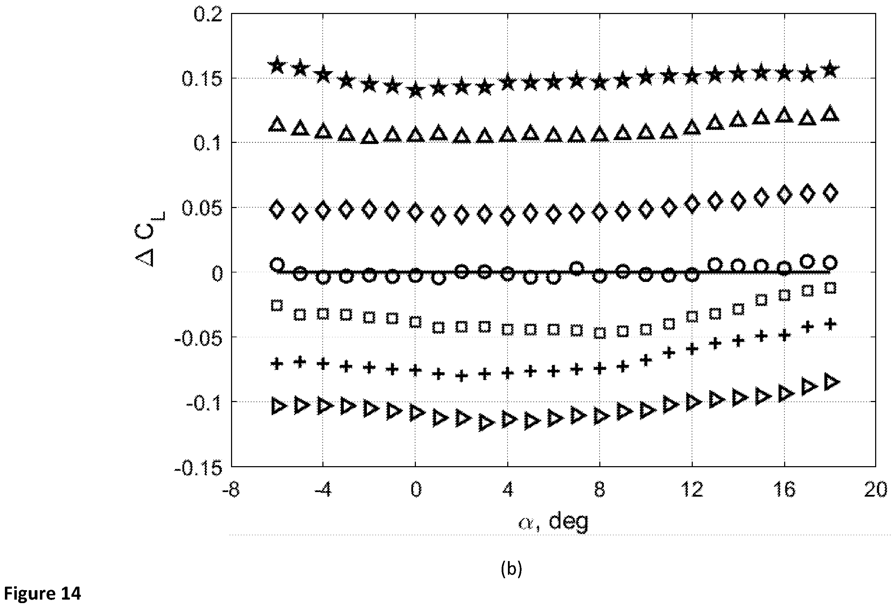

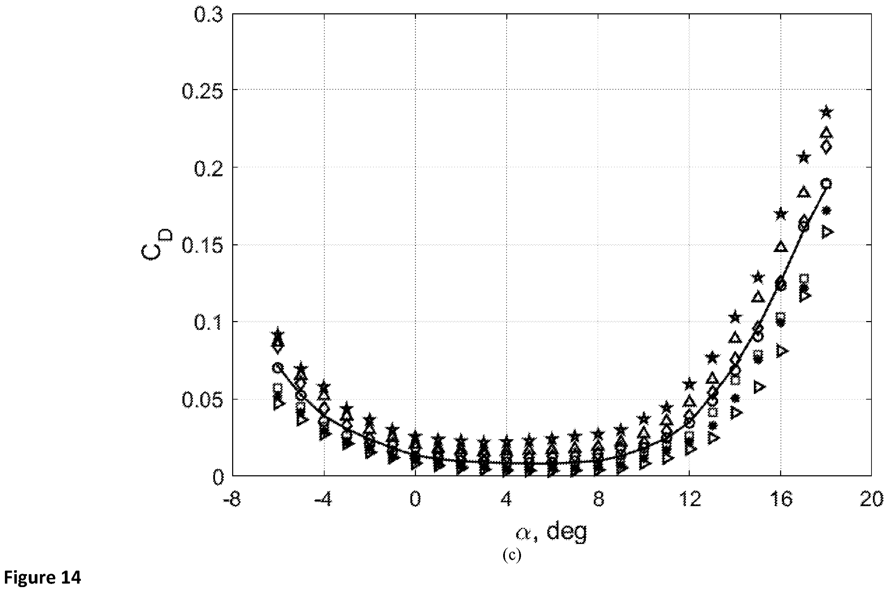

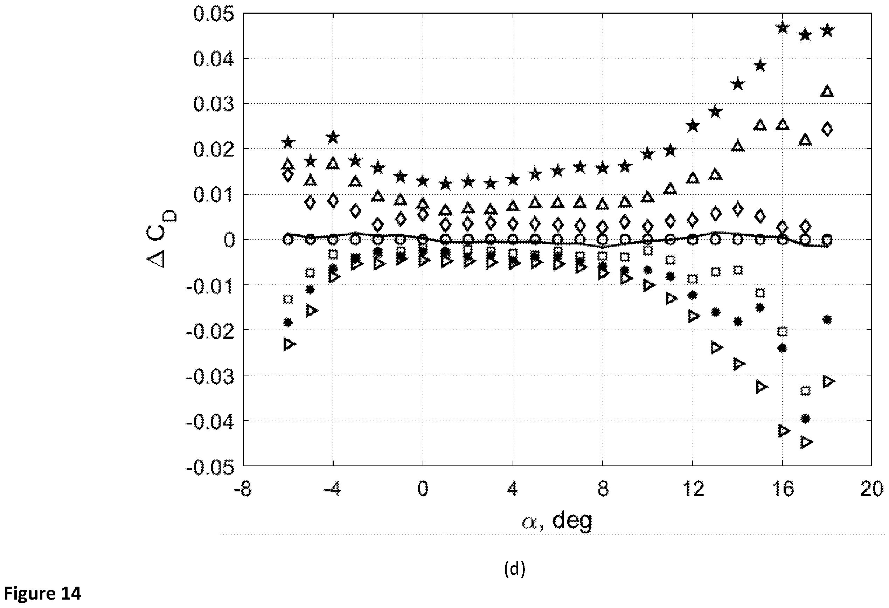

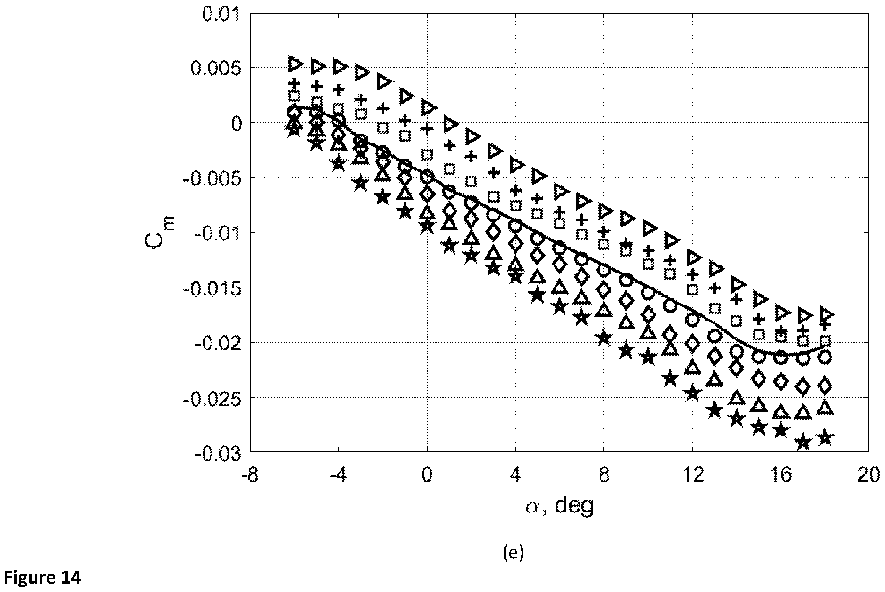

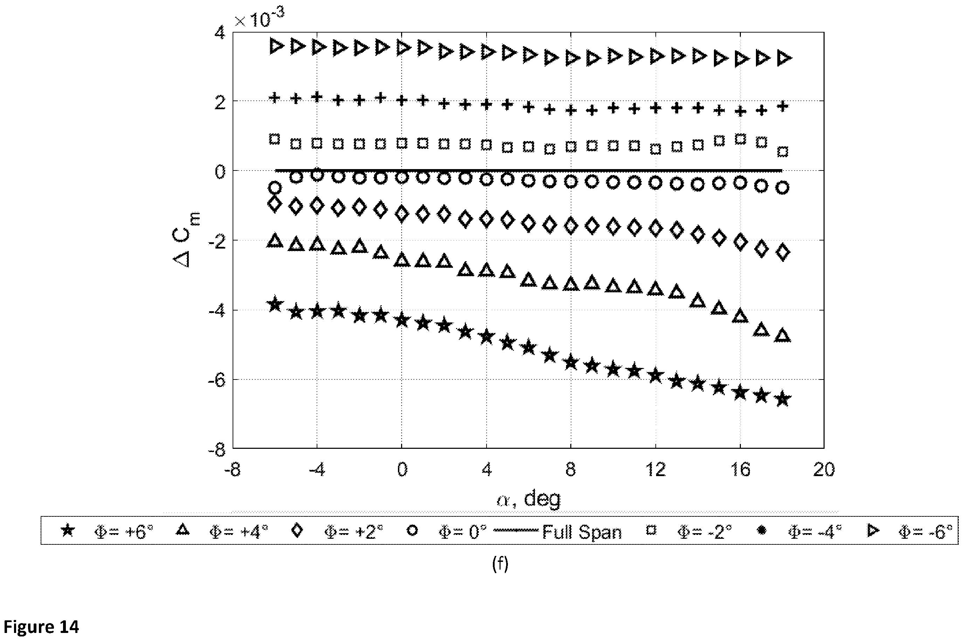

The static force and moment results produced through wing twist between -6° <*φ* < 6° versus angle of attack are shown from Figure 14 to. The first aerodynamic measurement on the morphing concept was conducted to understand the effects of the sliced ribs mechanism on static force and moment coefficients compared to a full span (baseline) wing model. In general, results show adequately the trends with varying angle of attack and are consistent with well-known wing aerodynamics (Abbott, 1959). The results for different twist configurations also show significant aerodynamic benefits in terms of efficiency and control compare to the baseline model.

Figure 14(a) shows lift coefficient results for various twist configurations. It can be seen that increasing the twist angle to 6° tends to increase lift in agreement with (Smith et al., 2014, Kaygan, 2014,2015) and, also as would be expected, the lift curve slope increases with angle of attack increases to maximum (maximum Δ*C_{L}* = 0.23 (13%) compare to un-twisted wing configuration at α=18°). Conversely, reductions are seen as twist angle decreases to φ =4° and φ =2° with maximum Δ*C_{L}* being 0.146 and 0.091 respectively. When negative twist configurations are considered, lift coefficient results were reduced further. When the twist angle varied to φ = -6°, a maximum reduction of Δ*C_{L}*= -0.145 was found compared to the untwisted configuration (around 15.4% less compared to φ = 6°). This would be expected due to both net reductions in effective angle of attack as the wingtip moves out of the wing plane and contribution to overall lift production reduces (Philips, 2004a). Similar results were found in (Smith et al., 2014) where experimental results present greater *C_{L}* for higher positive twist angles. Direct comparison between the morphing concept and the full-span baseline wing are also illustrated in Figure 14(a) and (b). Similar trends are shown with a maximum Δ*C_{L}*= 0.022 at maximum angle of attack (α=18°).

Considering further with increasing angle of attack, overall drag increases can also be seen (Figure 14(c) and (d)). The experiments show this drag increase to be more effective at φ = 6° (Δ*C_{D}* = 0.049 (20.6% higher than φ = 0°, at α=18°). When φ = 4° and φ = 2° are considered, the results still show reasonable drag increases in contrast to φ = 0° with a maximum increase at α = 18° with Δ*C_{D}* = 0.031 (16.4%) and Δ*C_{D}* = 0.025 (11.1%) for φ = 4° and φ = 2° respectively. On the other hand, the influence of negative twist angle on drag reduction was found to be significant with maximum Δ*C_{D}* = -0.031(19.6% at α=12°) when wing twist varied from φ =0° to φ= -6°. As reducing the twist angle to φ = -4° and φ = -2°, drag reduction was also decreased, but still less drag increase compare to φ = 0° with 9.88% and 1.37% respectively. This result gives some indication of the influence of large twist angles out of the wing plane on overall performance. This does however, seem to be some exceptions to this finding, particularly for 0° < α > 5° where the results seem to be relatively low due to a lower increase in angle of attack. Due to increased sensitivity to the onset tip flow separation on wing after α=12°, a dramatic drag increase was seen in most of the twist cases presented. A similar trend was observed both computationally and experimentally (Smith et al., 2014) where there is a link between a reduction in *C_{D}* with negative twist variation to a maximum. Moreover, the un-twisted configuration of the morphing concept and full span baseline wing cases show very similar drag level trends (maximum Δ*C_{D}* = 0.001 at α = 18°) implying adequate simulate between these two configurations under these conditions.

Figure 14(e) and (f) illustrates the pitching moment coefficient results for various wing configurations. It can be clearly seen that nose down pitching moments are the predominant action on the wing twist change. This was expected due to the use of the reflexed trailing edge of the 12% Zagi airfoil. It can also be seen from plot *Cₘ* (Figure 14(e)), at φ = -6° that the pitching moment is positive (α < 0°) signifying the effectiveness of the trailing edge at producing stabilising nose-up moments with increasing the angle of attack, a maximum negative pitching moment was observed. In general, trends between the twist cases are very similar. At φ = +6°, results showed that the aerodynamic centre translation aft is much more than other cases presented with a maximum difference of Δ*Cₘ* = -0.0067. Reducing the twist angle to φ = -6°, pitching moment coefficient still shows the trend as seen in φ = +6°, representing a 40% decrease compared to φ = 0° (Δ*Cₘ* = 0.0037).

Further comparisons between the full span baseline wing and the φ = 0° twist configurations are shown in Figure 14(f). It can be clearly seen that there is strong evidence that both cases perform the same for most aerodynamic metrics (maximum Δ*Cₘ* = 0.001 at α = 11°).

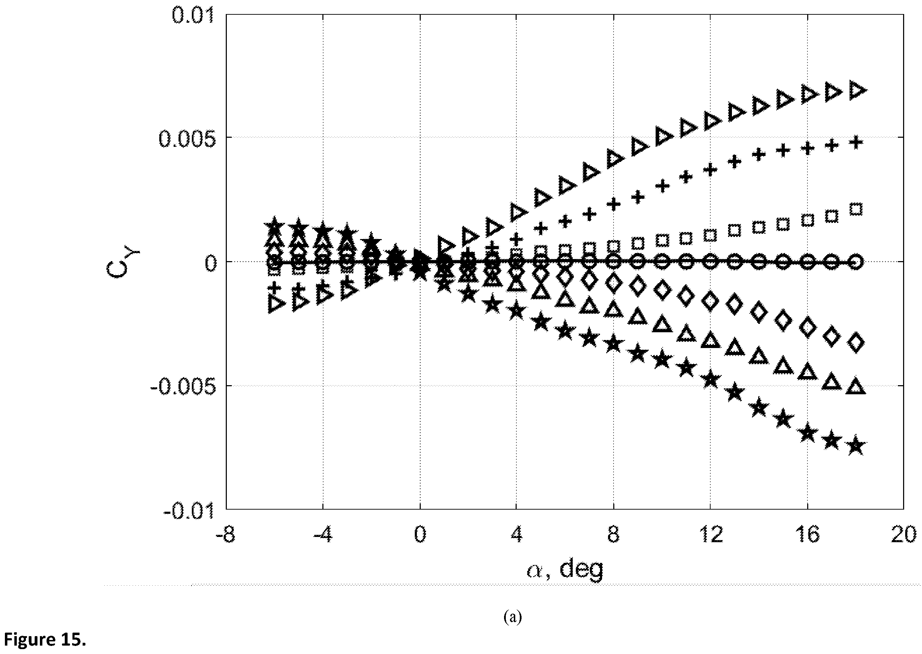

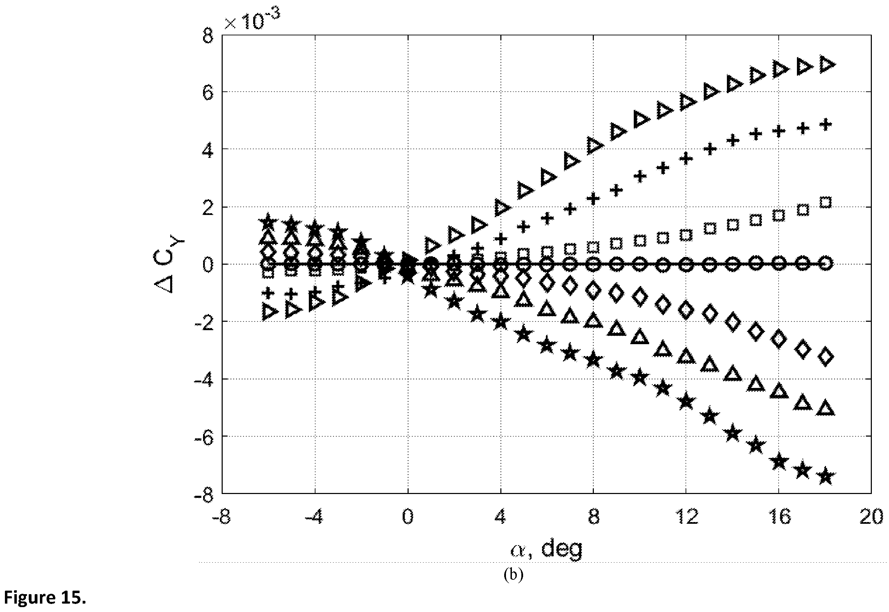

For side force coefficients, there is a linear trend with an augmented side force coefficient with varying angle of attack and twist angle to a maximum (both positive and negative side Figure 15(a) and (b)). As would be expected, no side force was seen at φ=0° or for the full span wing model (Figure 15(b)) in all ranges of angles of attack. As twist increased, the side force increased and augmented with further increase in angle of attack (*C_{Y}* = -0.0072 and *C_{Y}* = 0.0068 for φ=6° and φ=-6° respectively at α=16°). Furthermore, due to the unsteady vortex bursting phenomenon (Cebeci, 1990), after α=16° the results started become more stable, and began to reduce at φ = -6°. As corresponding twist angles of φ=4° and φ=-4°, clear reduction was observed compared to φ= ±6°, with 42% and 35% respectively at α=18°.

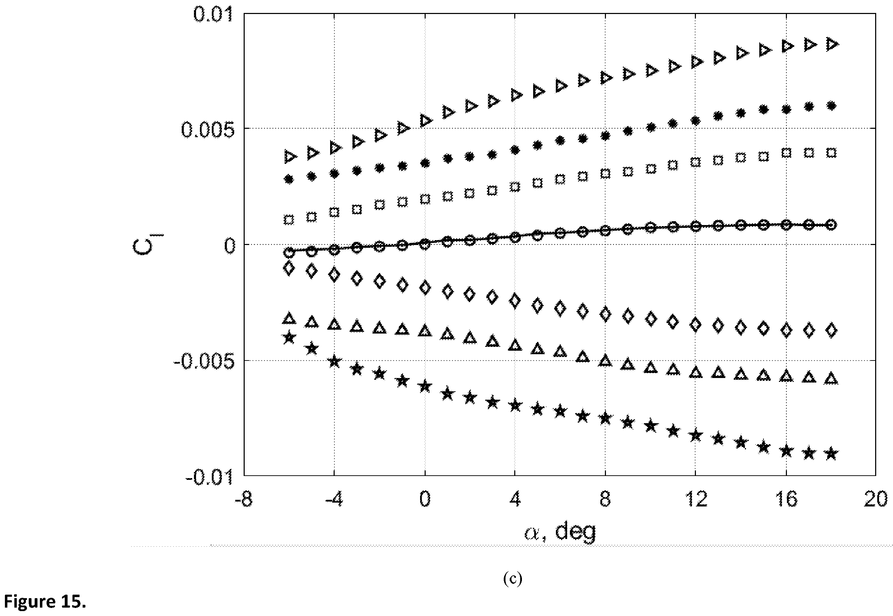

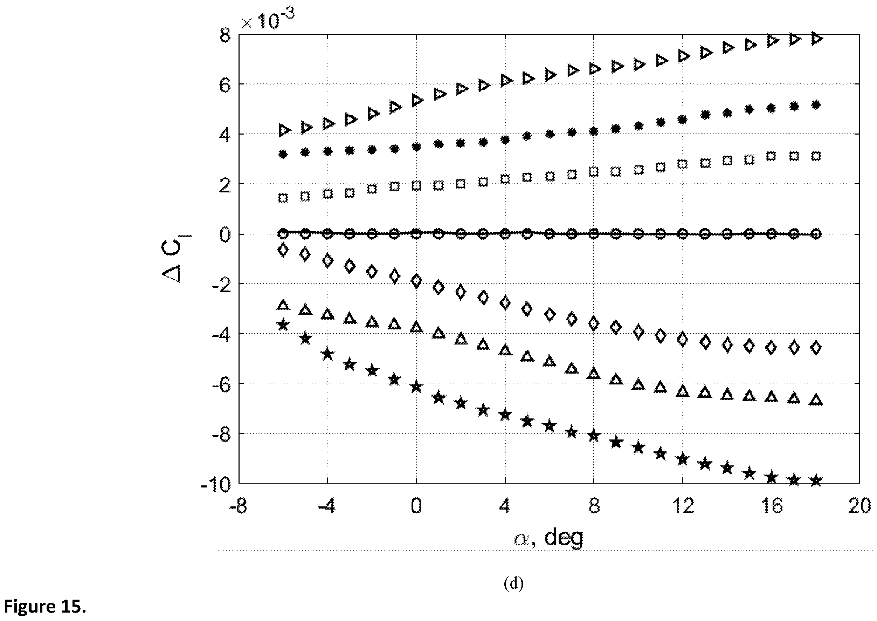

The influence of twist on the rolling moment coefficient for both positive and negative twist is presented in Figure 15(c) and (d). As is well known, Prandtl's classical lifting-line theory and the Fourier coefficients (Philips, 2004b), have shown previously that increases in wing twist away from the planar configuration can provide substantial roll authority suitable for aircraft roll control (Khot et al., 2000, 2002). As can be seen from Figure 15(c) and (d), rolling moments achieved through increasing twist angle to ±6° were maximum at Δ*Cₗ* = 0.0079 and Δ*Cₗ* = -0.0099 (α = 18°) for φ=-6° and φ= 6° respectively. As would be expected, negative roll moments were achieved for φ > 0° due to increased lift force over the morphing element that tends to roll aircraft left. At φ=-4° and φ=+4°, maximum roll coefficients of Δ*Cₗ* = 0.0057(30% less than φ=-6°) and Δ*Cₗ* = -0.0066 (34.4% less than φ=-6°) at α = 18° respectively were found and reducing to Δ*Cₗ* = 0.0035 and Δ*Cₗ* = -0.0045 for φ=-2° and φ=+2° respectively.

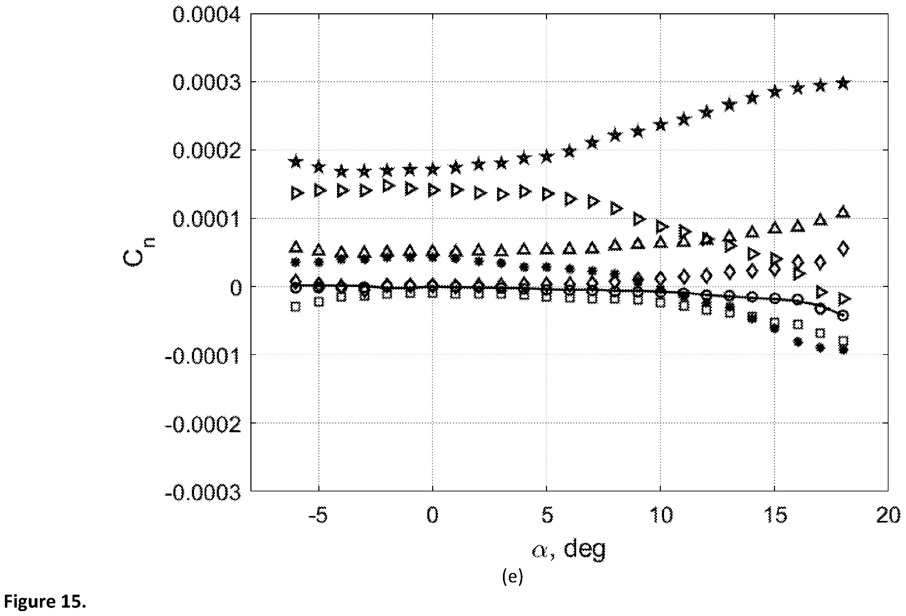

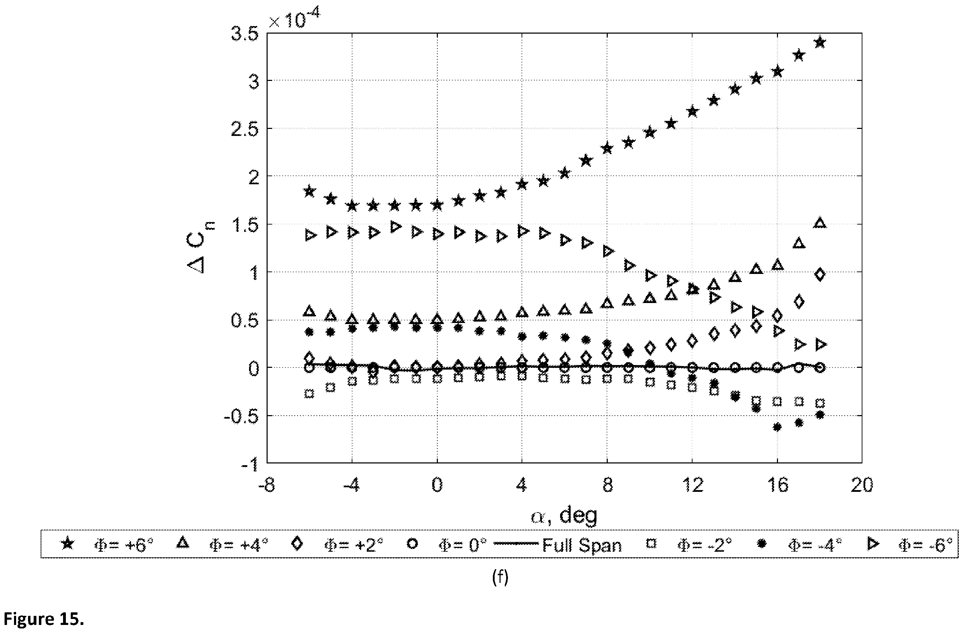

The yaw moment coefficient with different twist cases versus angle of attack is presented in Figure 15(e) and Figure 15(f). It can be seen that the general trend shows positive yawing moments exist for φ = -2° and φ = -4°, at α >15°. When2° ≤ φ ≥ 2°, the results suggest a limited effects on *Cₙ* with a maximum *ΔCₙ* =1× 10⁻⁴ at φ = +2°. Increasing twist angles to a maximum, *Cₙ* was found to be more effective with a maximum *ΔCₙ* =1.4× 10⁻⁴ and *ΔCₙ* =3.4× 10⁻⁴ for φ = 6° and φ =-6° respectively. As can also be seen yaw moments seem to be insensitive to changing angle of attack (-6°< α <12°) in all twist cases presented. This situation does change as further aerodynamic loading increases on wing the model and the results become more pronounced for α>12°. This would be expected as increased wing drag level becomes more substantial after α=12° as seen in Figure 14(c).

### Influence of Reynold Number on Aerodynamic Response of Wing Twist

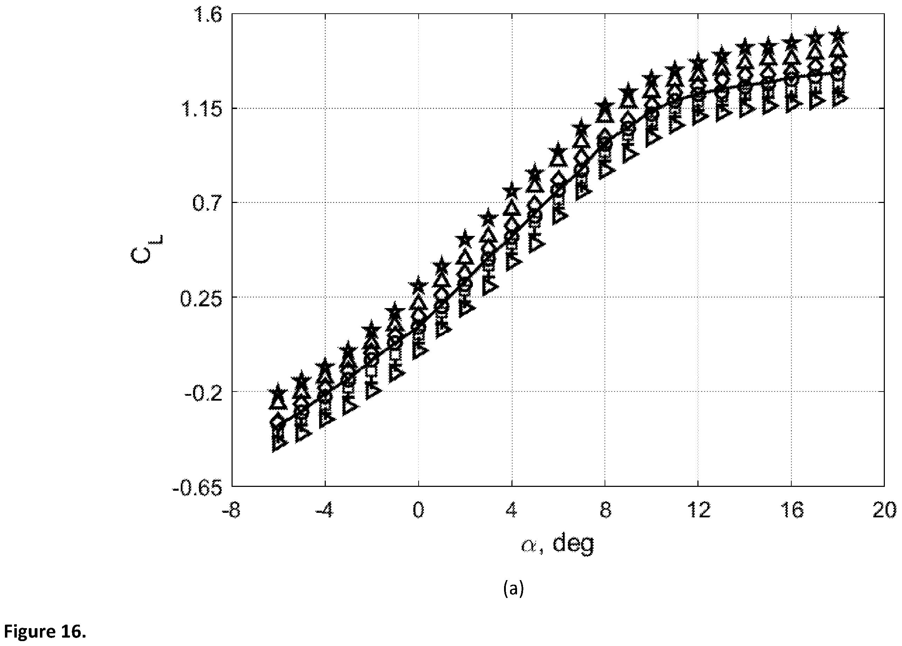

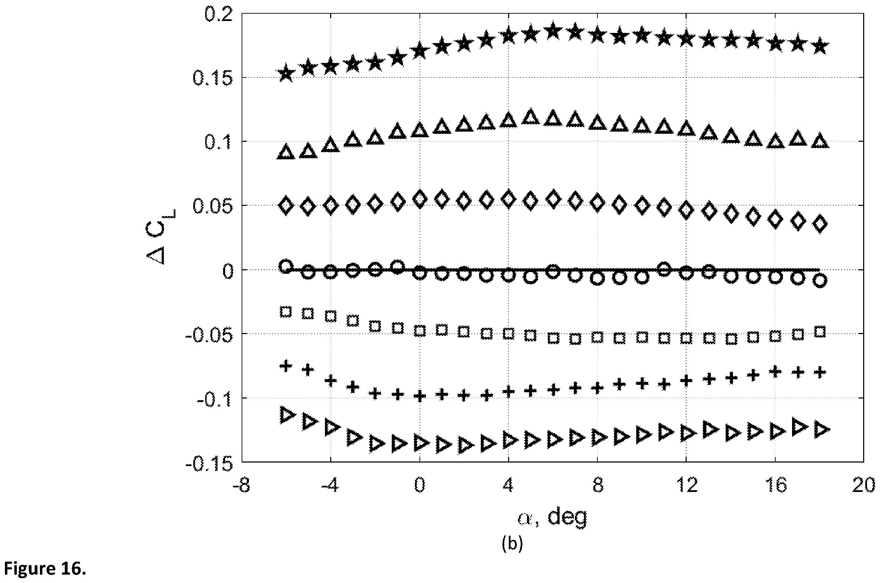

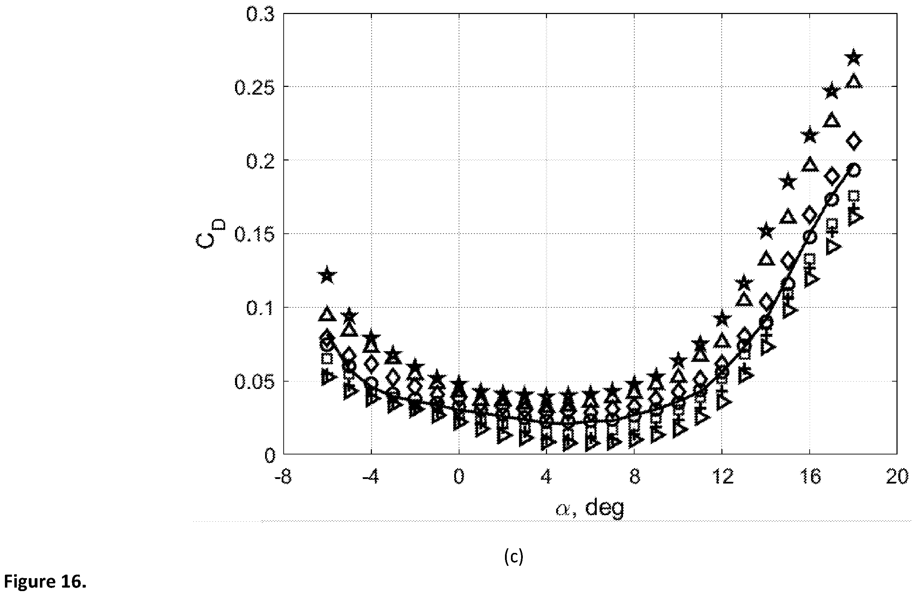

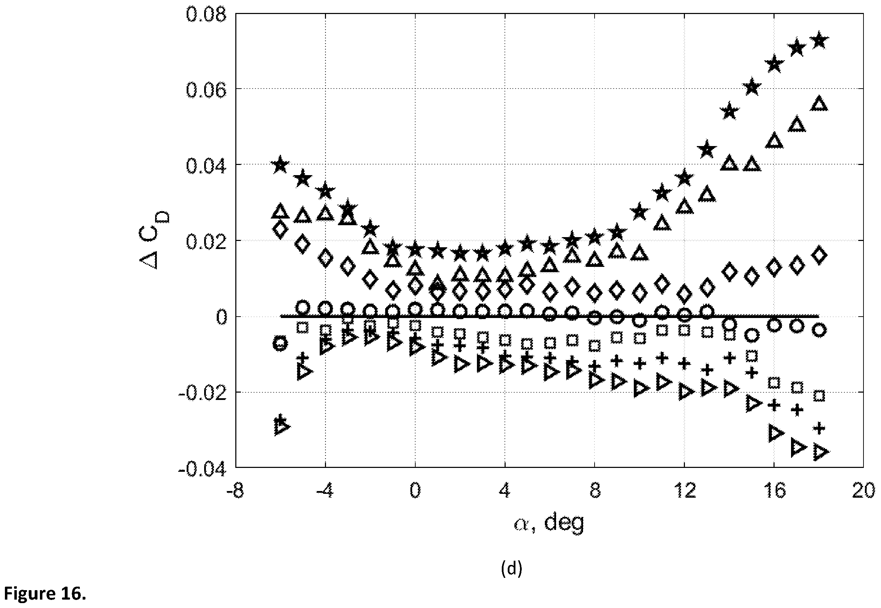

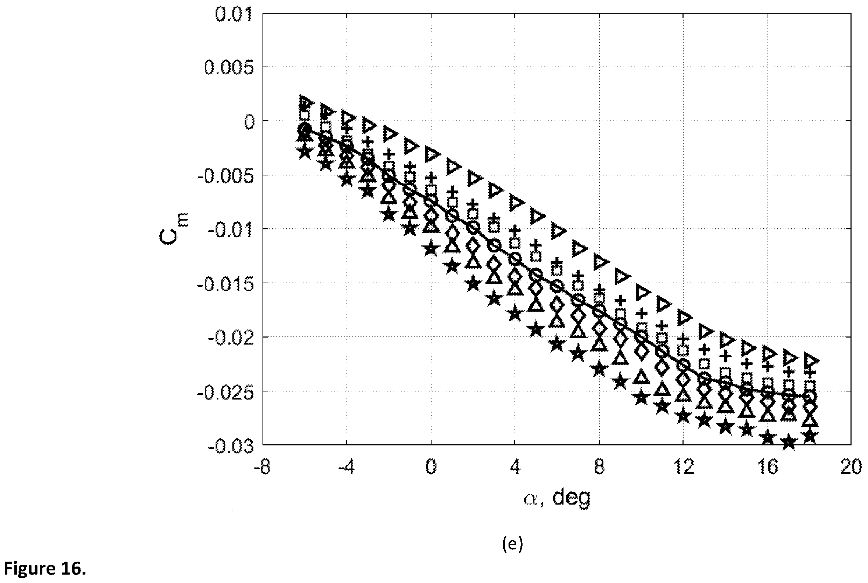

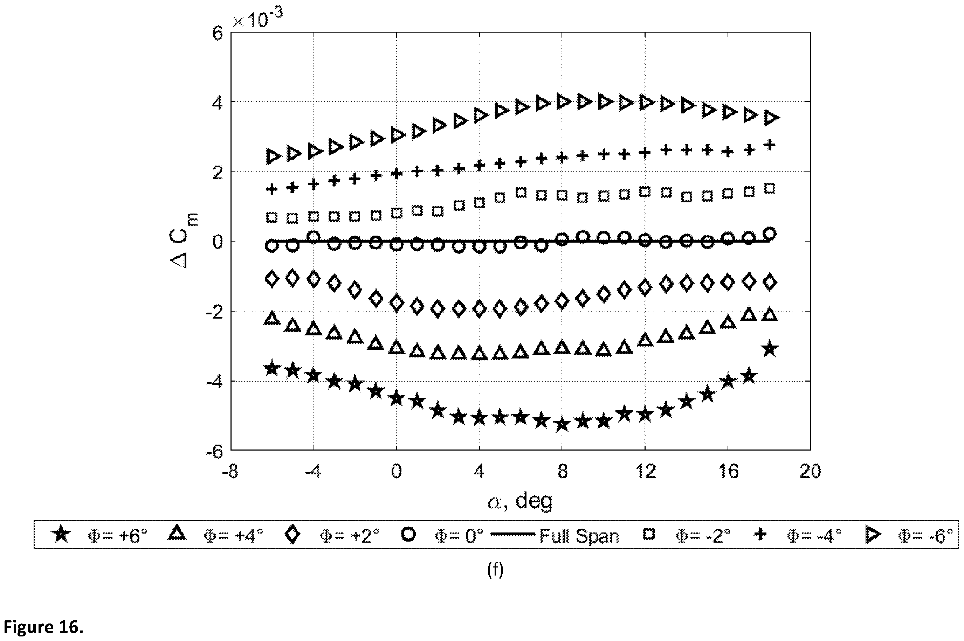

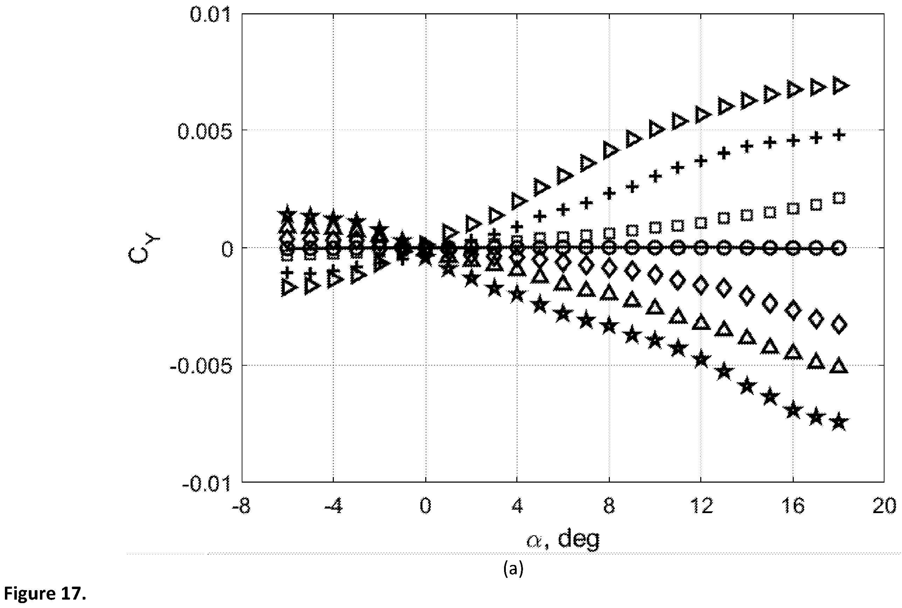

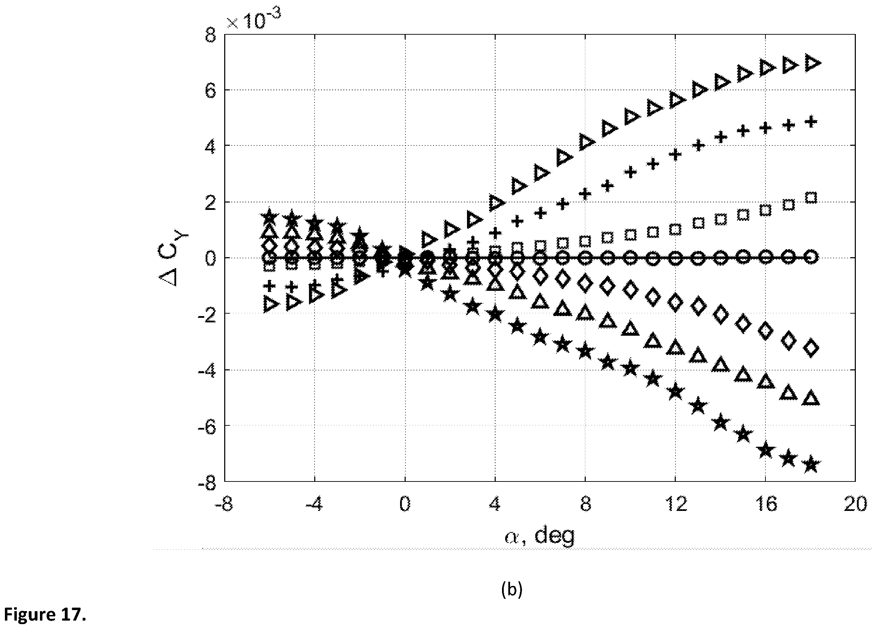

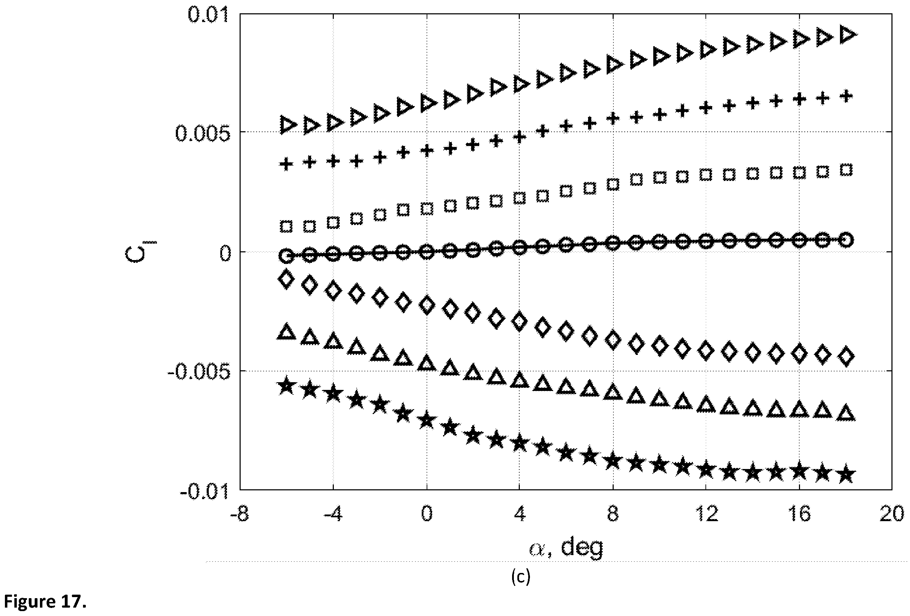

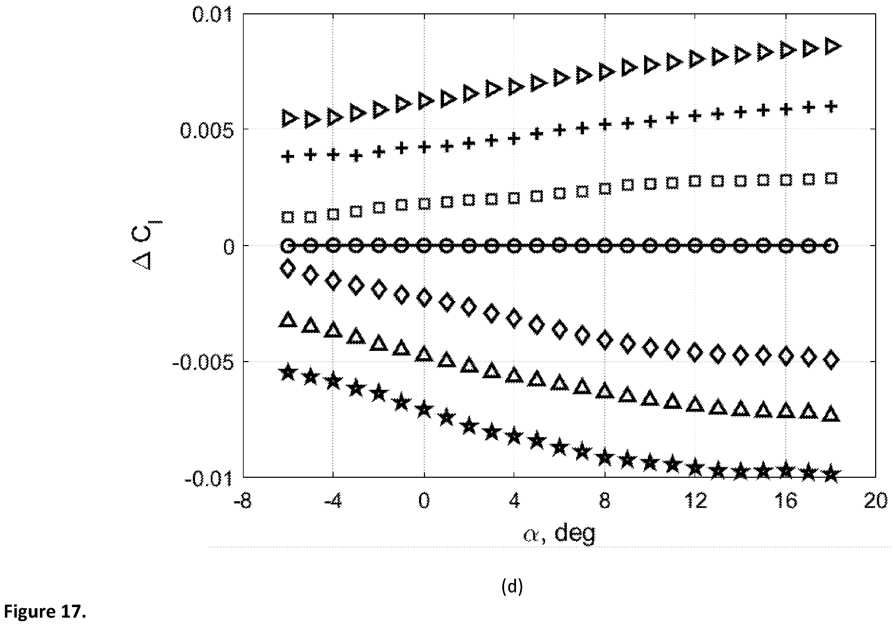

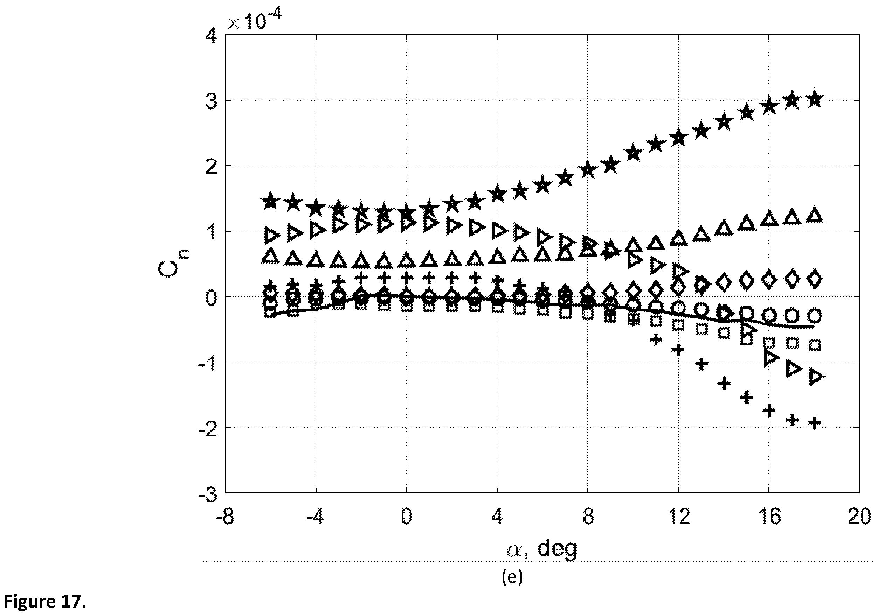

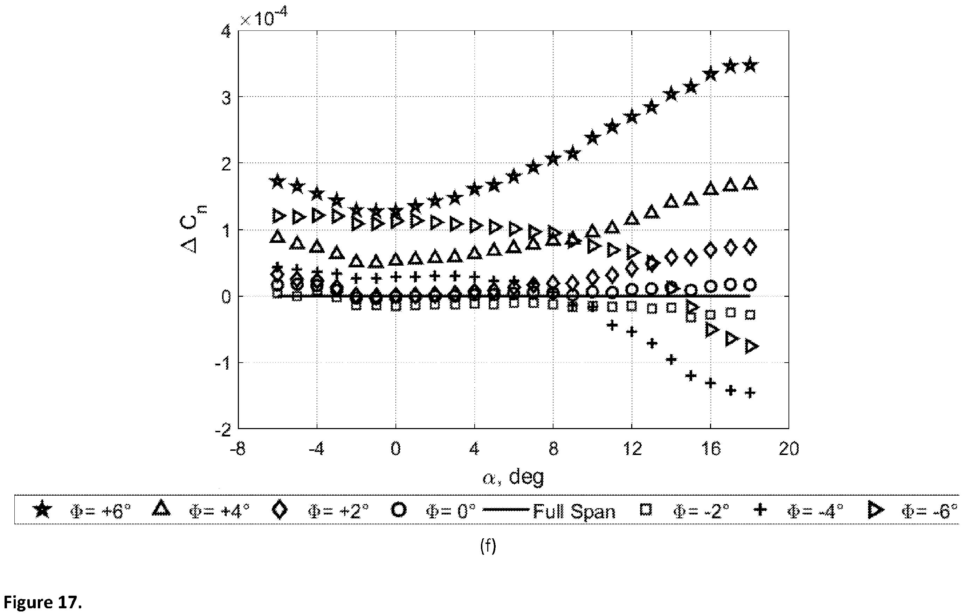

With the decision to introduce no artificial boundary layer tripping to the model, a study of the influence of the Reynolds number on the static force and moment characteristics was conducted to investigate any changes in the results in this transitional flow regime. Figure 16 and Figure 17 illustrate the results for twist at *Reₙ* = 5.14 × 10⁵. It can be clearly seen that the basic aerodynamic trends were observed to be the same as seen for *Reₙ* = 3.85 × 10⁵. For *C_{L},* the twist cases (φ>0°) presented do provide effective lift production compared to φ<0°. This would be expected as increased angle of twist at the wing-tip tends to increase the lift force. Comparing this lift production with *Reₙ* = 3.85 × 10⁵, the results seem to be slightly increased approximately *ΔC_{L}*(*max*) = 0.04 (2.75%) for φ=6° at α=18° (Figure 16(a) and (b)). This highlights that the increased Reynolds number provides additional lift force, as reducing the twist angle to -6°, similar to φ=6°, the influence of *Reₙ* has a very minor influence on the lift coefficient results. As would be expected, the magnitude of lift coefficient is reduced and compared to *Reₙ* = 3.85 × 10⁵, *ΔC_{L}*(*max*) =0.05 (3%) is obtained for φ= -6° favouring *Reₙ* = 5.14 × 10⁵. In addition, the lift coefficient of a full span wing model is also presented and it can be seen that there is good agreement between full span wing and zero twisted wing modelling. This indicates that the twist mechanism works as normal as a full span wing.

Similar to *C_{L}*, there is a reasonably coherent influence of Reynolds number with general magnitudes increasing with increasing *Reₙ.* It can be seen from Figure 16(c) that significant drag increase was obtained when α =18° due to increased sensitivity to the onset flow separation on the wing structure after α=12°. This increase is further exacerbated by increasing *Reₙ* (*ΔC_{D}* = 0.025 compared to *Reₙ* = 3.85 × 10⁵) for φ=6° at α=18° as shown in Figure 16(c). Changing the incidence angle of a wing has the similar trend as seen for *Reₙ* = 3.85 × 10⁵. The overall coefficient magnitudes were reduced with reduced angle of attack. In saying this however, there exists subtle characteristics within the results that indicate a small degree of reduction particularly for 0° < α > 5°.

Similar circumstances are discussed for *Reₙ* = 3.85 × 10⁵, here for *Reₙ* = 5.14 × 10⁵, considering the results for φ < 0° as shown in Figure 16(d), there seems to be much less of a variation in change in drag coefficient when compared to the φ > 0° configurations, with the influence of the twist angle being much less pronounced than that found for φ > 0°. One possible reason for this may lay in the increased effectiveness of negative twist angles at producing less overall lift (and therefore less lift-dependent drag) as well the ability of negatively-twisted morphing configurations to maintain lower effective angles of attack relative to the freestream flow. Furthermore, the full span wing drag coefficient results are also illustrated and it is clearly seen that the twist mechanism does not have any detrimental effect on the aerodynamic performance of the plane.

Figure 16(e) and (f) highlight the results for *Cₘ* versus angle of attack. It can be seen that as the twist angle increases from -6° to 6°, the effective pitching moment coefficient reduces, as with the similar trend seen in Figure 16(e). Comparing Figure 16(e) with Figure 14(e), results for *Cₘ* indicate that higher *Reₙ* produces lower magnitudes of pitching moment coefficient.

For *C_{Y},* the influence of *Reₙ* is the increased effectiveness to produce side force as clear deviation is seen in *Cₗ* as well. It can be seen from Figure 17(a) and (b) that negative and the positive twist configurations have completely opposite effects on the aerodynamic. This would be expected as increased lift force on positive twist configurations tends to have negative side effects, and positive side effects for φ < 0°. The trend between the small angles of twist (φ > 0°) and the larger twist is increased as the angle of twist increases and when negative twisted morphing configurations are considered, similar to φ > 0°, the side effects are a little increased, but in a negative direction. Comparing this feature with the low Reynolds number, similar results were obtained. Although similar trends were obtained, in most cases as would be expected there is a slightly augmentation in terms of side force. As far as φ = 6° is considered there is a *ΔC_{Y}* = 0.001 between *Reₙ* = 3.85 × 10⁵ and *Reₙ* = 5.18 × 10⁵ and this rate is further amplified to *ΔC_{Y}* = 0.0020 at φ = -6° (due to asymmetrical airfoil shape, negative and positive side twist performs differently). Reducing the twist angle to 2° and -2°, the magnitudes are also reduced to *ΔC_{Y}* =7 × 10⁻⁴ and *ΔC_{Y}* =5 × 10⁻⁴ respectively.

Figure 17(c) illustrated *Cₗ* results for different angles of twist versus angle of attack at *Reₙ* = 5.18 × 10⁵. It can be clearly seen that negative roll moments were achieved at φ > 0° as increased lift force over the morphing elements that tends to roll aircraft left. In contrast, a positive roll moment is produced in φ < 0° that is the wing will roll in the right direction. Moreover, as expected, the results for *ΔCₗ* show an almost symmetrical deviation with variation in twist angle due to the inherent connection between *ΔC_{L}* and *ΔCₗ.* In general, the roll moment coefficient was slightly increased with the increased Reynolds number and maximum *ΔCₗ* was found to be 0.001 and 0.0004 for φ = 6° and φ = -6° respectively.

For *Cₙ,* results show a similar trend as discussed for lift, pitching moment, and rolling moment coefficients for α<12° (Figure 17(e)). However, after this angle of attack, the yawing moment coefficient is seen to increase markedly as the dependence on increasing wing drag levels becomes more and more significant. Comparing this to *Reₙ* = 3.85 × 10⁵, the yawing moment coefficients showing almost steady performance with *ΔCₙ* = 6.3 × 10⁻⁶ at φ = -6°.

### Comparison between Standard Aileron and Morphing Concept

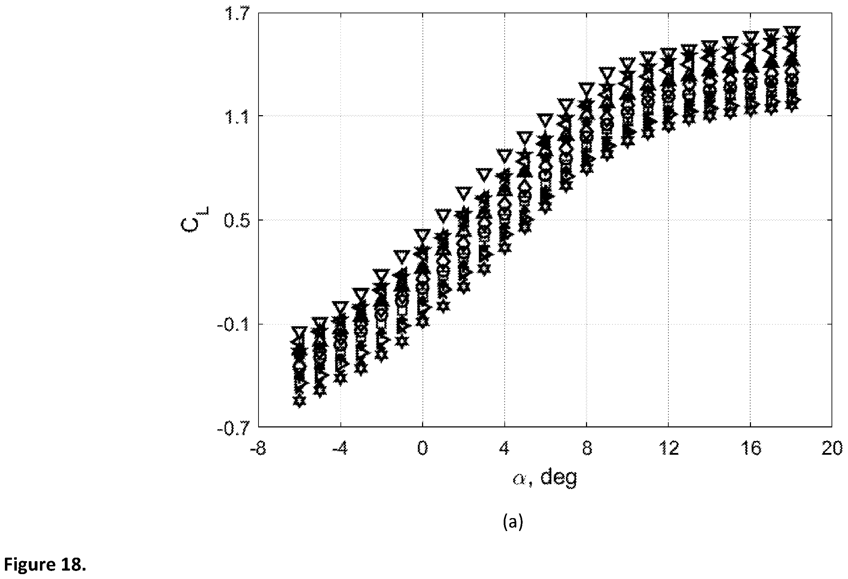

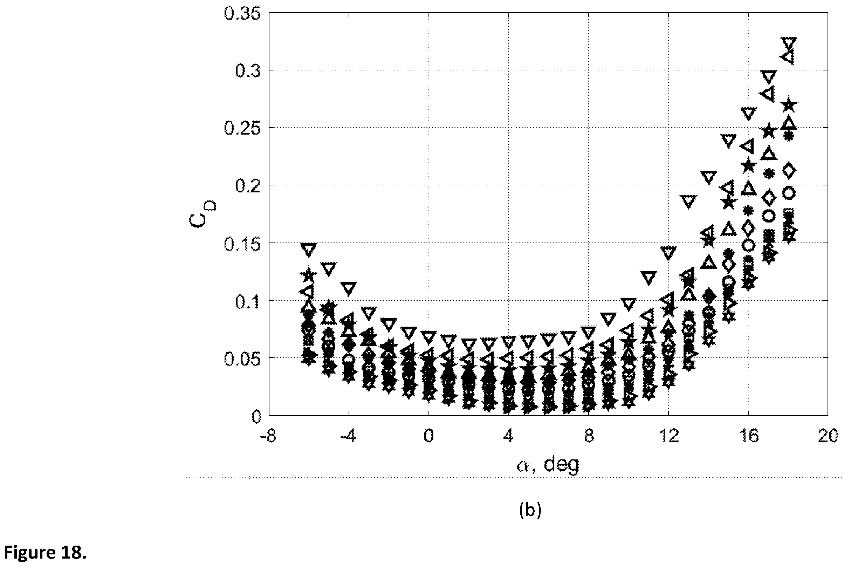

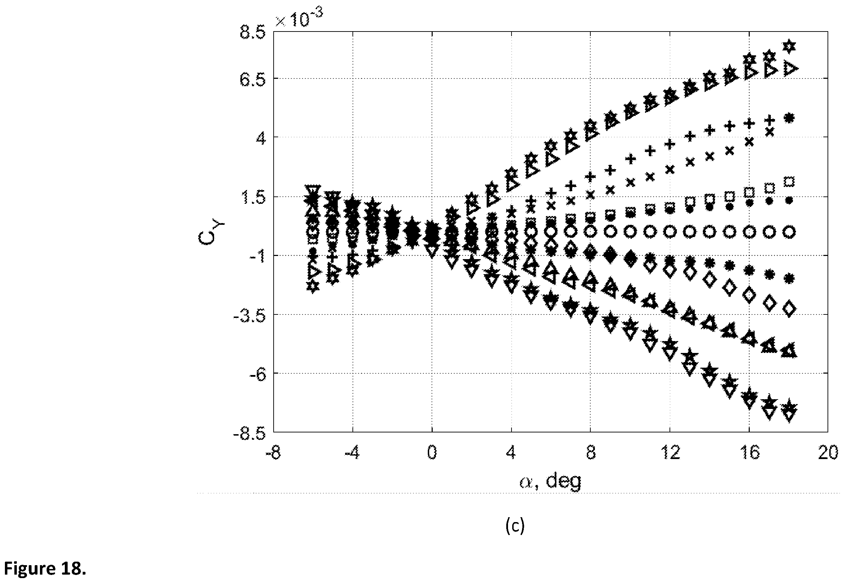

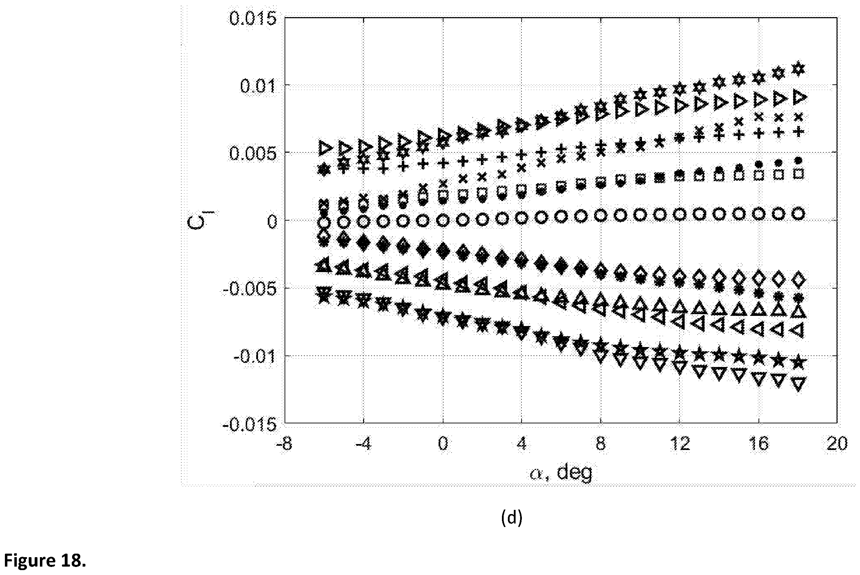

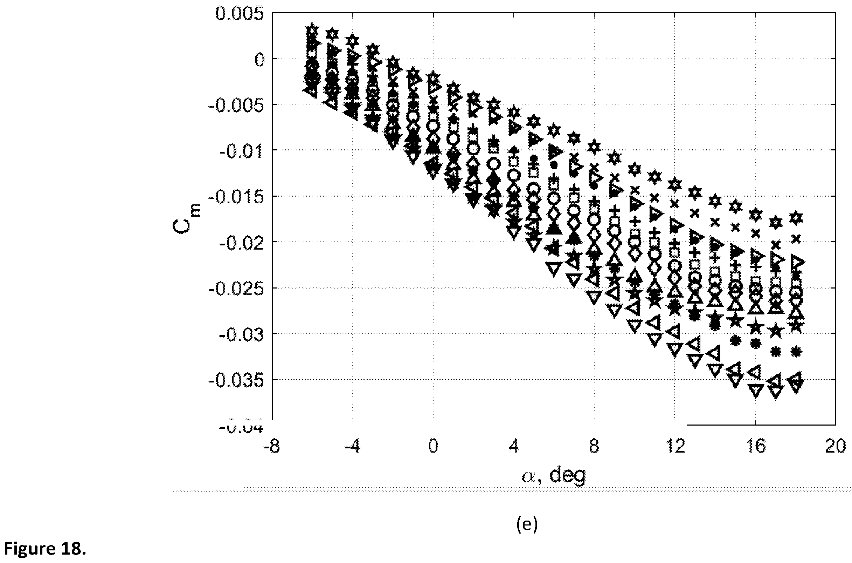

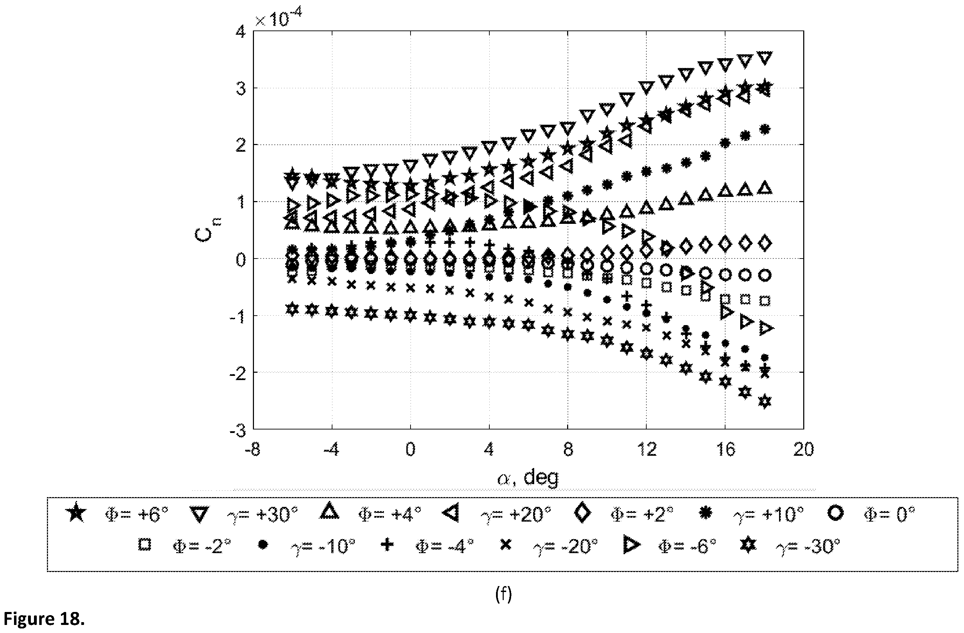

Figure 18 compares between the standard aileron model and morphing concept. These results were performed at a *Reₙ* = 5.14 × 10⁵. The aileron angles were -30° to 30° in steps of 10° with the twist angle of the morphing concept, varied from -6° to 6° in steps of 2°. The lift coefficient results are presented in Figure 18(a). It can be seen that deflecting aileron angle to γ > 0° resulting in an increase in lift at a given angle of attack. Maximum lift coefficient, up until γ = 30°, where only a small lift increment is seen over γ = 20° (7.6% at α=9°). Comparing these aileron models with twist configurations, the morphing concept shows very similar lift results (the differences between the φ = 6° and γ = 30° configuration of Δ*C_{L}* = 0.03(2%) at α=9°). A lower deflection magnitudes, a small reduction in the lift curve slope was measured with the γ = 20° and γ = 10° configurations, almost equivalent in performance to the φ = 4° and φ = 2° respectively.

For negative angles, the lift becomes lower for reducing angle to γ = -30° and φ = -6°. This would be expected as reducing the effective incidence angle of the surface to decrease the lift force. Contrary to positive angles, variation between the negative twisted morphing concept and aileron configurations are slightly less and twisted concept was found to produce more lift than aileron deflections with Δ*C_{L}* = 0.03 (4.5%) at φ = -6° (α=9°) compare to γ = -30°. Reducing the angle of twist and aileron deflection angle, similar characteristics were seen with Δ*C_{L}* is 0.05(5%) and 0.01(1%) for φ = -4° and φ = -2° respectively compare to γ = -20° and γ = -10°.
For drag coefficient, there is a clear difference between the aileron and morphing concept model at large deflection angles. For the twisted morphing configuration at φ = 6°, same the highest drag coefficients were measured only to be supposed by the aileron configuration at γ = 30°. It can also be seen from Figure 18(b) that the minimum drag coefficient is higher for the aileron configuration (23.9%) compared to the morphing concept (compare to φ = 6° with Δ*C_{D}* = 0.055 at α=18°). These differences exist at lower angles, but reduce in magnitude. For γ =20°, the drag coefficient results are still larger (15.4% and 24% high drag production compare to φ = 6° and φ = 4° respectively).This trend was continued for γ =10° with 14% drag increase over φ = 2°. These would be expected due to the aileron configuration generating significant flow separation.
Considering the results for γ < 0° and φ < 0° as shown in Figure 18(b), overall, there appears to be less of a variation in change in drag coefficient for comparable angles of attack comparing to the γ > 0° and φ > 0° configurations. One possible reason for this may lay in the increased effectiveness of both negative twist and negative aileron configurations at producing less overall lift (and therefore less lift-dependent drag) as well the ability of negatively-twisted morphing configurations to maintain lower effective angles of attack relative to the freestream flow. When comparing the aileron configuration with the negative twist configuration, 3.5% higher drag was found to exist for γ = -30° over φ = -6° at α=18°. This trend can be seen for γ = -20° with 2.79% drag increase over φ = -4°, and 1.15% for γ = -10° compare to φ = -2°. These results indicate that twist configuration produce less drag in all over aileron deflection angle, which tend to increase the flight envelope.

Figure 18(e) highlights the influence of changing twist and aileron angle on the pitching moment coefficient. Increased negative pitching moment is the predominant result for all cases presented. Comparing these aileron angles with twist cases, the results for the aileron configuration had similar performance as that seen for twist cases between -6° ≤ α ≥ 0°. This situation does change as aerodynamic loading increases with the reduction in *Cₘ* with deflection either in twist or aileron deflection angle, becoming more pronounced for α>0°. When comparing directly the pitching moment coefficient between these two configurations, maximum Δ*Cₘ* between γ = 30° and φ = 6°, and γ = -30° and φ = -6° were found to be 0.0064 and 0.0048 respectively, introducing that aileron deflection is more effective at pitching moment production.

For the side force coefficient, a similar trend was observed for both the aileron and morphing configurations with possible exception of φ = 2° and φ = -4°. It can be seen from Figure 18(c), when the aileron configuration is deflected to γ = 30°, negative side force is obtained with a magnitude much larger than when the deflection angle is reduced to 10°. Contrary to the morphing configuration, at γ = 30°, Δ*C_{Y}* = 0.0003 (3.5%) compare to φ = 6°, this rate is less pronounced between φ = 4° and γ = 20°, where Δ*C_{Y}* was found to be 0.001(2.2%) and seen to favour movement to φ = 4° (which indicated φ = 4° produce more side force than γ = 20°). When negative angles are considered for φ = -4° and γ = -20°, the results seem to be shifted to the aileron configuration (γ = 20° produced more side force than φ = 4°). Moreover, the variations between these angles are minimal with Δ*C_{Y}* = 0.0001(0.1%).

Figure 18(d) illustrates the roll coefficient results for the various twist and aileron configurations. As is shown in all of these trends, roll authority is significant with both aileron and twist changes. This would be expected due to increases in the lift distribution increases roll moment. Comparing the twist with aileron configurations directly, very similar trends were observed. It can be seen that the aileron at γ = 30° produces a similar roll coefficient with φ = 6°. For these cases (γ = 30°), the produced roll moment appears to be slightly more than φ = +6° (maximum Δ*Cₗ* is 0.0004 (4.6%) at α=18°). When reducing the angle of aileron deflection to 20°, the roll coefficient performed similar to results for φ = 4°, although at higher angles of attack there is a large moment generated from the aileron configuration than for the morphing configuration (Δ*Cₗ*=0.0015). For negative deflection ranges, similar trends as discussed for positive deflection seem to be exist. It can be seen that the difference between the γ = -30° and φ = -6° shows an advantage of Δ*Cₗ*=0.002. For morphing concept φ > 6° with this advantage decreasing with further in negative angles of aileron deflection (γ = -20° and γ = -10°) and twist (φ = -4° and φ = -2°) (Δ*Cₗ*=0.0011 and Δ*Cₗ*=0.0009 respectively). In general, in both cases presented here, roll authority was achieved and compared well to both aileron and twist morphing configurations. The similar roll moments obtained implies that the morphing concept can replace a traditional aileron with less drag penalty.

Comparing *Cₙ* results between the ailerons and morphing configurations, there appears to be much more variation compared to the other aerodynamic coefficients already discussed. It can be seen from Figure 18(f) that, for some cases presented linearly increasing yawing moments were found to exist up to α≅12°. For α>12°, the yawing moment coefficient is seen to deviate markedly in both cases as the dependence on increasing wing drag and propensity for stall becomes more and more significant. For positive aileron configuration, positive yawing exists with comparisons between γ = 30° and φ = 6°, show results higher by *ΔCₙ* = 5× 10⁻⁵ (14%). The deviation was found to increase with decreasing aileron deflection angle at γ = 20°. Similar to γ = 30° here, the results show the same trend seen for γ = 30°, however comparing the results with φ = 4°, the *ΔCₙ* variation increased further to 1.75× 10⁻⁴ (more than 80% less performance compare to γ = 20°). For negative deflection, results for morphing configurations are more promising with 15% differences at between γ = 20° and φ = 4°.

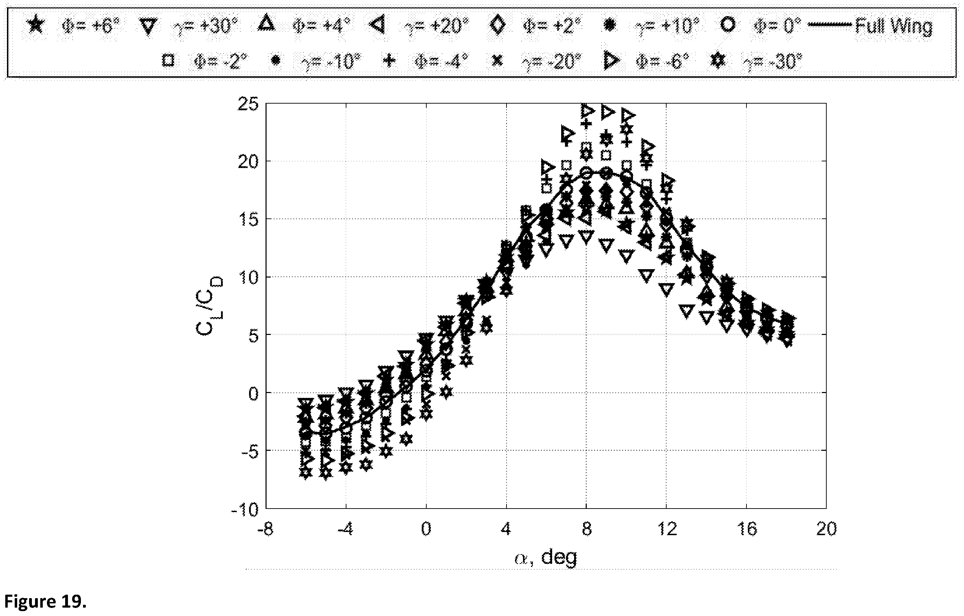

The combined effects of lift and drag can be usefully combined by plotting the lift to drag ratio versus angle of attack (aerodynamic efficiency). To further discuss the advantage of the morphing system compared to a traditional aileron system *C_{L}*/*C_{D}* will be used. This is shown in Figure 19. Since the range of lift coefficient obtainable is very similar for both morphing and aileron configurations, drag coefficients are far difference and dictated *C_{L}*/*C_{D}.* In all of these configurations, and as would be expected, it can be clearly seen that the best *C_{L}*/*C_{D}* occurred in 8° ≤ α ≥ 10° and the principle effect on *C_{L}*/*C_{D}* is one of a reducing magnitude with movement of aileron deflection magnitude and twist with positive deflection. With deflection of γ=30°, appear to show the worst with comparison to φ = 6°, *Δ*(*C_{L}*/*C_{D}*) found to 17.5% less.

In overall, performance is reduced 28.7% at α = 8° compare to full wing baseline model. This would actually be expected due to severe flow separation at the sudden and sharp discontinuity in ailerons. With further decrease aileron deflection angle to γ=20°, appear to be much closer producing 1.8% and 6.25% less performance than φ = 6° and φ = 4° respectively. This also shows how standard aileron systems decrease the aerodynamic efficiency of an aircraft over morphing twist. For γ=10°, interestingly similar trend was observed compare to φ = 2° with reduction of 0.5% (*C_{L}*/*C_{D}*=17.4 at α = 9°). This also initiates that the small degree of deflection has small detrimental effects on aerodynamic performance.

To further quantify this improvement and through comparing positive and negative deflection for both aileron and morphing configurations, there is a significant improvement in terms of efficiency. For φ = -6° configuration, best (*C_{L}*/*C_{D}*) is obtained as 24.3 at α=8° and *C_{L}*/*C_{D}* shows 18.3% improvement over aileron configuration (γ=-30°). This rate was 22% contrary to full baseline wing model. This reduces by reducing twist angle to -4° with the efficiency reducing to 23.16 (4.7%). However, it is also promising the advantage over the aileron configuration of γ=-20°. Overall 22.66% improvements achieved at α = 8° and with further increase in angle of attack to α = 10°, as expected improvement rate is reduced to 17.84%, which is still high. Interestingly, the γ=-20° configuration performed similarly to a full span (zero-twist) wing profile due to low lift coefficient. As mentioned previously for a small positive angle of deflection (γ=10°) and twist φ = 2° have minor effect on aerodynamic performance, but in here, for negative angle configurations,10.5% improvement was seen at φ = -2° (α = 8°) compare to full baseline wing model. Comparing φ = -2° with γ =-10°, 12% improvement was achieved. Thus, this smooth and continuous morphing concept appears to be more aerodynamic efficiency than the use of a standard aileron design.

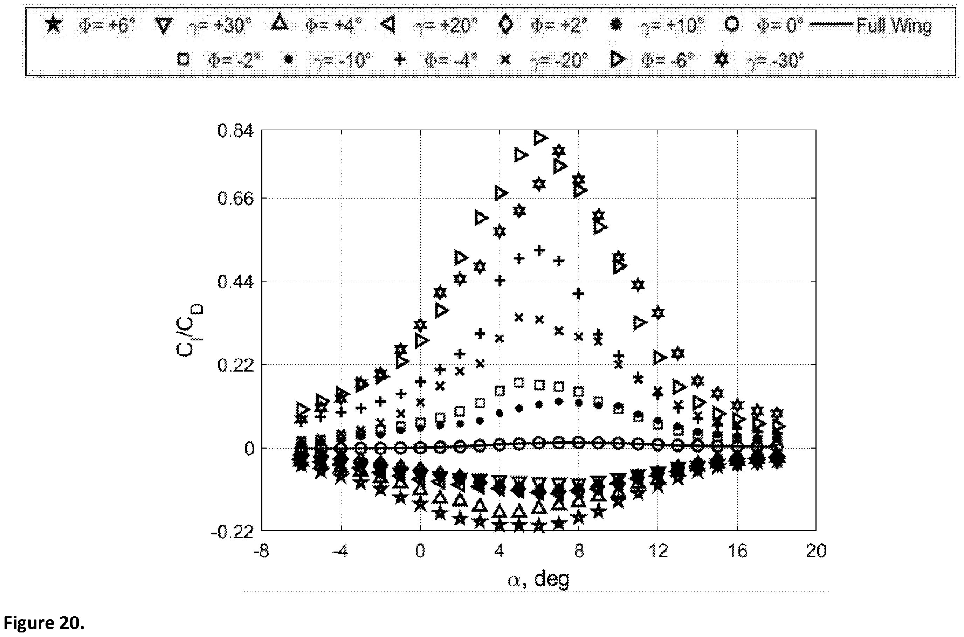

Lastly, to compare the effectiveness of the two concepts, the roll/drag coefficient ratio is shown in Figure 20. It can be clearly seen that increasing aileron and twist angles in both the positive and negative side increase the magnitudes of moments generated with maximum values occurring at maximum degrees of twist or aileron deflections. However, this ratio provides further insight into how the drag coefficient influences the efficiency of two configurations. This improved performance over the aileron configuration is seen at φ = -6° with the results showing (*Cₗ*/*C_{D}*) approximately 14.95% (α = 6°) higher than γ=-30°. This implies that morphing concept with φ = -6° can provide similar roll moment like aileron (γ=-30°], but superior aerodynamic efficiency compare to aileron deflection. As far as φ = -4° is concerned, 50% improvements are seen over γ=-20°. This would be expected because twist configurations do provide effective drag reduction while generating significant roll moments compared to standard aileron configurations. Further reduction in twist angle to φ = -2°, similar scenario as seen at φ = -4° is continued with 38.6% improvement over γ=-10°. Thence, the negative twisted morphing concepts showed substantial improvement for *Cₗ*/*C_{D}* in all cases presented over aileron configurations.

Considering the positive angle deflection in aileron and twist configurations, it can be seen from Figure 20, the highest *Cₗ*/*C_{D}* value was obtained at φ = 6°. Comparing this with φ = -6°, due to drag increase in positive twist configuration tend to reduce the efficiency. Although efficiency is low, it still has reasonable improvements over the aileron configurations with 44% (α = 6°) (compare to γ=30°). Interestingly, maximum *Cₗ*/*C_{D}* was not occurred at maximum aileron deflection angle due to high lift-dependent drag at γ=30°. For φ = 4° configuration, maximum *Cₗ*/*C_{D}* was found at α = 4° with 63% improvement over γ=20°. As far as φ = 2° considered, minor enhancement (1%) is obtained compare to γ=10°. As a results of this *Cₗ*/*C_{D}* comparison clearly showed that the morphing configuration either in negative and positive twist provides substantial improvements in contrast to aileron configuration due to low drag coefficient.

### Structural Comparison between FEA and Prototype Morphing Wing

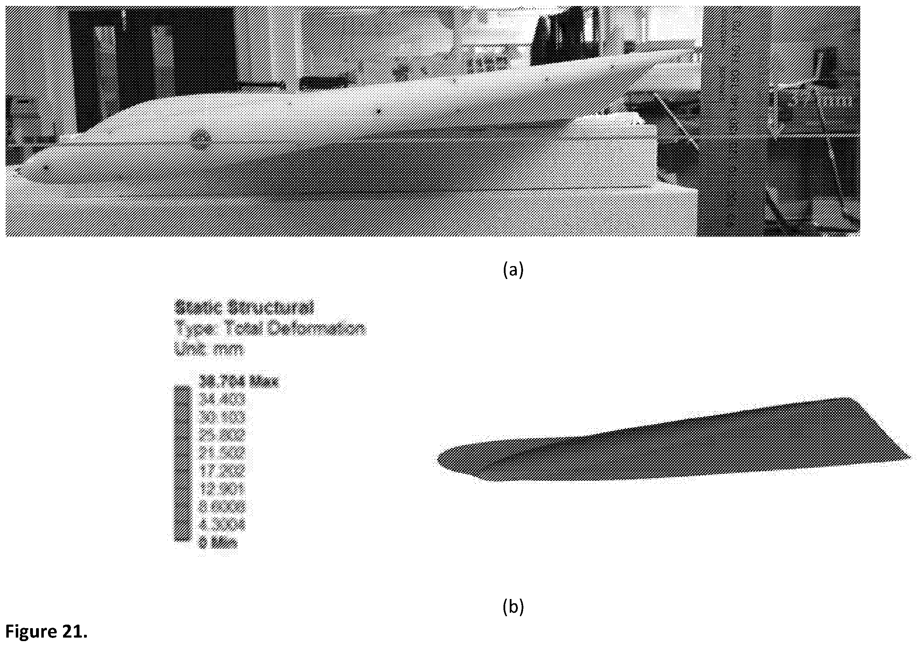

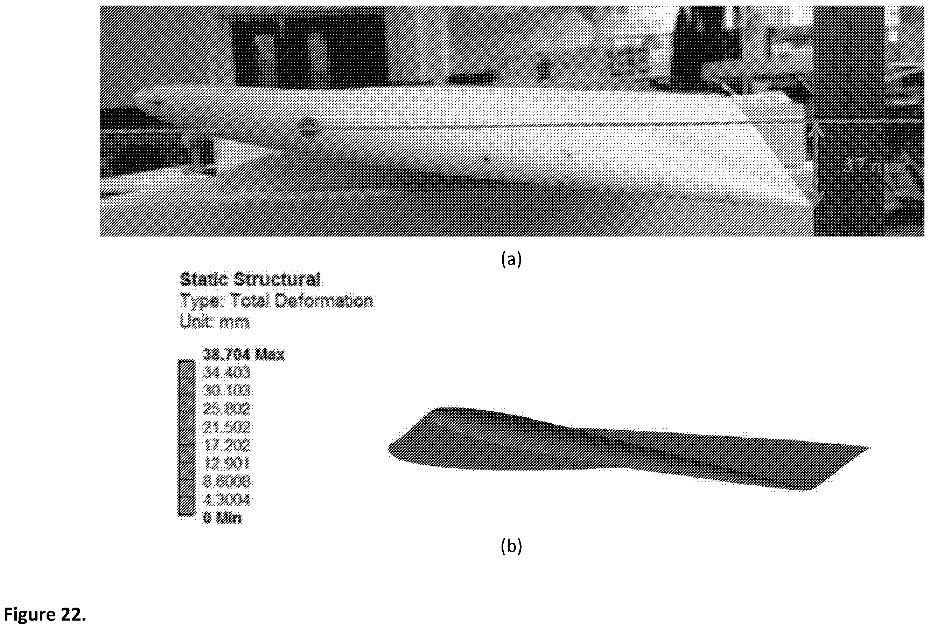

The structural deformation magnitudes without aero-load cases are shown in Figure 21 and Figure 22. In general, there is good agreement between the computational and experimental results. It can be seen that the displacement magnitude in experimental modelling was 37 mm (Figure 21(a)) and compare to 38.7mm for the FEA (Figure 21(b)). Similar results were also seen for negative twist configurations as shown in Figure 22. It can be clearly seen that the negative twist (max) deformation magnitudes were 38.7mm and 37mm for the FEA and the experimental models respectively. As would be expected, there are slight differences between these two approaches ±2.5mm thought mainly to originate from un-modelled friction forces between the ribs and elements.

### Rolling Rate comparison between the traditional wing structure and prototype morphing wing concept

Actual flight testing of the concept was performed to demonstrate the viability of the design. Both full wing with aileron (unmodified baseline wing) modified wings (morphing concept) were tested and compared.

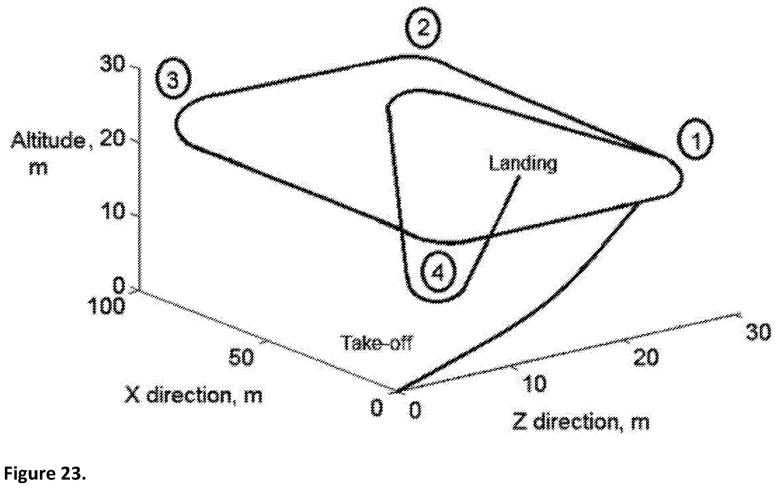

The altitude and flight paths adapted shown in Figure 23. Here, it can be seen that the pilot tried to do close approximations for both configurations. On the day of flight, the temperature was 6° and the wind speed nominally 5mph. The flight testing started with a take-off position and climbed the desired altitude (30m). Then the basic roll manoeuvring was followed as numbered from 1 to 4. After the 4^{th} roll, the aircraft was landed. It should be also noted that, before and after each test, zero readings were obtained in order to achieve accurate results.

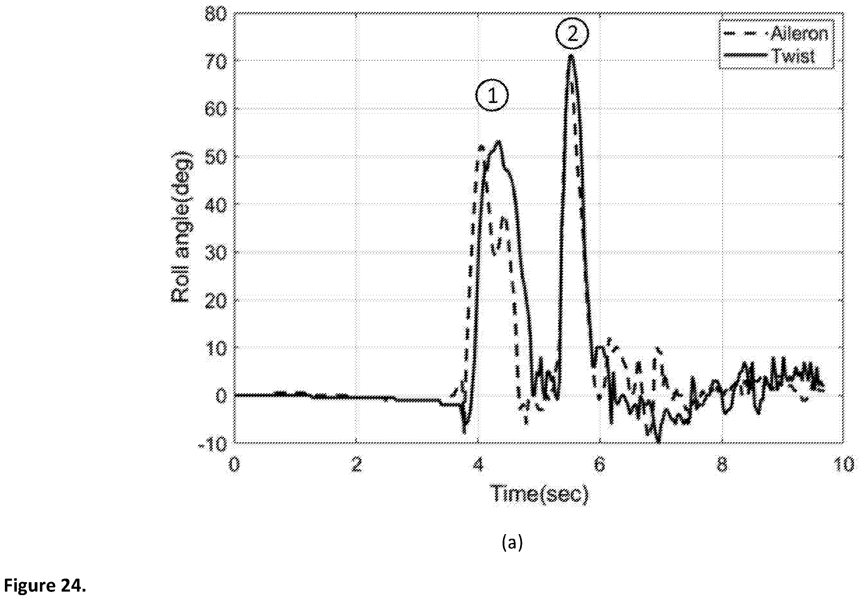

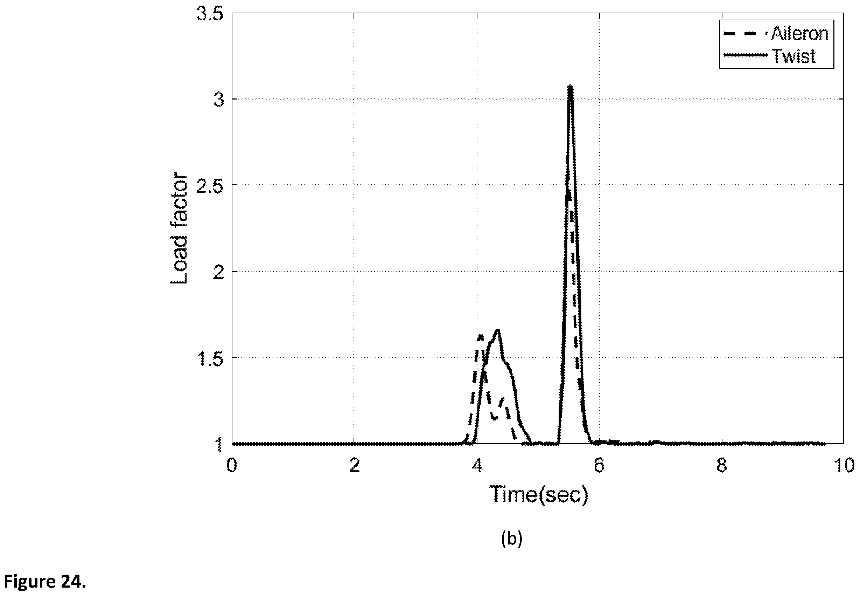

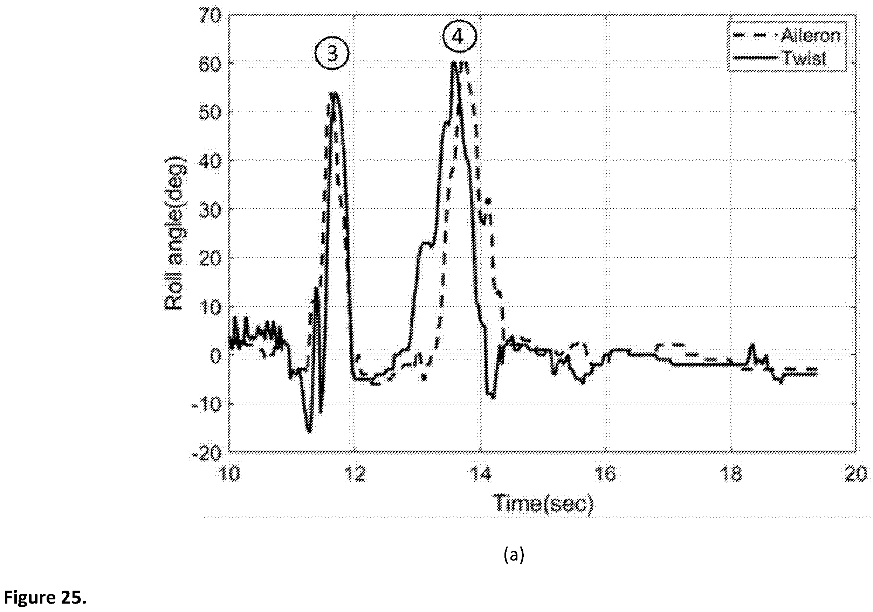

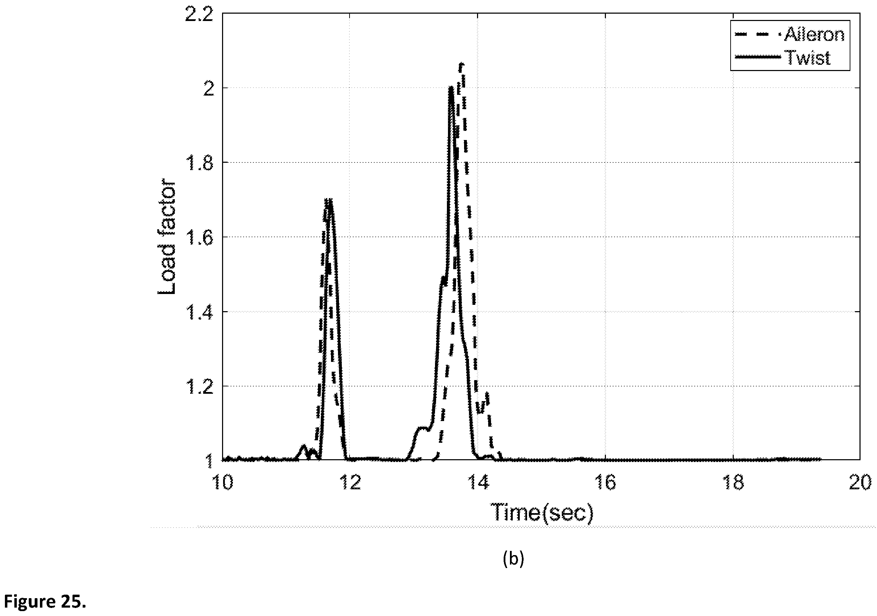

Figure 24 and Figure 25 illustrate the basic roll angle achieved for both morphing and baseline wing configurations. It can be seen that the achieved roll angle for both designs is very similar for number 1 and 2 (Figure 24(a)). Comparing these results with Figure 25(a), similar results were obtained; nevertheless, the variation is less than the 1^{st} and 2^{nd} roll. Overall, results indicated that the morphing concept provides adequate roll moments and performance compared to traditional control surfaces.

Load factors for both the baseline (aileron) and morphing (twist) configurations are presented in Figure 24 and Figure 25. The load factor (n) is defined as the ratio of the lift of the aircraft to its weight (Total weight baseline = 5.698 kg morphing concept = 5.805 kg). This dictates the load factor. It can be seen from Figure 24(b) and Figure 25(b) that the morphing concept produced more lift force than the baseline wing for this particular manoeuvre. Although the overall weight of the morphing wing structure is heavier than the baseline, it performed comparably for these tests.

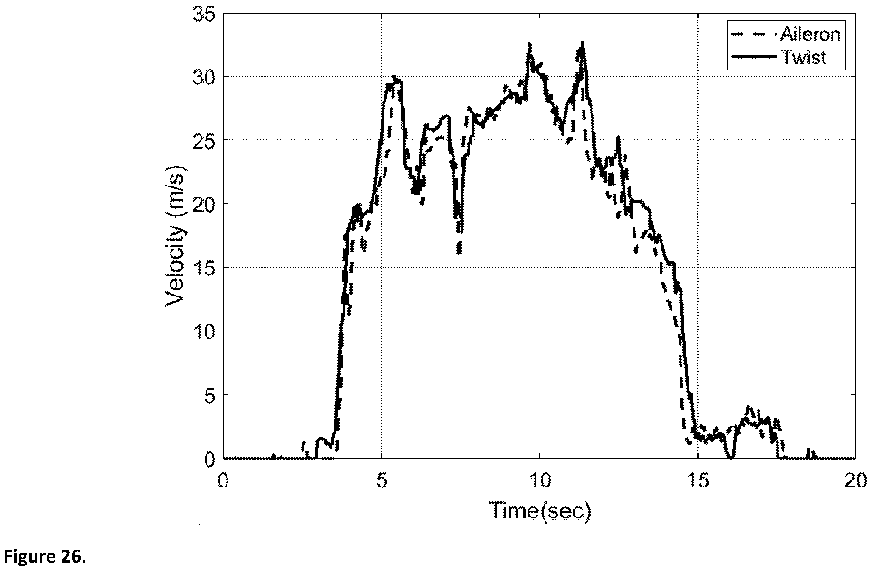

In order to measure the efficiency of the morphing concept at rolling, the velocity was measured during the flight. This would provide some insight into relation drag increase in the turn. The velocity plot for both the morphing and baseline configurations is shown in Figure 26. It can be clearly seen that, during the rotation, a high velocity was achieved for morphing wing configuration, implying less drag production than the baseline (aileron) configuration. According to data, the velocity for the twist wing is 15% higher than the baseline configuration at time=7.5sec.

According to the Pilot (Dr Alvin Gatto):
"Both configurations were able to achieve the basic manoeuvring. However, it was noticeable that the morphing wing enhanced performance without losing excessive velocity profile in the turn".

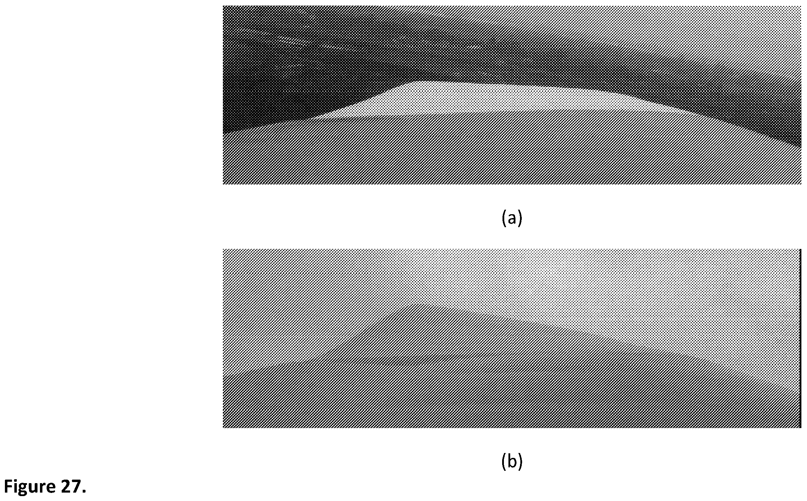

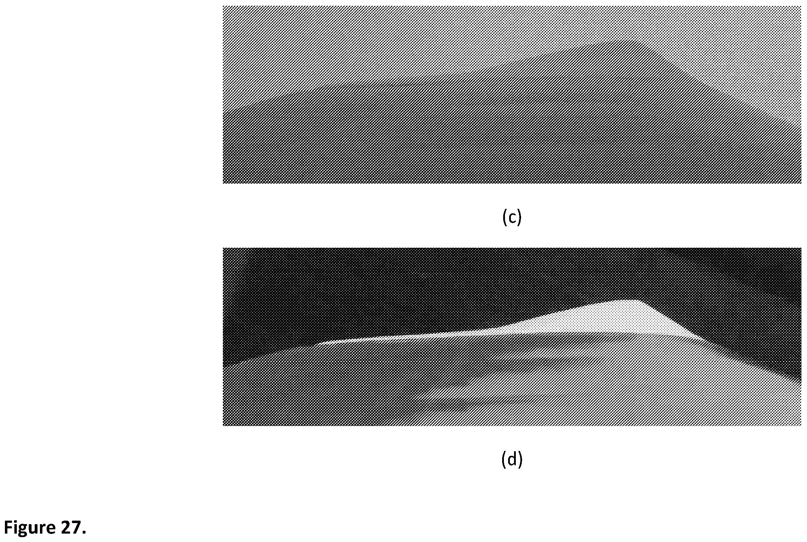

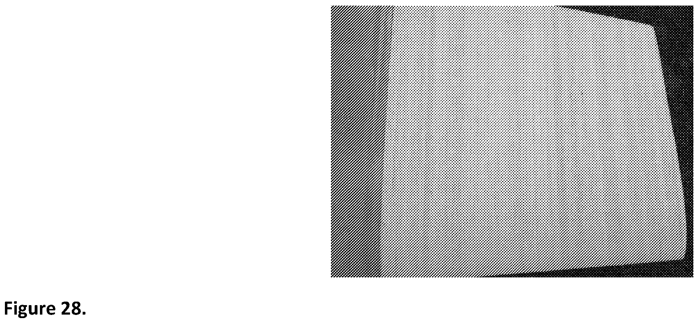

In addition to all this, as is a well-known concept for morphing systems, it is important that skin remain smooth. Figure 28 illustrates the skin of the morphing concept after testing. It was clearly seen that no undue deformation existed and the configuration survived the flight. Further indications of performances can be gained from detailed flight pictures obtained during the test flights via a HD Rc Logger inflight camera (Figure 27). It can be clearly seen that the wash-in and wash-out configurations performed very well with smooth surface changes (Figure 28) with no large undesired structural separations and/or surface wrinkling.

A design of variable twist wings and adaptive skin concepts were described. According to results, the implemented and investigated morphing concept showed adequate aerodynamic efficiency as well as control moment for aircrafts. Moreover, the split rib design illustrates good agreement with numerical analysis (ANSYS). Finally, a morphing design also provided shape changing performance with smooth aerodynamic surface finish. Leading to the design being a viable skin for morphing application.

Further details of embodiments of the invention can be found in Annex 1.

All optional and preferred features and modifications of the described embodiments and dependent claims are usable in all aspects of the invention taught herein. Furthermore, the individual features of the dependent claims, as well as all optional and preferred features and modifications of the described embodiments are combinable and interchangeable with one another.

### References

Abbott I. H. and Von Doenhoff A. E., "Theory of Wing Sections: Including a Summary of Airfoil data," Press, vol. 11, p. 693, 1959.
Ajaj, R.M., Friswell, M.I., Dettmer, W.G., Allegri, G., and Isikveren, A.T., "Conceptual Modelling of an Adaptive Torsion Structure," 52nd AIAA/ASME/ASCE/AHS/ASC Structures, Structural Dynamics and Materials Conference, Denver, Colorado, AIAA-2011-1883,2011.
Amprikidis M and Cooper J, Experimental validation of wing twist control using adaptive internal structures45th AIAA/ASME/ASCE/AHS/ASC Structures, Structural Dynamics and Materials Conference (Palm Springs, CA), 2004.
Barlow, J. B., Rae, W. H., Jr., and Pope, A., Low-Speed Wind Tunnel Testing, 3rd ed., Wiley-Interscience, New York, 1999.
Boutilier, M.S.H., and Yarusevych, S. (2012) "Effects of end plates and blockage on low Re flows over airfoils,"AIAA Journal, Vol. 50, No. 7, pp. 1547-1559.
Bubert EA, Woods BKS, Lee K, Kothera CS, Wereley NM. Design and fabrication of a passive 1d morphing aircraft skin. J Intell Mater Syst Struct 2010;21(17):1699-717.
Cebeci T., Numerical and Physical Aspects of Aerodynamic Flows IV, Springer-Verlag-Berlin Heidelberg GmbH, 1990, pp. 260-270.
Culick, F. E. C., "The Wright Brothers: First Aeronautical Engineers and Test Pilots," AIAA Journal, Vol. 41, No. 6, June 2003, pp. 985- 1006.
Dayyani I, Ziaei-Rad S, Friswell MI. The mechanical behavior of composite corrugated core coated with elastomer for morphing skins. J Compos Mater 2014; 48(13):1623-36.
D. D. Smith, M. H. Lowenberg, D. P. Jones, and M. I. Friswell. "Computational and Experimental Validation of the Active Morphing Wing", Journal of Aircraft, Vol. 51, No. 3 (2014), pp. 925-937.
Esdu S., "Rolling moment derivative , L ξ for plain ailerons at subsonic speeds," August 1988.
Garcia, H., M., Abdulrahim, M., and Lind, R., "Roll Control for a Micro Air Vehicle Using Active Wing Morphing", University of Florida, AIAA paper AIAA-2003-5347, 2003.
Griffin, K.E. and Hopkins, M.A. 1997. "Smart Stiffness for Improved Roll Control," Journal of Aircraft, Engineering Notes, 34(3):445-447.
Horten, W., and Reimar "Toward the theory of Flying Wings," 1984. [Online]. Available: http://www.nurflugel.com/Nurflugel/Horten_Nurflugels/horten_nurflugels.html. [Accessed: 08-Feb-2016].
Houghton E. L. and Carpenter P. W., Aerodynamics for engineering students, Butterworth-Heinemann, 5th ed., 2003, pp.373-485.
Jha K. and Kudva J. N., "Morphing aircraft concepts, classifications, and challenges," in Industrial and Commercial Applications of Smart Structures Technologies, vol. 5388, pp. 213- 224, March 2004.
Khot N. S., J. V. Zweber, D. E. Veley, H. -Oslash, z, and F. E. Eastep. "Flexible Composite Wing with Internal Actuation for Roll Maneuver", Journal of Aircraft, Vol. 39, No. 4 (2002), pp. 521-527.
Khot N. S., K. Appa, and F. E. Eastep. "Optimization of Flexible Wing Without Ailerons for Rolling Maneuver", Journal of Aircraft, Vol. 37, No. 5 (2000), pp.
Kaygan, E., Gatto, A. (2014), 'Investigation of Adaptable Winglets for Improved UAV Control and Performance', World Academy of Science, Engineering and Technology, International Science Index 91, International Journal of Mechanical, Aerospace, Industrial and Mechatronics Engineering, 8(7), 1289 - 1294.
Kaygan, E., Gatto, A. (2015), 'Computational Analysis of Adaptable Winglets for Improved Morphing Aircraft Performance', World Academy of Science, Engineering and Technology, International Science Index 103, International Journal of Mechanical, Aerospace, Industrial, Mechatronic and Manufacturing Engineering, 9(7), 1069 - 1075.
Majji M, Rediniotis O and Junkins J, Design of a morphing wing: modeling and experiments AIAA Atmospheric Flight Mechanics Conference and Exhibit (Hilton Head, SC), 2007.
McRuer D. and Graham D., "Flight control century: triumphs of the systems approach," Journal of Guidance, Control, and Dynamics, vol. 27, no. 2, pp. 161-173, 2004.
Mottram J. T. and C. T. Shaw, Using Finite Elements in Mechanical Design, McGraw-Hill, 1996.
Mueller T J and Burns T F 1982 Experimental Studies of the Eppler 61 Airfoil at Low Reynolds Numbers AIAA Paper 82-0345.
Olympio KR, Gandhi F, Asheghian L, Kudva J. Design of a flexible skin for a shear morphing wing. J Intell Mater Syst Struct 2010;21(17):1755-70.
Phillips,W. F., "Lifting-Line Analysis for Twisted Wings and Washout-Optimized Wings," Journal of Aircraft, Vol. 41, No. 1, 2004a, pp. 128-136.
Phillips, W. F., Alley, N. R., and Goodrich, W. D., "Lifting-Line Analysis of Roll Control and Variable Twist," Journal of Aircraft, Vol. 41, No. 5, 2004b, pp. 1169-1176.
Prandtl, L., "Applications of Modern Hydrodynamics to Aeronautics,"NACA TR-116, June 1921.
Roelof Vos, Zafer Gurdal, and Mostafa Abdalla. "Mechanism for Warp-Controlled Twist of a Morphing Wing", Journal of Aircraft, Vol. 47, No. 2 (2010), pp. 450-457.
Saffman, P. G.,Vortex Dynamics, Cambridge Univ. Press, Cambridge, England, U.K., 1992, pp. 46-48.
Sadraey M., Aircraft Design: A Systems Engineering Approach, Chapter 12 Design of Control Surfaces. Wiley Publications, 2012.
Shaw A. D, I Dayyani, and M. I. Friswel, Optimisation of composite corrugated skins for buckling in morphing aircraft, Composite Structures 2015, 119, 227-237.
Shortal J. A. and R. C. P., "Wind Tunnel Investigations of wings with ordinary ailerons and full span external airfoil flaps," NACA Report 603, Langley Field, VA., 1937.
Sofia a. Y. N., S. a. Meguid, K. T. Tan, and W. K. Yeo, "Shape morphing of aircraft wing: Status and challenges," Mater. Des., vol. 31, no. 3, pp. 1284-1292, Mar. 2010.
Thill, C., Etches J., Bond, I., Potter, K. and Weaver, P. 2008. "Morphing Skins," The Aeronautical Journal, 112:117_139.
Thill C, Etches JA, Bond IP, Potter KD, Weaver PM. Composite corrugated structures for morphing wing skin applications. Smart Mater Struct 2010;19(12):124009.
Warren F. Phillips, Spencer R. Fugal, and Robert E. Spall. "Minimizing Induced Drag with Wing Twist, Computational-Fluid-Dynamics Validation", Journal of Aircraft, Vol. 43, No. 2 (2006), pp. 437-444.
C. J. Wenzinger, "Wind Tunnel Investigations of aodinary and split flaps on airfoils of different profile," NACA Report 554, Langley Field, VA, 1935.
Yokozeki T, Takeda S, Ogasawara T, Ishikawa T. Mechanical properties of corrugated composites for candidate materials of flexible wing structures. Compos Part A: 2006;37(10):1578-86.

### ANNEX 1

### CHAPTER 1 BACKGROUND

Aircraft control through the use of traditional discrete control surfaces has achieved widespread success over many years [1]. These traditional methods, widely accepted on the vast majority of aircraft, however can be detrimental to an aircraft aerodynamic performance as they rely on hinged control surfaces which can generate significant flow separation when actuated fully. To meet the ever increasing demands for more efficient, robust, and cost effective designs, there is an argument that conventional control surface methodologies need to be re-examined, in favour of more "morphing" technologies and techniques.

Morphing technologies typically revolve around adaptive geometry structures and mechanisms and are very attractive to aircraft designers as they can provide substantial benefits to aircraft performance. The concept or 'morphing' however is not new. Wing warping techniques were employed by the Wright Brothers to control the first powered, heavier than air, aircraft through wing twist via subtended cables [2]. However, even with the substantial research efforts over the last few decades morphing concepts still suffer significant challenges. These include added weight, a compliant skin, and/or overall complexity. Jha and Kudva [3] summarised some of the technical challenges and classifications of morphing aircraft, with the most significant challenges tending to be in the structural design of the concepts and mechanisms employed.

A critical component of a compliant morphing structure is the morphing skin, which has to be flexible for actuation, but also rigid to allow favourable aerodynamic performance to be obtained. Some prior literature on morphing skins, involve flexible skins such as FMC [4], [5], elastomeric skin[6], and corrugated skin [7], [8], however none have yet to achieve widespread use. This problem is particularly difficult as there are conflicting requirements. The skin needs be capable of transferring aerodynamic loads and be flexible in order to move and/or change shape. These requirements are particularly challenging as the surface should also remain smooth and possess a low rate wrinkle at the location of moveable mechanism. In the view of these challenges this thesis presents concept for active wing twist with an adaptive skin for morphing aircraft control and performance.

### CHAPTER 2

### 2.1 Introduction

Current interest in morphing vehicles is accelerating with the development of advanced materials, sensors and actuators. Although this area is fairly new, the applications were developed many years ago. This chapter seeks to succinctly map out the morphing applications by highlighting the latest research as well as presenting the historical connections of adaptive aerial vehicles. In this framework, **Section 2.2** and **2.3** introduce the concept of morphing vehicles and the research programme. The latest research related to morphing applications and skin research is presented in **Section 2.4 - 2.8** respectively. A brief summary concludes the chapter in **Section** Error! Reference source not found..

### 2.2 History of Morphing Aircraft

A morphing aircraft is a multi-role flight vehicle that changes the configuration of its geometry during flight to adapt to different flight conditions. Morphing technologies typically revolve around adaptive geometry structures and mechanisms and are very attractive to aircraft designers as they can provide substantial benefits to aircraft performance. The concept or 'morphing' however is not new. Wing warping techniques were employed in 1903 by the first aeronautical engineers, 'The Wright Brothers', to control the first powered, heavier than air, aircraft through a wing twist 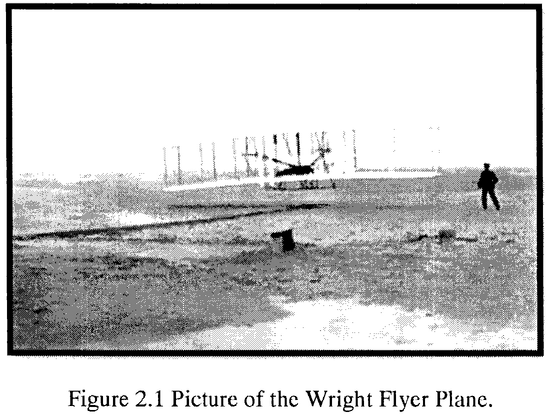 via subtended cables, as shown in Figure 2.1 [2]. The Wright Brothers paid attention to aerodynamics, control systems, airframe structures, and propulsion systems in order to achieve this revolutionary concept. However this technique is no longer in widespread use. Nowadays ailerons, rudders, and elevators provide primary stability and control for air vehicles. This current traditional methodology, widely accepted on the vast majority today's operational of aircraft, can however, be detrimental to an aircraft's aerodynamic performance principally as they rely on hinged control surfaces that can generate significant flow separation when actuated fully. To meet the ever increasing demand for more efficient, robust and cost effective designs, there is an argument that conventional control surface methodologies need to be re-examined, in favour of more "morphing" technologies and techniques. Jha et al. [3] summarized how using morphing can affect an aircraft's flight performance. As shown in **Figure 2.2****,** to achieve efficiency in high-speed flight, the aspect ratio of the wing should be low and the swept angle should be high. In contrast to high-speed flight, low speed flight requires a low sweep angle as well as high aspect ratio wings. In order to have the same aircraft fly diversified missions the aircraft requires large configuration changes representing significant challenges to aircraft through morphing aircraft technology.

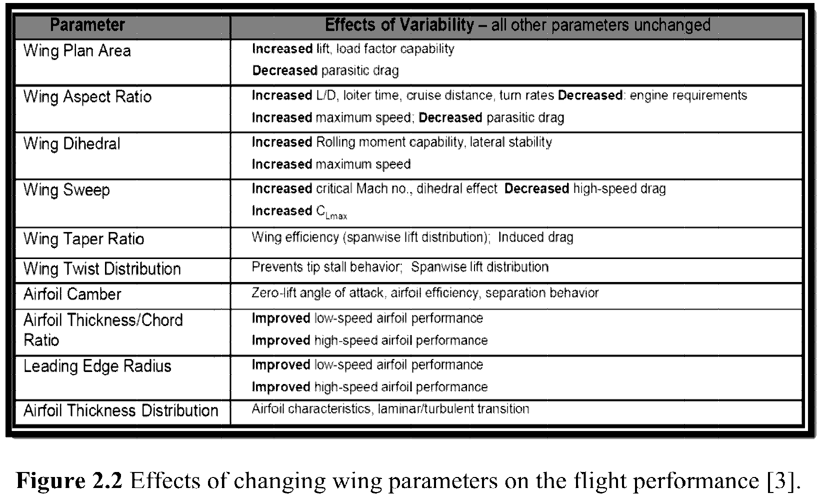

Over the years, various shape changing ideas have been used by several researchers. The numerous concepts have been categorized by Jha et al. [3] as shown in **Figure 2****.****3****.** It can clearly be seen that the most achievable techniques are applied 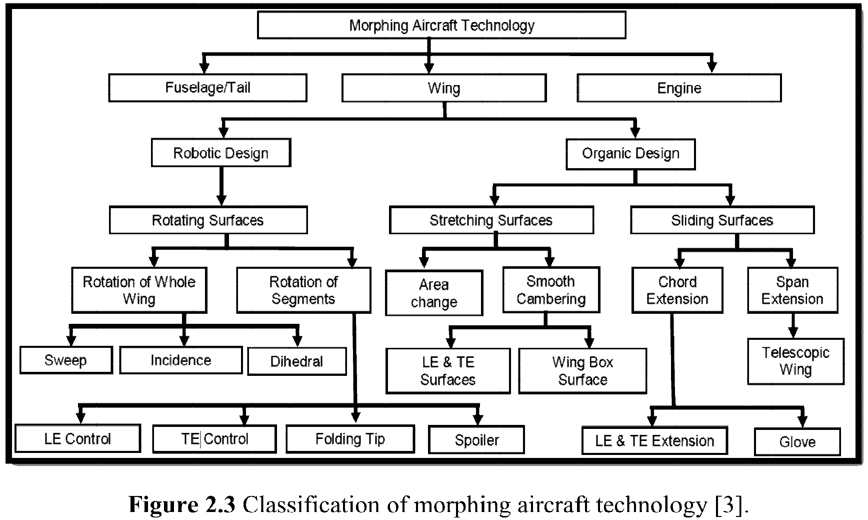 to aircraft wings, principally because wings are one of most effective benefit-producing parts of the aircraft; there is a large influence on aircraft performance. As can be seen, holistically, the design of the variable wing parts is principally done in two ways: Through robotic or organic design. In robotic design, designers consider rotating the wings and some parts of the wings rather than changing the whole wing. For instance, they change the sweep and incidence angle of the wing, use folding wing tips, spoiler mechanisms, and leading and trailing edge control surfaces. In organic design, wings are organized to change their shape (internal and external) and can be classified into two groups: stretching surfaces and the sliding surfaces. In the stretching surface group, flexible wings aim to stretch the surface to increase the wing area as needed. In the sliding wing group, the wings can be moved over other surfaces. The most extensive example of sliding surfaces is telescopic wings. Whole wings are split into two wings in a span-wise direction with one wing sliding inside the other. A glove wing is another common example with an increase or decrease of the chord length of an airplane. In the following sections, examples of early morphing aircrafts will be presented.

Variable camber wing, telescopic wing and variable incidence wings are other common examples of morphing concepts. These configurations were first proposed in the United States in 1916. The first and most significant project was done by H. F. Parker in 1920 [9]. Variable camber wing concepts were used by Parker for bi-planes and tri-planes. The goal of the project was to obtain additional lift force in order to provide easy landing and taking off. In Parker's design, spars were located at the leading edge and trailing edge positioned 2/3 the chord rearward. The front of the aerofoil unit was flexible and the rear was rigid with the ribs allowed to slide over the rear spar. The change in camber of the wing was produced automatically by the load bending the flexible section of the airfoil and produces more lift force. During take-off or under high speed conditions, the airfoil was configured in such a way that it was aligned with the airstream, with essentially no camber as shown in **Figure 2****.****4****.** The wind tunnel and even the real flight-testing stages were completed successfully, but this design was not taken to the fabrication stage, due to added risk of increased bending at a high angle of attack.

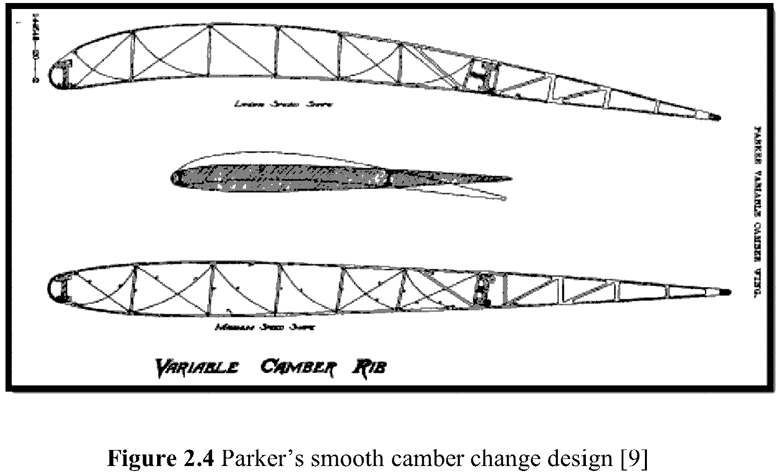

Another wing altering concept was reported by V. J. Burnelli [10] of the Uppercu Burnelli Aircraft Corporation. As illustrated in **Figure 2.5 (a),** they designed the Burnelli GX-3 aircraft with a variable camber wing in 1929 [10]. In this design, the wings were mounted on the fuselage midway between the spars. Both edges were able to move outwards and downwards in order to alter the camber of the wing. This configuration was capable of taking off at a maximum speed of 200 km/h within very short distances. The advantage of this design was that it reduced the movement of the centre of pressure. In order to minimize the movement of the centre of pressure, the mechanism was designed in such a way that it provided higher movement in the leading edge than in the trailing edge [3].

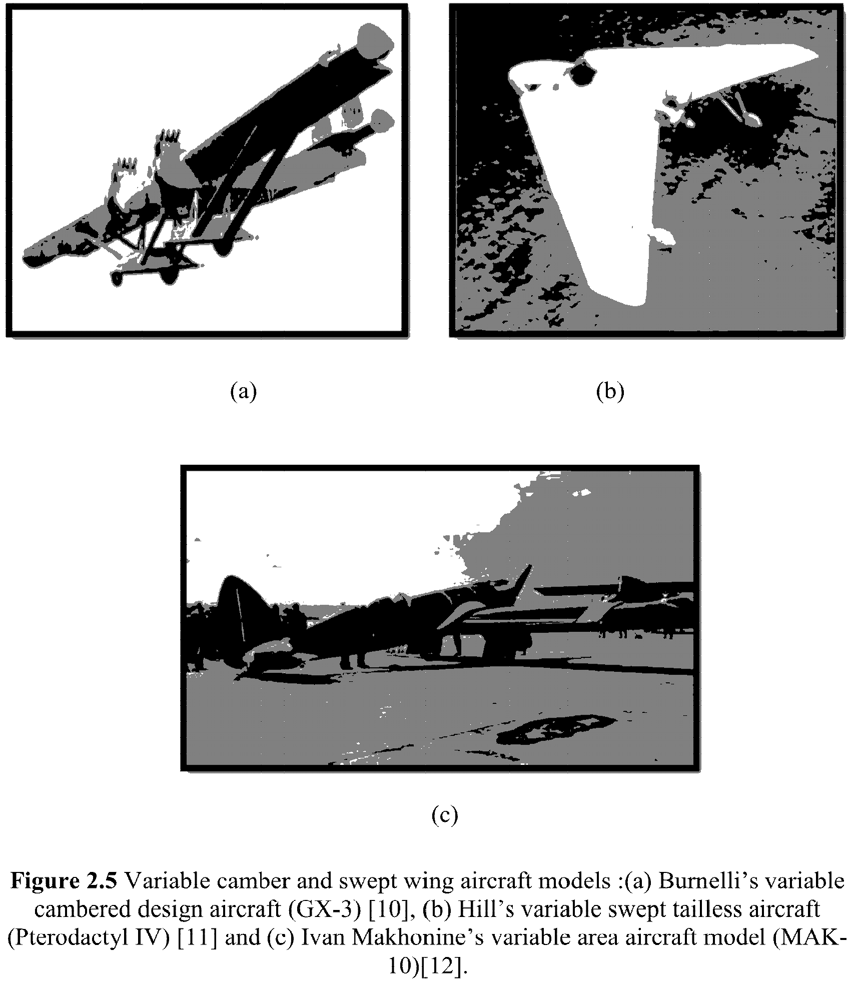

Another successful design was developed by Hill [11]. He designed the Pterodactyl IV tailless monoplane in 1931 shown in **Figure 2.5 (b).** In this design, variable sweep was applied to the wings through an angular range of 4.75°. During the same period, Ivan Makhoninc designed the MAK-10 aircraft **(Figure 2**.**5 (c)** [12]. The purpose of this research was to investigate the possibility of reducing the surface area of a wing in flight by deploying telescopic wings. Another aim was to improve the cruise performance by reducing the induced drag. This was principally accomplished by reducing the span loading, (ratio of the aircraft's weight to wing span) [13]. The Mak-10 successfully passed flight tests in 1931 with wing area and wing span changes in from 31 to 33 square metres and 13 to 21 metres demonstrated. With the telescopic wing retracted, the maximum speed was 186 mph with 155 mph achieved when the wings were fully extended. This started the myriad of telescopic wings to design thereafter.

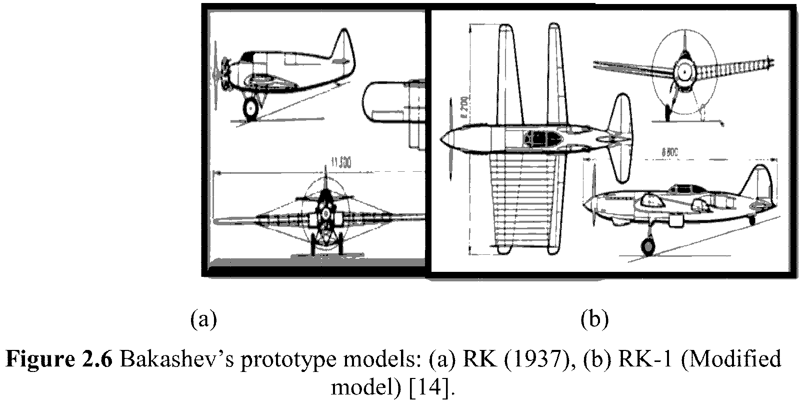

In 1937, the new and intriguing design was reported by G. I. Bakashaev [14] . This telescopic wing named the RK and shown in **Figure 2.6 (a)** used a mechanism consisting of six chord wings that was able to spread out to two thirds of the wing length on each side. To extend or retract the telescopic wings, steel wires were used [14]. Four years later, Bakashaev improved his design by modifying the steel wires (new design was named RK-1 and shown in **Figure 2.6 (b)).** For this design, a telescopic glove was used to alter the wings and the wings were extended from the fuselage to the full wingspan. The wing area of the RK-1 could change by 135%, whereas Bakashaev's first design (RK) could only change by 44%.

In 1949, the XF-91-Thundcrccptor aircraft was developed by the Republic Aircraft Corporation. This was the first aircraft to use variable incidence wings, as shown in **Figure 2.7 (a)** [15]. These incidence wings' could be varied from ¥ = -2° - 5.65° with a maximum speed of 984 mph, the endurance of the aircraft was very short (25 minutes) and together with control and flight mechanism challenges did not reach the production stage. In 1955, the incident wing configuration was improved by Chance Vought; the new design was named the F-8 Crusader, as shown in **Figure 2.7 (b)** [3]. The F-8 Crusader could rotate its wings from r̋ = -2° to 7°. Together with this capability, the F-8 Crusader could also lower its ailerons to improve slow speed 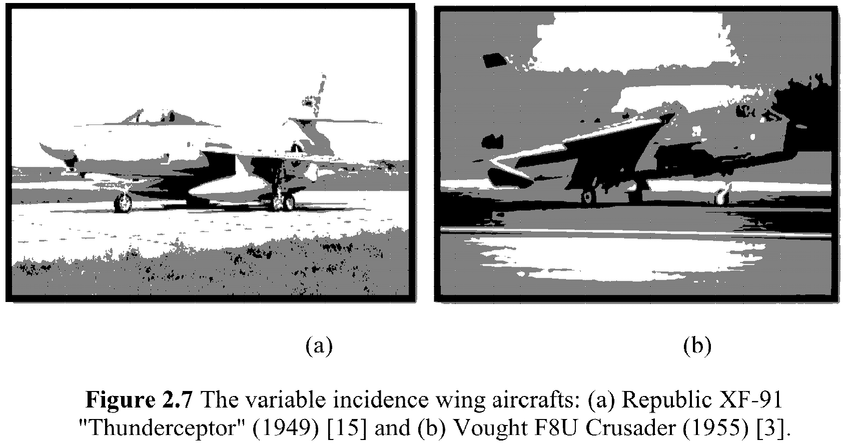 performance to enable a safe landing.

There is little doubt that the most impressive morphing application or the best planform changing design is the variable sweep wing. The first aircraft was made by German Messerschmitt [3]. He developed the P-1101 aircraft in 1944, as shown in **Figure 2.8** (a). Sweep angles could change from A = 35° to 45° to adapt to different flight conditions.

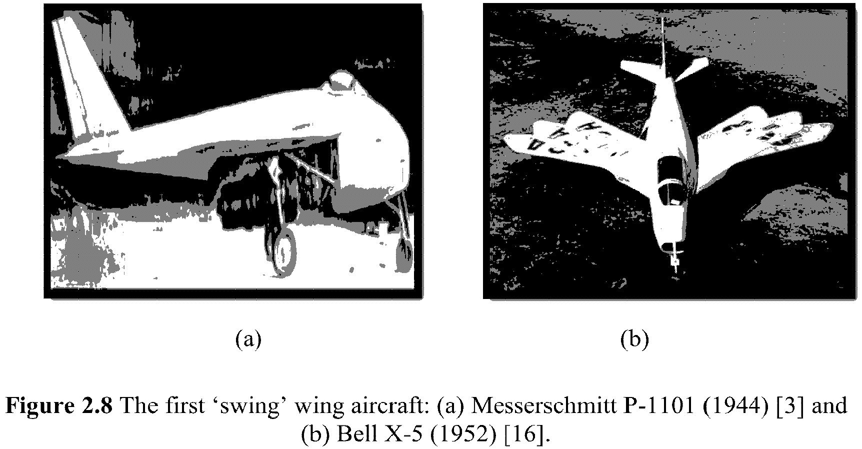

In 1952, the Bell Aircraft Company designed another variable sweep wing aircraft, the Bell X-5 (shown in **Figure 2.8 (b)**) [16]. It was the first aircraft that was capable of large scale changes in sweep angle, from 20° to 60°. From tests, the X-5 was found to decrease drag by sweeping the wings backwards for high speed flight and with low speed performance through improved for take-off and landing with the wings fully extended. These designs faced challenges both the aircraft needed additional mechanisms to alter the planform, which were costly heavy. Furthermore, fuel consumption was high because of the additional weight. In addition to these issues, another significant problem was that while the aircraft was extending its sweep wings, the location of the centre of gravity changed, making it difficult to control the aircraft. The solution to the aerodynamic centre problem was solved by NACA Engineering. Their idea was to develop a new mechanism that helped to move the pivot points of the wings outside the fuselage to minimise aerodynamic centre travel by redistributing the longitudinal lift distribution.

In 1952, Grumman developed a new aircraft with sweep wings, named the XF10F Jaguar (**Figure 2.9 (a)**) [17], his design achieved short landing and taking off distances with the wing pivot placed near the wing root to reduce the wave drag. It worked effectively, but when the aircraft flew into the supersonic, its stability and control became difficult. For this reason, a limited number of XF10F Jaguars were built and the programme was eventually stopped. However, improvements in the swing wing technology continued and in 1964 the most impressive morphing design was created by General Dynamics. They created the F-111 Aardvark for Air the US Force purposes (**Figure 2.9 (b)**) [18]. The F-111 Aardvark could sweep its wings from A = 16° to 72.5° whereas other designs, such as that shown in **Figure 2.9 (a)** could only manage a maximum of A = 20° to 60° [17]. Landing and take-off performances were improved by changing sweep angle. It could land or take-off within 609.6 metres when the wings were fully expanded. Although the F-111 one of the most successful morphing aircraft, not many were built due to structural problems, engine surge, weight, and the lack of stability and control. For example, 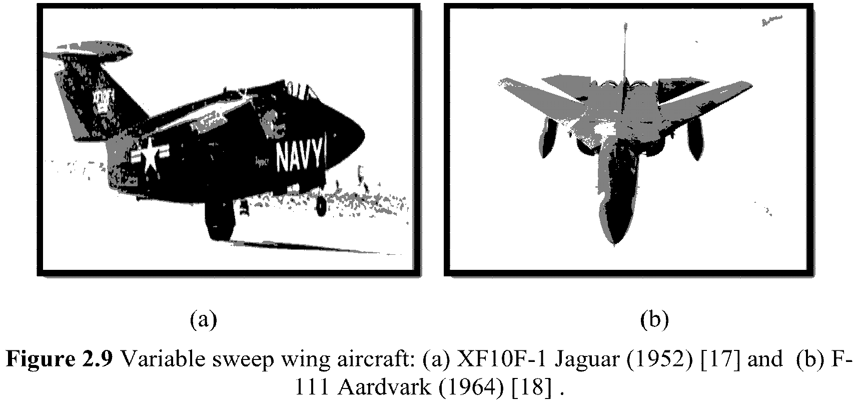 when the F-111 was in high speed mode, because of the inboard pivot points, the trim drag was quite high. Later on, in 1970, this problem was solved by moving the pivot points outboard on the Grumman F-14 Tomcat aircraft (as shown in **Figure 2****.****10**) [19].

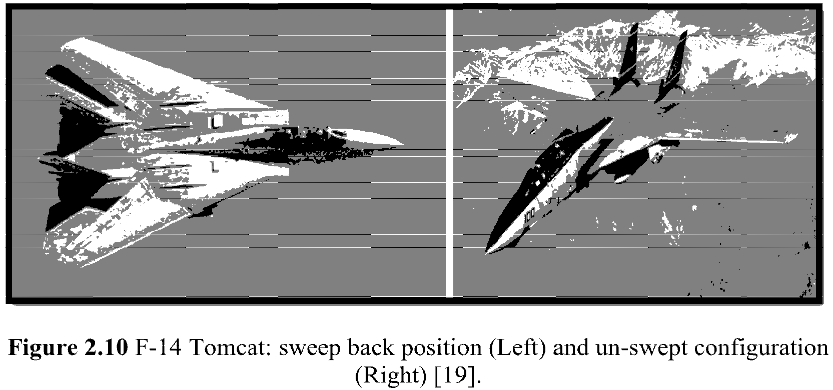

Another planform change reloaded to morphing aircraft is dihedral angle. In 1979, aircraft designers built a space plane named the Russian MiG 105-11 [20]. This plane could change the dihedral angle of its wing while cruising. A rotation mechanism was applied above the horizontal stabilizer and it could be set to Γ = 25° **(Figure 2.11).** A total of eight flights were performed, resulting in a hard landing and the write-off of the aircraft. Although sufficient aerodynamic data gathered at subsonic flight, it was decided to stop all development of the design.

Up to the late 70's, several additional of planform changing aircraft were developed. However, most of them were not widely produced due to added weight, compliance skin, and/or overall complexity.

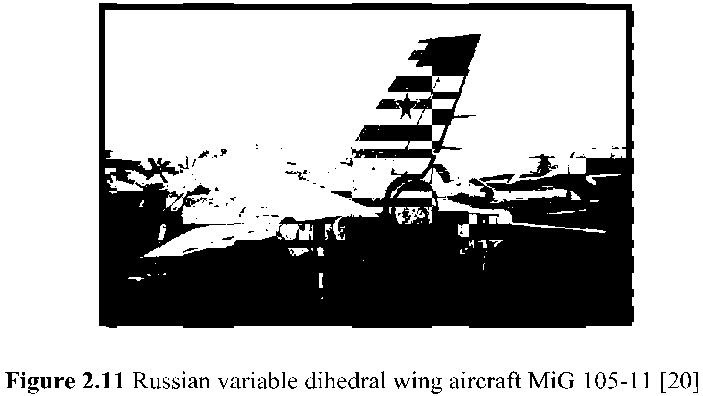

### 2.3 Dedicated Morphing Research Programs

From the early 80's, designers worked to produce airplanes capable of withstanding higher speeds and greater aerodynamic loads. This resulted in configurations with semi-monocoque structures in which the loads were carried partly by the frame and stringers, and partly by the skin. While flying these aircraft, pilots soon discovered a wide variety of aeroelastic problems including, among others, wing flutter, divergence, buffeting, and control reversal. The designers responded by increasing the wing stiffness, but this also increased the structural weight. They then often opted to reduce the wingspan, increase the airfoil thickness, and acccpt reduced aerodynamic performance in exchange for increased speed [21]. With the advent of smart materials in the early 80's, several research programmes were proposed with some beginning to further understand the potential for adaptive aircraft technologies. The following sub-sections consider these research programmes.

### 2.3.1 Mission Adaptive Wing (MAW) Program

The Mission Adaptive Wing Program was a morphing research programme that began in 1980 [18], [22], [23] [24]. With conventional control surfaces creating discontinuous curvatures, which increase drag and the aim of the programme was to reduce drag by developing a smooth camber changing mechanism for aircraft wings. During the period of the MAW programme, a variable wing was installed on an F-111 aircraft operated by the United States Air Force Research Laboratory **(Figure 2.12)** [24].

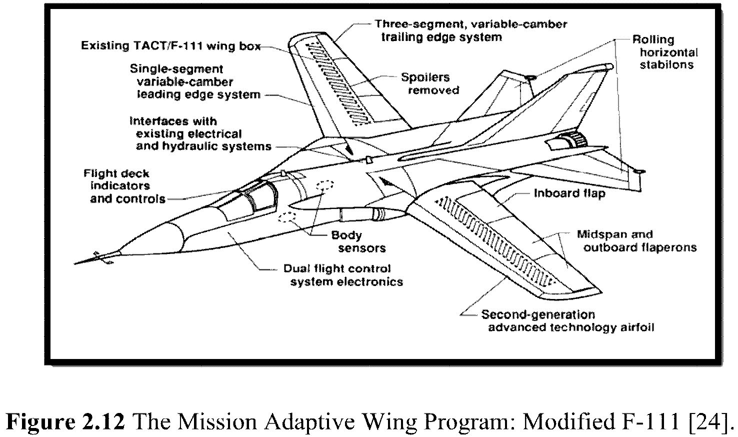

The wings consisted of internal mechanisms and hydraulic actuators, which allowed for varying the wing camber, and covered by flexible fibre-glass materials. To control the camber change, eight wing segments were used (three segments for the trailing edges and a single segment for the leading edge). A digital flight control system was also used to perform automatic wing shape changes according to flight circumstances. The experimental and real flight tests were carried out by the National Aeronautics and Space and Administration (NASA), Dryden Flight Research Center. The modified F-111 underwent several flight tests and results were reported between 1985 and 1988. Due to the smoothness of the resulting wing surfacc, the drag was found to decrease by approximately 7% in sweep back condition with a revolution in around 20% cruise. Although the variable camber wing provided advantages for the F-111 aircraft model, the programme was terminated in 1988, due to actuator size requirements.

### 2.3.2 Active Aero-elastic Wing (AAW) Program

The Active Aero-elastic Program was established in 1996 by the US Air Force Research Laboratory Wright Patterson Air Force Base, NASA Dryden Flight Research Center and Boeing Phantom Works [21], [25], [26]. The aim of the programme was to show the benefits of an aero-elastic wing through the use of multiple leading and trailing-edge control surfaces activated by a digital flight control system on F/A-18 aircraft. The new panels were designed and constructed of a thinner composite skin with a honeycomb structure in contrast to previous F/A-18's. The flaps were also modified and they could change from 10° to 34° **(Figure 2.13).** To achieve this level of deflection angle, a hydraulic drive system was used. Deflection of the inboard and outboard flaps was found to increase the roll control and aerodynamic performance of an aircraft as well as reduce the drag force.

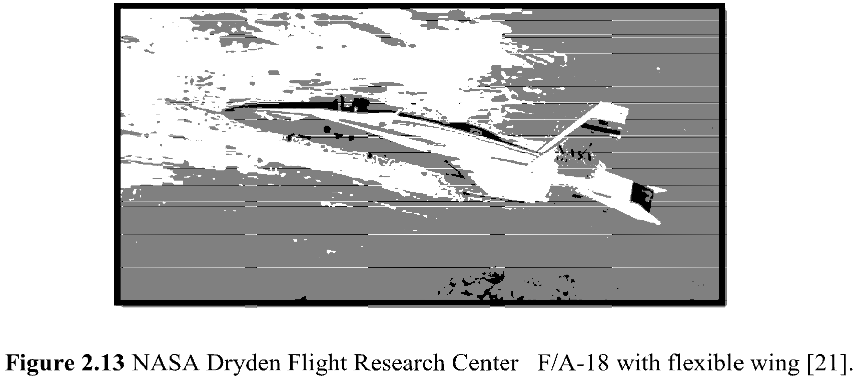

### 2.3.3 Smart Wing Program

Earlier programmes were terminated due to additional components being needed for structural stiffness as well as to actuate the wings, which resulted in increasing overall weight. After advances in aerospace materials made shape changing concepts more realistic the Smart Wing Program was initiated in 1995 by the Defence Advanced Research Projects Agency (DARPA), NASA, Air Force Research Laboratory (AFRL), Langley Research Center, and Northrop Grumman Corporation (NGC). The goal of the programme was to design and analyse newly integrated smart wing materials in order to improve the aerodynamic and aero-elastic performance of a military aircraft [27], [28]. The programme was divided into two phases. Phase 1 aimed to develop a mechanism to replace the traditional control surfaces using SMA wires and in Phase 2, SMA-actuated, hingeless, smoothly contoured, flexible leading and trailing edge control surfaces were integrated into a tailless aircraft model. Nickel Titanium shape memory alloys were used to actuate trailing edge control surfaces and to provide smooth contoured shape control **(Figure 2.14).** From the wind tunnel test results, sufficient roll moments (17% at 15 degree of deflection), as well as significant improvements in lift force generation were observed (8- 12%) compared to the untwisted conventional wing.

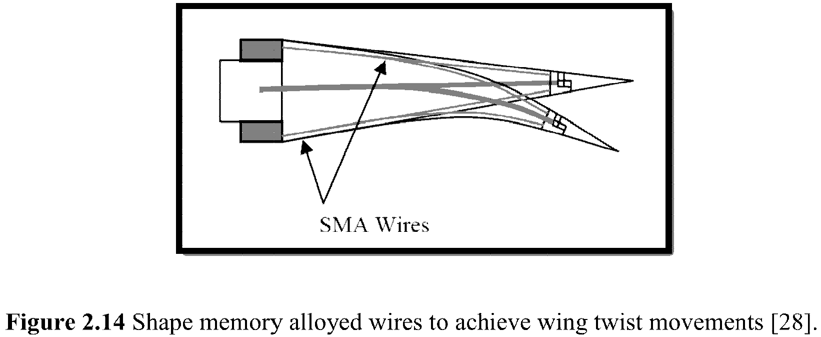

### 2.3.4 NASA's Morphing Aircraft Program 1998-2030

In 1998, NASA's Morphing Aircraft Program aimed to investigate new shape changing morphing aircraft using adaptive materials, micro control devices, and also biologically inspired material technologies to enhance the manoeuvrability and aerodynamic performance of the aircraft. The research programme will continue to develop new aircraft structures using updated materials until 2030. As can be seen from **Figure 2****.****15****,** NASA's morphing aircraft concept will be able to sweep back its wings to provide a supersonic speed capability as well as reduce drag force. The wing area could also be increased to get more lift for take-off and landing. Feather like control surfaces such as adaptable winglets would also provide more manoeuvrability with additional control force and greater safety during flight.

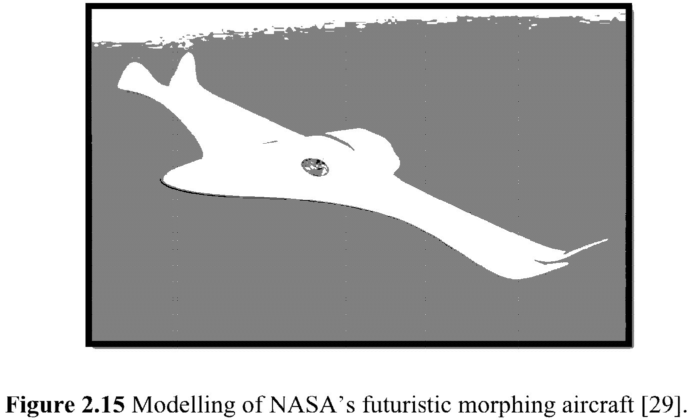

### 2.3.5 DARPA's Morphing Aircraft Structure Program 2002

Similar to NASA's Morphing Aircraft Program, DARPA's Morphing Aircraft Structure Program is currently engaged in large-scale coordinated efforts to develop morphing flight vehicles capable of drastic shape change in flight. This programme, which is sponsored by NextGen Aeronautics, Lockhccd Martin and Raytheon Missile System, started in 2002 [30].

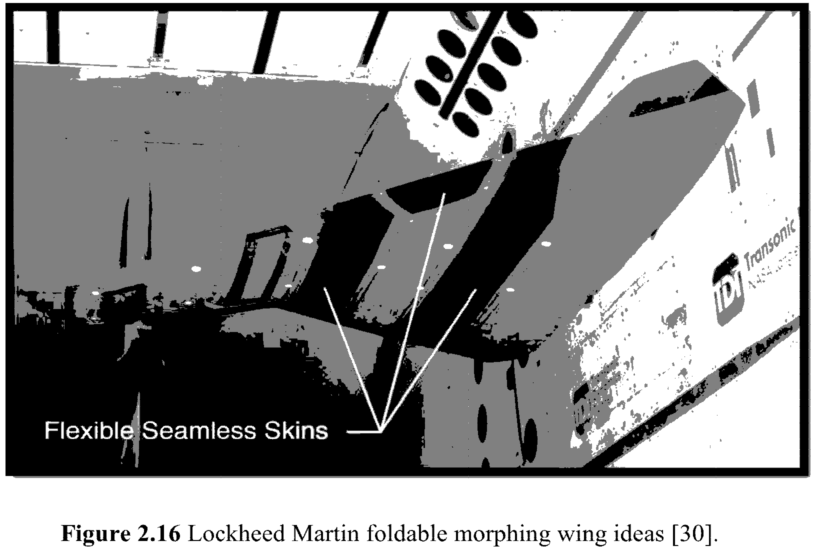

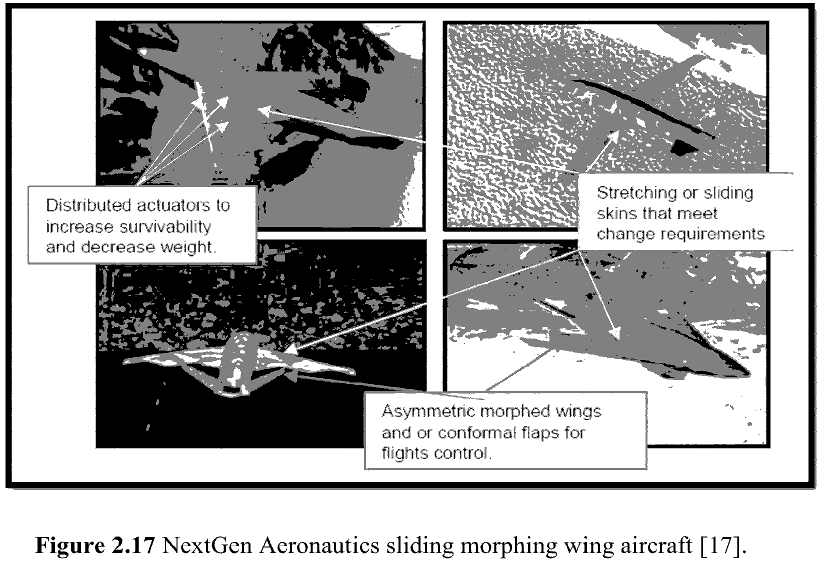

One of the most interesting morphing ideas was developed by the Lockheed Martin Company. Their ideas relate to folding wing concepts, **(Figure 2.16).** The initial design was completed using seamless skin and shape memory polymers. However, due to an electrical resistive heating problem, silicon based reinforced materials were used for the skin. To fold the wing structure, electric actuators were placed inside the wing model with a vacuum pump connected to the fold region to ensure that the elastomer material on the top surfaces did not bunch as the wing folded [31].

NextGen Aeronautics Corporation also developed the morphing wing concept named 'bat-wing', **(Figure 2.17).** The scope of this design was to achieve specific planform geometries based on the instantaneous mission requirements to move between five different wing planforms and create wing planform changes in area, span, chord and sweep that vary by 51%, 36%, 110%, and 30°, respectively [32] [33]. To achieve these variable wing platforms, a stretchable flexible cover skin was used with hydraulic actuators to change the wing platform. A wind tunnel testing programme was successfully completed and it showed that the morphing wing could move smoothly from one position to another [31]. Finally, although the MAS programme was completed successfully, the requirement to adapt those mechanisms to a real flight environment were difficult to fulfil, due to the weight restrictions, installation cost, complexity, higher torque requirements as well as the wrinkling formed on the skin.

### 2.4 Challenges of Adaptive Aircraft Configurations

It can be seen from the previous sections that most morphing aircraft designs as well as research programmes have attempted to create actually adaptive configured aircraft. However, even with the substantial research efforts over the last few decades, morphing concepts still face significant challenges. These include added weight, costs, skin, and/or complexity. Jha and Sofia et al. [3], [34] summarized some of the technical challenges of morphing aircraft. The most significant challenges tend to be in the structural design of the concepts, morphing the skin, and the mechanisms employed. These challenges are depicted in **Figure 2****.****18** with the main challenges discussed thereafter.

As far as past research is concerned, morphing aircraft involves various flight conditions unlike traditional fixed wing aircraft. The benefits of different flight configurations were proved by Joshi et al. [35]. In this regard, the design strategy is the first challenging step in the creation of adaptive shape changing aircraft. At this stage, in order to adapt to different flight regimes, designers need to optimize the geometry to get the full benefits in flight; reversible changes are also necessary. Martin and Roth et al. [36][37] have applied demonstrated such optimization techniques on morphing aircraft geometry. In order to obtain the best possible conditions for morphing aircraft, several shapes must be considered, which results in a large running time and memory allocation. Due to the large number of geometric variables, [38] used a genetic algorithm and, similar to that, aero-elastic analysing tools were presented by Breuker et al.[39]. They developed numerical codes to analyse the aeroelasticity of a morphing aircraft. The validation of the codes was tested on a sweep wing configuration with results showing that the sweep wing configuration improved the aerodynamic performance of the aircraft (∼3% at 55 degree of sweep). Aerodynamic centre and centre of gravity movements due to the varying aircraft geometry remain challenges for these configurations.

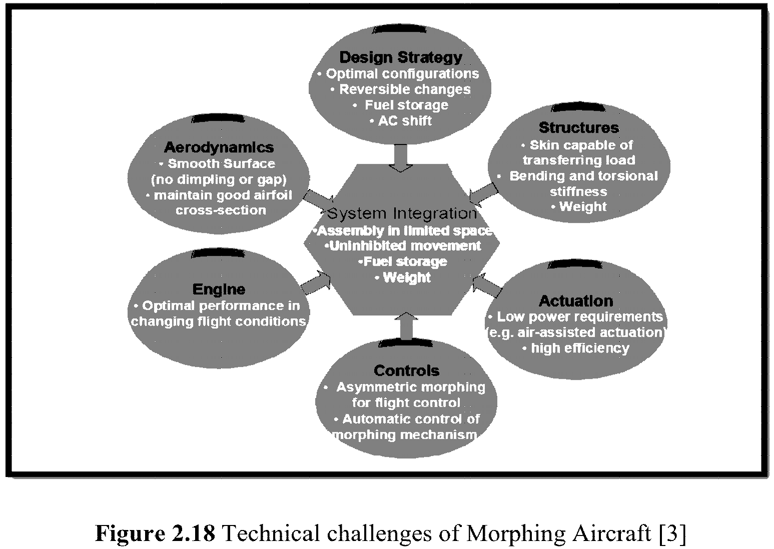

Another challenge facing morphing aircraft design is the skin (for a detailed survey of morphing skin applications see **Section 2.8**). Aircraft skin plays a significant role in aerodynamic performance; therefore morphing aircraft skin should be capable of transferring loads, and should also be flexible in order to retract/extend, or adapt. Furthermore, the surface should remain smooth surface with low wrinkle rate at all locations. Thill et al. [40] offers potential solutions for flexible morphing skins. According to his article, the flexibility and stiffness problems in morphing air vehicles can be solved by using novel materials such as composite corrugated structures.

Actuation also seems to be a unique challenge in the morphing area. In contrast to conventional aircraft, supplementary high power actuation is required to maintain the shape change. Besides that, the actuator must be efficient and light. Therefore, large durable actuators are needed for the design, but space allocation and overall weight problem must be considered by designers. Many studies have aimed to reduce this weight, increase actuation efficiency, and reduce the size of the actuations [3] [41].

Flight Control is another hurdle for morphing configurations. Internal control systems are needed to organize the shape altering process, which involves coordinating sensors, braking systems, and actuators [17]. To do so, novel algorithms and programmable devices are required to ensure that the structure altering system sends the right signal to the actuators. Likewise, the control systems should ideally work with a changing frequency range(low or high frequency operations) in respect to planform altering configurations [42].

Despite the drawbacks of morphing applications, enormous advantages can be gained by using variable shape changing concepts. The best examples of the benefits of morphing shape changing aircraft have been indicated by Butt [43] . In this research, supersonic air to air fighter (AAF) aircraft modelling was utilized with the aim of showing the fuel consumption and required actuator energy for morphing aircraft in contrast with fixed wing aircraft. **Figure 2****.****19** illustrates the mission segments for AAF aircraft. Morphing wing concepts were considered and the aircraft wings were allowed to vary their aspect ratio, wing sweep, and tip and root length geometry. The results show that no improvements can be gained in order to decrease fuel consumption when morphing aircraft are seven times heavier than fixed wing aircraft. Also 100% of the power is needed to run the actuators. However, if the morphing aircraft is twice as heavy as a fixed wing aircraft and 10% more actuator power is needed, then 22% less fuel is used.

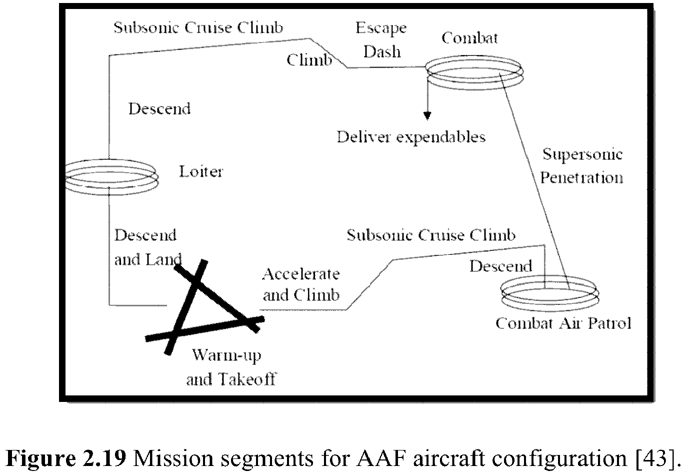

Joshi et al. [35] carried out a study to illustrate another advantage of dissimilar flight configurations . The wing area, wing span and sweep back changing concepts were used to visualize the viability of morphing concepts compared to fixed wing aircraft.

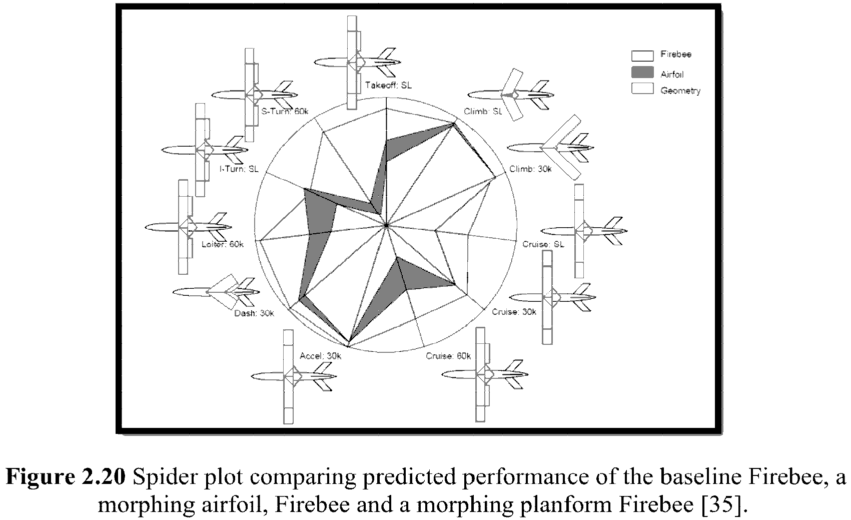

**Figure 2****.****20** illustrates 11 different flight condition measurements for unmanned aircraft considering morphing geometry, and morphing airfoil (alone). The outer radius of the plot shows the best possible performance in flight. It can clearly be seen that the morphing shape altering aircraft achieved excellent performance compared to the others. According to the results, during take-off no sweep configuration was needed; only a large wing area and span were required to provide high lift forces. However, during the climb, a swept back configuration was required to maintain climb performance as well as high-speed flight.

Another aspect to consider with regard to adaptive shape changing concepts and the aerodynamic and aeroelastic benefits of morphing aircraft was investigated by Sanders et al. [44]. In contrast to conventional surfaces, conformal control surfaces were used to achieve high lift performance. The results were obtained through simulation software (Vortex Lattice Method for aerodynamic calculation, ASTROS simulation for aeroelastic performance of morphing wings). According to the simulation results, high lift (approximately 40%) and a greater roll rate (25-30%) with low dynamic pressure could be obtained by the conformal control surfaces. Aerodynamic performance can also be improved via a variable wing span, as noted by Bae et al. [45]. This work aimed to reduce the induced drag to improve the range and endurance of a cruise missile. Simulation results showed a high lift distribution (37.5% improvement in lift by extending 50% wing span) and a noticeable decrease in induce drag (51%) as a result of the extending wingspan. Numerical and experimental results on the wingspan altering structure also showed a large influence on increasing aerodynamic efficiency and roll control.

Another morphing aircraft wing concepts was demonstrated by Wittmann et al. [46]. According to his rcscarch, the lift coefficient of a morphing aircraft improved by 74% by increasing the wing area and camber with aerodynamic efficiency can be improved by 24% (Lift to Drag Ratio) through changing chord length.

### 2.5 Adaptable Wing Mechanism Technology

In the last few decades, several investigations have been done on interesting and usable mechanisms for adaptable wing mechanism. Various publications present an overview of the possible morphing concepts [34], [47],[48][49]. Typically these concepts are divided into three major types: planform changing, wing aerodynamic behaviour altering, and airfoil adjustments.

### 2.5.1 Planform altering concepts

Planform altering concepts consist of several shape changing configurations, as indicated in **Figure 2****.****21****.**

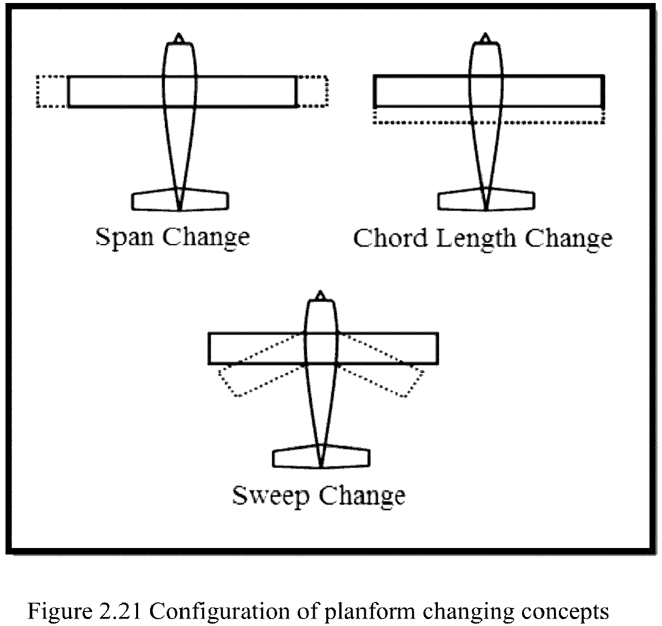

Span changing concepts have been researched more since the 1970s with various techniques and mechanisms used to achieve wingspan extension using pneumatic actuators [50] [51], a wing box, DC motors [56], and linear actuators [55]. Effective span changing concepts were investigated by Blondeau et al. [52][53]. To achieve wingspan changing, a pneumatic piston system was developed as shown in **Figure 2****.****22** with hollow shells to create a telescopic wing skin. The ribs were attached to a piston system which could react and extend the wing spar. The wind tunnel experiments showed that the skin and actuator mechanism worked well under the aerodynamic load and an improvement of 25% was seen in lift/drag ratio when the wing span was varied from 40% to 100%.

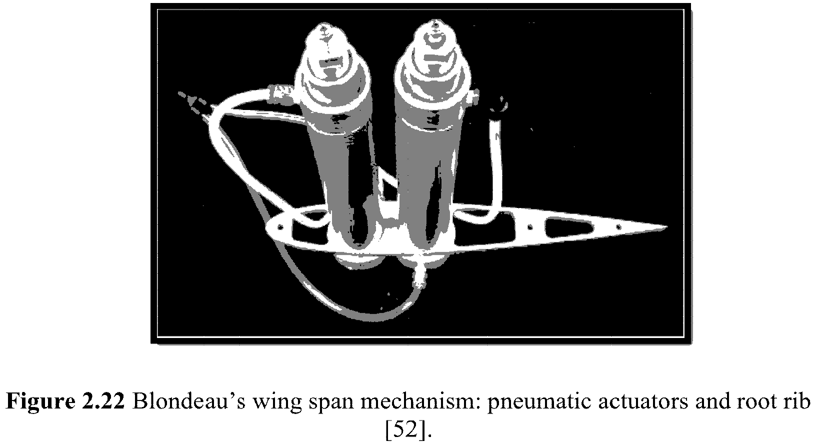

Similar to Blondeau[53], Neal et al. [50] designed and demonstrated a variable planform aircraft capable of wing span change. In order to achieve the span extension, a telescopic pneumatic actuator, as shown in **Figure 2.23** (a), was used with the wing achieving up to a 38% span change. Wind tunnel testing showed this variable span wing was able to reduce the drag (up to 17%) in contrast to fixed wings. After successfully completing the first UAV, Neal et al. [50] modified the variable wing and tail sweep as well as adding wing twists changing mechanisms. According to his research, the flight envelope could be improved by increasing the wingspan (2%). When the wings were twisted with aerodynamic efficiency improvements (2.2%) obtained. In addition, sweeping the winglets helped reduce the induced drag, and hence total drag (15%) and fuel consumption.

Recently, Vocke et al. [54] developed a span extending morphing wing mechanism using smart materials (morphing core and fibre skin) as illustrated in **Figure 2.24** (a). The core section consists of NACA63-618 airfoil-shaped acrylic-based photopolymer materials, which bend easily with a carbon elastomeric skin is 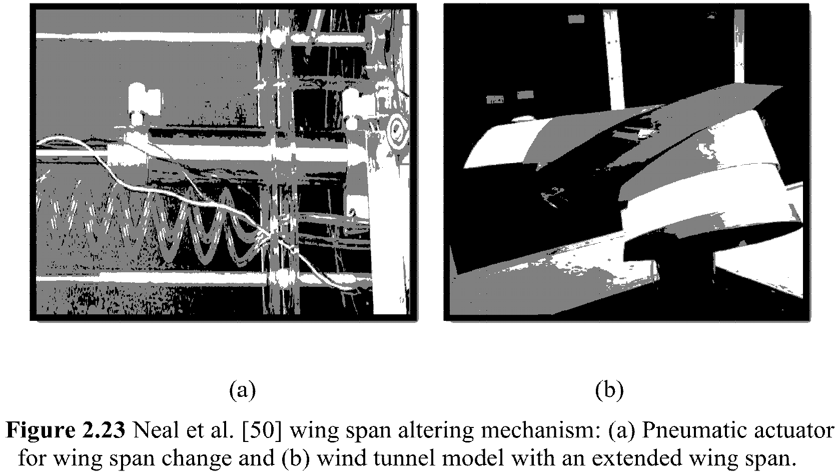 applied to the external design. According to Vocke[54], the design can provide 100% span extension with less than 2.54mm out-of-plane deflection under aerodynamic loading. Similar research has been carried out by Ajaj et al. [55] [56] using a novel zigzag wing box **(Figure 2.24).** The wing box consists of two parts: a rigid part and a morphing part. The non-morphing part, which is located on the wing chord, has two spars, and the morphing part has a rib with hinged beams and morphing elements. The hinged beams are able to provide the movement in respect to the Z-axis. According to their investigation, the wingspan can undergo a 44% change (22% retract and 22% extend), and although heavy, shows 5.5% greater efficiency in endurance to a conventional semi-monocoque constructed wing box.

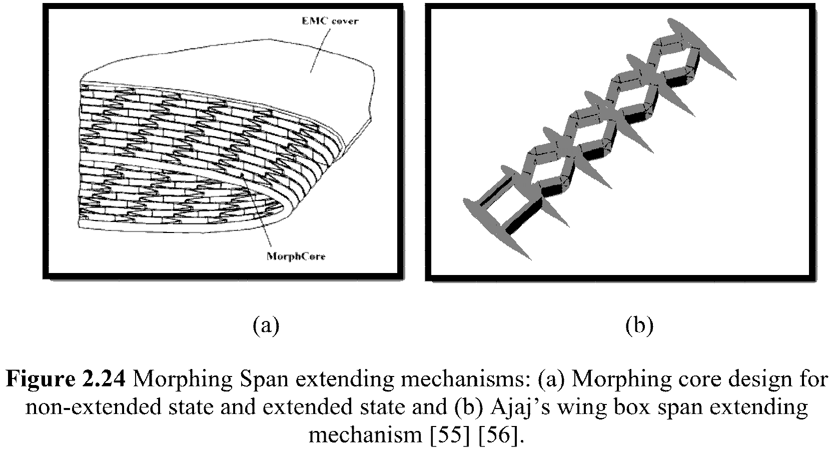

Traditionally, the chord length of the wing on a conventional aircraft is changed by means of leading trailing edge flaps and slats, which are moved by a lead or screw actuation system. Unfortunately, very few researchers have such concepts with the possible exception being Reed et al. [57]. They used an interpenetrating rib mechanism, which allows the partially designed ribs to slide through the chord to change the position of the leading and trailing edges **(Figure 2.25).** The ribs were designed to carry high aerodynamic loads. To increase or decrease the chord length size, a miniature DC motor lead screw arrangement was used. Although, the chord 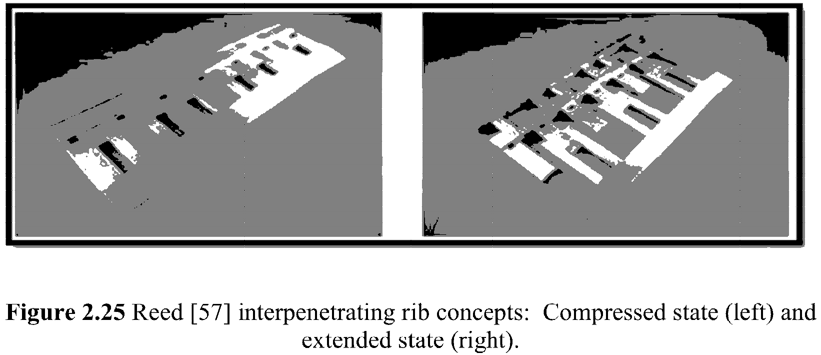 length change could provide aerodynamic benefits for aircraft performance, this design was limited due to added weight and complexity of the design. Also, when the ribs are fully extended, there is a large gap between each of the rib elements, which causes wrinkling of the morphing skin, so additional support was required for the skin.

A much more commonly accepted planform changing concept is to actively vary the swept angle of an aircraft's wings during flight. Highly Swept wings reduce drag significantly at high speed [58]. The main aim is to combine high speed and low speed flight using differing swept angle configurations. Challenges for sweep wing mechanisms are in normally high weight actuator requirements. There is normally also significant movement of the aerodynamic centre as well and centre of gravity to further complicate lateral and longitudinal stability [47]. Marmier et al. [59] designed a morphing variable sweep wing UAV using a pair of antagonistic inflatable bellow actuators embedded in a UAV fuselage. The wind tunnel model is shown in **Figure 2.26** (a). The inflatable bellow actuators were controlled by a selonoid valve and from the test results achieved wing sweep from A= 0°- 45°. Neal et al. [60] also built a high-powered new sweeping mechanism for morphing UAVs. Instead of using pneumatic actuators, two electromechanical lead screw actuators were used to provide the sweep movements. This design led wing sweep of up to 40° (**Figure 2.26** (b)).

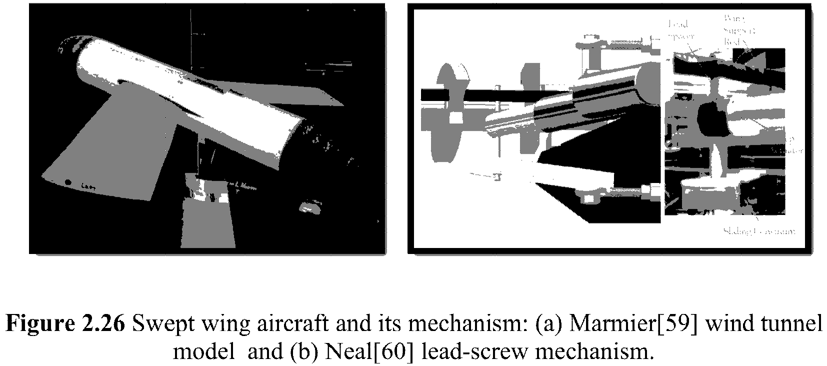

Mattioni et al. [61] studied a wing sweep altering concept using interconnected truss ribs placed on two bi-stable composite spars **(Figure 2.27).** The aim was to eliminate mechanisms and to reduce stress when the straight wings were rotated to sweep back and forward. No skin was included. During high loading conditions, each spar was found to provide excellent bending stiffness because of the substantial transverse curvature [61].

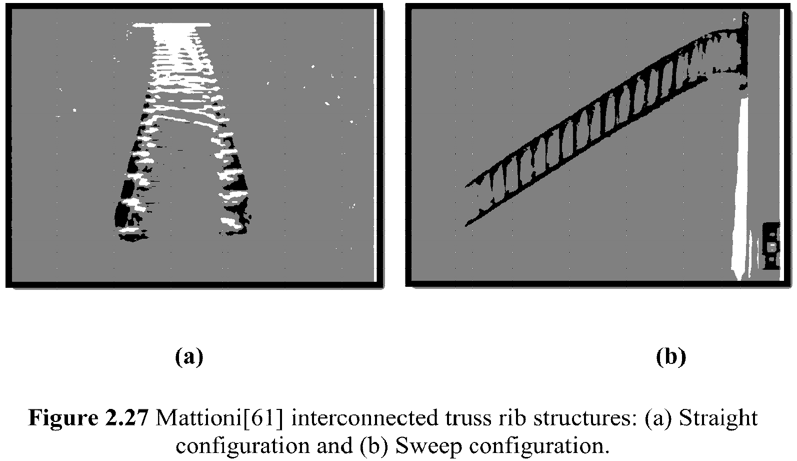

Additionally, Joo et al. [62] proposed a novel method for altering sweep angle of morphing aircraft using a scissors mechanism **(Figure 2.28).** Pneumatic actuators were used and these were located between two neighbouring links to both extend and retract. The comparison between the numerical data and experimental data showed good agreement with the mechanism shown to be suitable for morphing wing sweep applications [62].

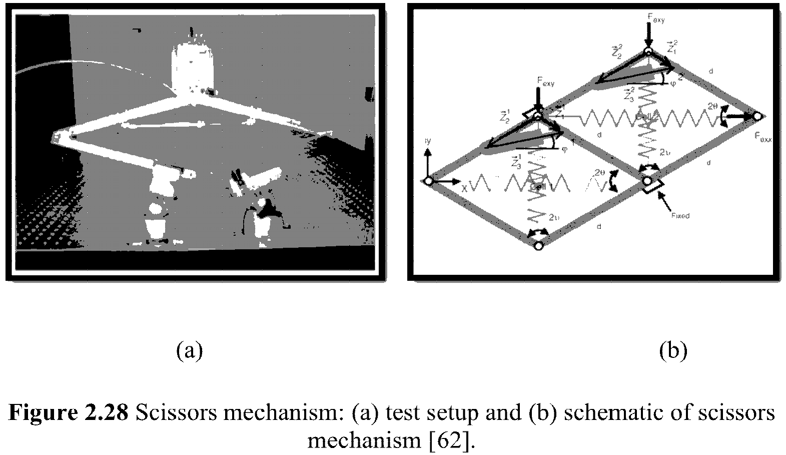

### 2.5.2 Wing twist concepts

Prandtl's Lifting Line Theory was the first mathematical method to estimate the performance of a wing's lift capabilities for an aircraft [63]; being thereafter modified by Philips [64] [65] to estimate the influences of wing twist on lift distribution. Following this seminal work, more studies have considered morphing wing and/or winglet twist configuration both theoretically and experimentally, to investigate influences on the aerodynamic performance of an aircraft. Recent work have detailed of wing twist systems using piezoelectric and pneumatic actuators [66], [67], [60], torque rods [68][69][70], adaptive stiffness structures[71], threaded rods [72], and shape memory alloys[73][74][75]. Barrett et al. [66] used Piezoelectric actuators were used to provide the twist movements. **Figure 2****.****29** shows the Flexspar design used is based on a single bimorph actuator that drives an aerodynamic shell in pitch. The structurally stiff main spar and bimorph piezoelectric bender elements are bonded rigidly at the root of the fixed base and the bender element is melded to the trailing edge of the shell (the shell is free to rotate around the spar). Using a piezoelectric actuator, the bender element can move upwards, which causes the model to rotate the shell resulting in wing twist. According to the wind tunnel testing, ±1.5° of twist was achieved, which equates to ±8.4° aileron deflection[66].

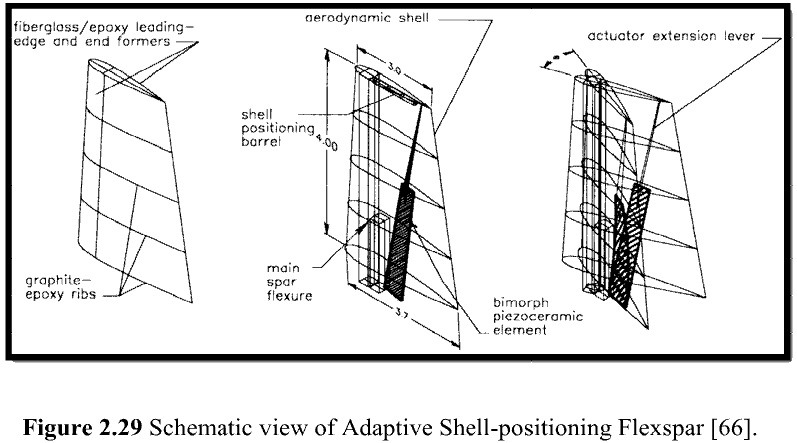

The use of high authority anisotropic piezoelectric actuators to induce wing warping was also investigated by Sahoo et al. [67]. The aim of the research was to achieve roll controllability in place of traditional, discrete control surfaces. A numerical framework was tested for relatively simple models, with a Boeing X-45A based UCAV model used to assess the authority requirement on the piezocomposite actuators to achieve representative roll rate. The results showed the current state of-the-art technology for anisotropic piezocomposite actuators (e.g. active fiber composites) does not have the authority needed for wing warping control. A three to four-fold increase in actuation authority is needed to adequately enable this control approach for this type of aircraft.

Neal et al. [60] also proposed the new twisting mechanism shown in **Figure 2****.****30****.** This mechanism used pneumatic actuators to drive airfoil-shaped acrylic materials to produce wing twist. The acrylic airfoil was bonded to a flexible, closed-cell polyethylene wing section with a fixed boundary condition at the root. This caused a linear twist distribution when the internal twist mechanism rotates. This system is able to twist wings from -20° to +20° and although the skin had some wrinkles (shown in **Figure 2**.30(b)), observations from the wind tunnel showed that the twisting could be beneficial for aircraft aerodynamic performance by 2.2%.

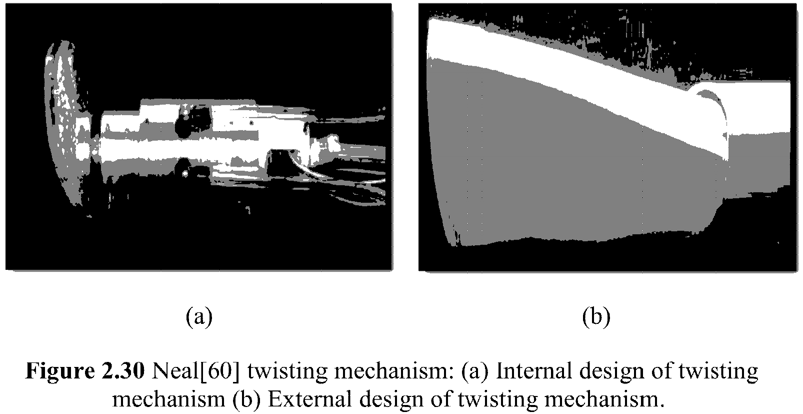

In an alternative approach, a torque rod twist mechanism for membrane wings was investigated by Garcia and Abdulrahim et al. [68] [76] [70]. In their design, Mylar membrane wings were used with a torque-rod fixed to the wing at the 66% span position **(Figure 2.31).** A servomotor was used to actuate this rod to achieve twist distribution. According to their flight tests, roll rates comparable to a traditional aileron were achieved via these twisting wings. Similar to Garcia et al. [68], Stanford et al. [69] also controlled the roll of a mini UAV using a torque rod mechanism. This micro air vehicle, constructed using a thin membrane wing and skeleton, was made from carbon-fibre, with the torque rod rotating the span-wise length of each wing. To achieve rotation, servomotors were used and connected to the torque rod. Numerical analysis was done using Athena Vortex Lattice software and then validated by wind tunnel testing data. The data indicated roll control (45°) can be achieved by varying the twist angle (up to -15°) of an UAV, but only with a considerable drag penalty.

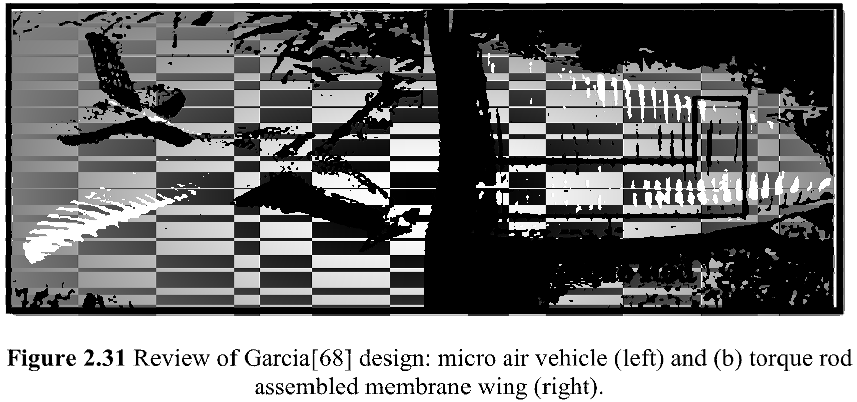

Majji et al. [77] also studied wing twisting and with comparison to wind tunnel tests. The model consisted of an elastic wing-box structure covered with an elastomeric skin. The box structure was also rigidly coupled to the four main tubes that were placed along the wingspan with front and rear supports to retain the airfoil shape. To actuate the wing structure, a servomotor was placed outside the wing root section. With wind tunnel testing showing stall at a later stage than the other two sections. Skin deformation however was observed under aerodynamic loading, which tended to increase drag. Similar to Majji[77], Cooper [78] investigated adaptive stiffness structures such as rotating and translating spar concepts. These design approaches **(Figure 2.32)** were constructed from aluminium and comprised five ribs with an additional two fixed spars positioned horizontally near the leading and trailing edges. For the rotating spar concept, two moveable spars were used and actuated by four motors positioned at either end of the spars **(Figure 2.32** (a)). For the translating spar concept (similar to the rotating spar model) these moveable spars could translate in the chord-wise direction along tracks in the ribs **(Figure 2.32 (b)**). To provide an aerodynamic surface finish, thin polyethylene skin was used. Both investigations showed good agreement with the wind tunnel experiments and sufficient wing twist and/or control moments were demonstrated. Although this system found to work well in the wind tunnel environment, application to real flight conditions suffered from excess weight and power problems.

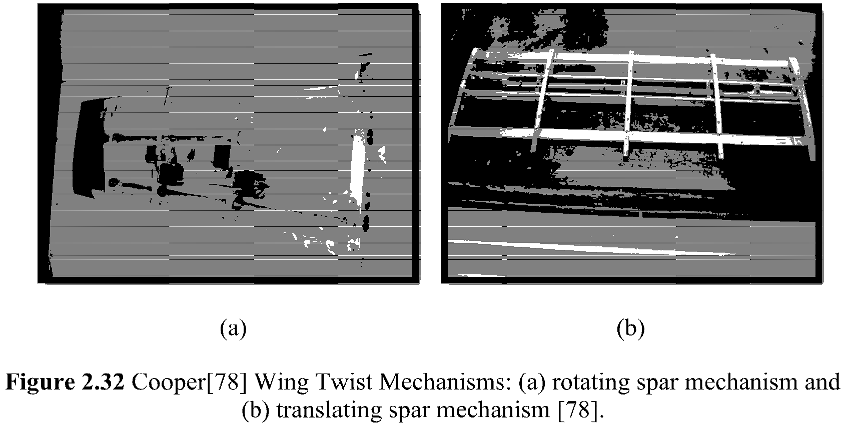

Further studies on twisted wings were carried out using a threaded torque rod mechanism. Vos et al. [72] investigated wing twist using threaded torque rod with a carbon fibre reinforced polymer skin. In this design, 4 different rib structures were spaced equally along the round aluminium bar as shown in **Figure 2.33** (a). A threaded rod with in sliding mounts is free to move along the span of the wing near the trailing edge of the wing. The wing skin was covered by a carbon fibre reinforced polymer (see **Figure 2.33** (b)) and glued to each rib flange to ensure a smooth aerodynamic surface. When the threaded rod is actuated, it provided guides for the wing skin to twist. Wind tunnel testing at 15 m/s showed that this mechanism works well under aerodynamic load. A small reduction was observed in the lift-induced drag with augmentation of lift (25% at trailing edge displacement of 4mm). It should also be noted that this system is heavier and was more complex than other morphing actuation systems.

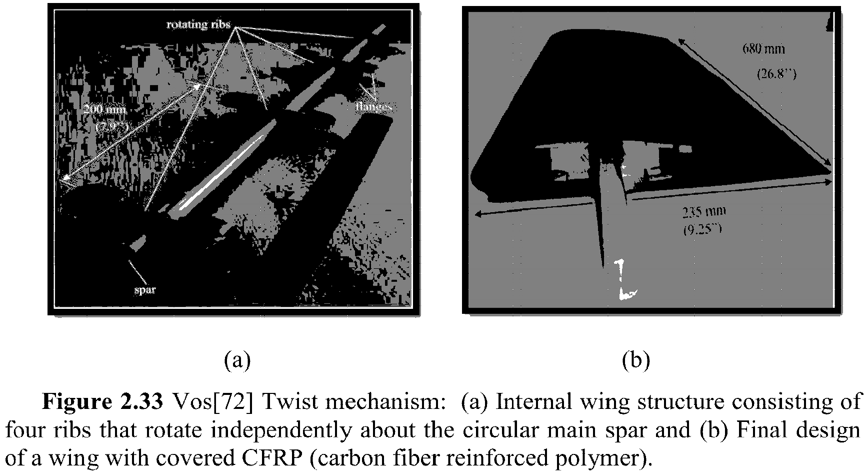

Adaptive aeroelastic methods have also been studied by several researchers using a variable stiffness spar. A smart stiffness spar for improved roll control was investigated by Griffin et al.[79]. The aim was to increase the roll rate and aircraft performance at high dynamic pressures. Smart spar concepts have been utilized to increase the aeroelastic behaviour of a wing by altering the spars from the location of a reference point (the leading edge of a wing) to the wingtip. Another approach to adaptive torsion wing spar concepts has been investigated by Chen [80]. Adaptive spars were used instead of the existing spars to provide more rolling and lift force. An F/A18 aircraft model was chosen for this study. Variable stiffness spars were bonded with articulated joints and then the articulated joints were connected to the wing ribs. To achieve spare rotation, an electronic actuator was used. The numerical results obtained proved that by using adaptive spars, the aircraft's manoeuvrability could be enhanced by 30%.

Another innovative way of variable stiffness spars has been developed by Ajaj et al. [81][82][83][84] with the aim to optimize the performance and control of unmanned aerial vehicles. Vortex Lattice Methods were used to predict the aerodynamic efficiency of a model and a genetic algorithm was used for the optimization process. As depicted in **Figure 2****.****34****,** an aluminium wing box and two variable torsional stiffness spars were used to alter the chordwise position of the front and rear spar webs. Initial testing was done, only to change the location of the spars (no twist geometry). Unfortunately, there were no significant improvements in aerodynamic efficiency of the UAV, because the span wise lift distribution moved outboard of the wing, hence increasing the induced drag. In contrast to the initial case, 2.5% greater aerodynamic efficiency as well as good rolling moments was obtained by twisting the wings from 2° to 4°.

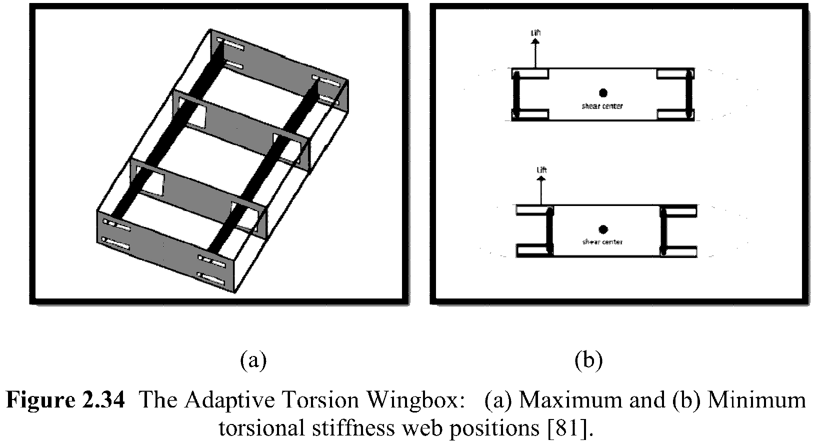

Using Shape Memory Alloys (SMA) to actuate wing twist is another approach that has attracted researchers in recent years. A detailed review on shape memory alloys with applications to morphing aircraft was carried out by Barbarino et al.[85] and sub-reviews have been done by several researchers [13] [34], [47], [86]. In the literature, a full morphing wing using SMA in DARPA's Smart Wing Project [27] is discussed in **Section 2.3.3.** These wings were actuated using SMA wires to create wing twist movements. Nam et al.[87] used SMA spars to replace the mechanically actuated variable stiffness spar used by Chen et al. [80]. A numerical analysis was conducted for a wing model based on an F-16 wing structure. According to the results, the SMA spar could increase the aeroelastic forces and significantly increase the roll performance (59%). Also, by moving the spars towards the trailing edge, the roll rate were amplified further resulting in a 61% improvement was obtained in roll performance.

A bio-inspired cellular metal vertebrate structure that relies on shape memory alloys (SMA) to achieve fully reversible shape change concepts has investigated by Elzey et al.[73]. The idea behind this design was the fabrication of an internal structure that is strong and lightweight when idle and flexible when actuated. It can be seen from **Figure 2****.****35** that the internal wing comprises a cellular flexible core, which is able to rotate relative to one another with this system sandwiched between SMA face sheets. Heating either SMA element causes contraction of that face and results in a corresponding curvature.

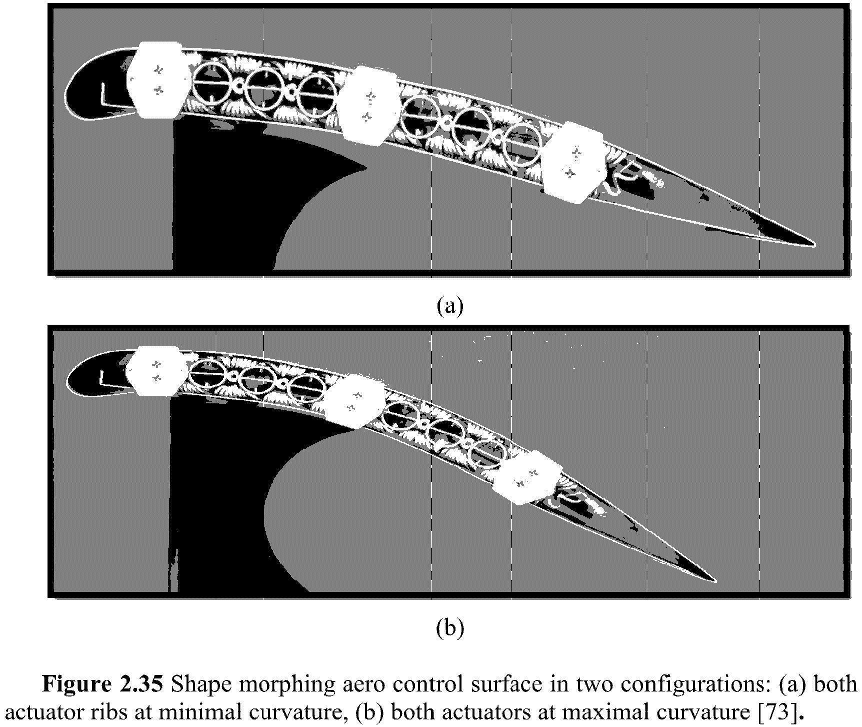

Sofia et al. [74] investigated antagonistic flexural cells (AFC) to create antagonistic shape actuation based on the one-way shape memory effect. Two of the positions provided by the AFC require no external energy to be maintained, making the AFC suitable for devices requiring two different end shapes to be fixed for long periods. Jacob et al. [88] also investigate ways of using twisting wings via using shape memory alloys were highlighted. SMA wires used to rotate the trailing edge of the wing. The SMA wires were located at the bottom of the wing with wires attached to the wing tip. The wires could rotate the wing tips by 3° while the position of the leading edge remained the same. In order to reverse the deflection; a servomotor was used.

Lastly, the fish bone active camber wing concepts was introduced by Woods and Friswell et al. [89]. The core of the Fish Bone Active Camber (FishBAC) concept is a compliant skeletal structure inspired by the anatomy of fish (Figure 2.36). There is a central bending beam "spine" with a series of stringers (similar to fish ribs) branching off to support the skin. Baseline wing (front side) structure was manufactured with 3D printing and the rest of structure was covered with carbon reinforced EMC skin. Spooling pulley mechanism with high torque servo motor provides the required camber twist and maximum 36 mm camber twist displacement was achieved. Also flapped airfoil geometry was manufactured (0° - 30° of flap angle) to make comparison between the twist and flap configurations.

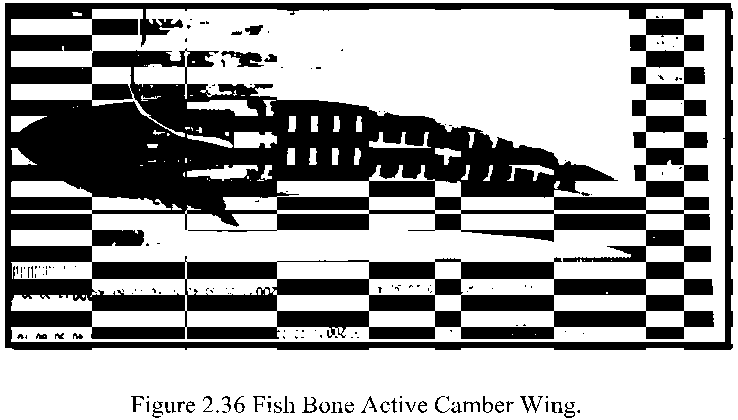

Wind tunnel testing showed that using the FishBAC morphing structure remarkable increase in lift-to-drag ratio of 20%- 25% was achieved compared to the flapped airfoil over the range of angles of attack.

Overall, these concepts have shown through theoretical and wind tunnel analysis large benefits in terms of aerodynamics and roll control. The requirements to adapt those mechanisms to a real flight environment remain however, difficult to fulfil due to the heavy twist mechanisms, their installation cost, their complexity, and higher torque requirements. The development of a practical skin is also a major challenge.

### 2.6 Winglets and Wingtip Devices: Their Adaptability

The past surveys and investigations have shown that winglets and/or wingtip devices offer possible solutions to both reducing induced drag as well as improve the range and aerodynamic performance of an aircraft [90]. Although all winglets have different functionalities, they are all intended improve aerodynamic performance and for that matter wingtip devices. Within the recent past, more work has involved adding morphing capabilities to these elements. Looking back initially, the first 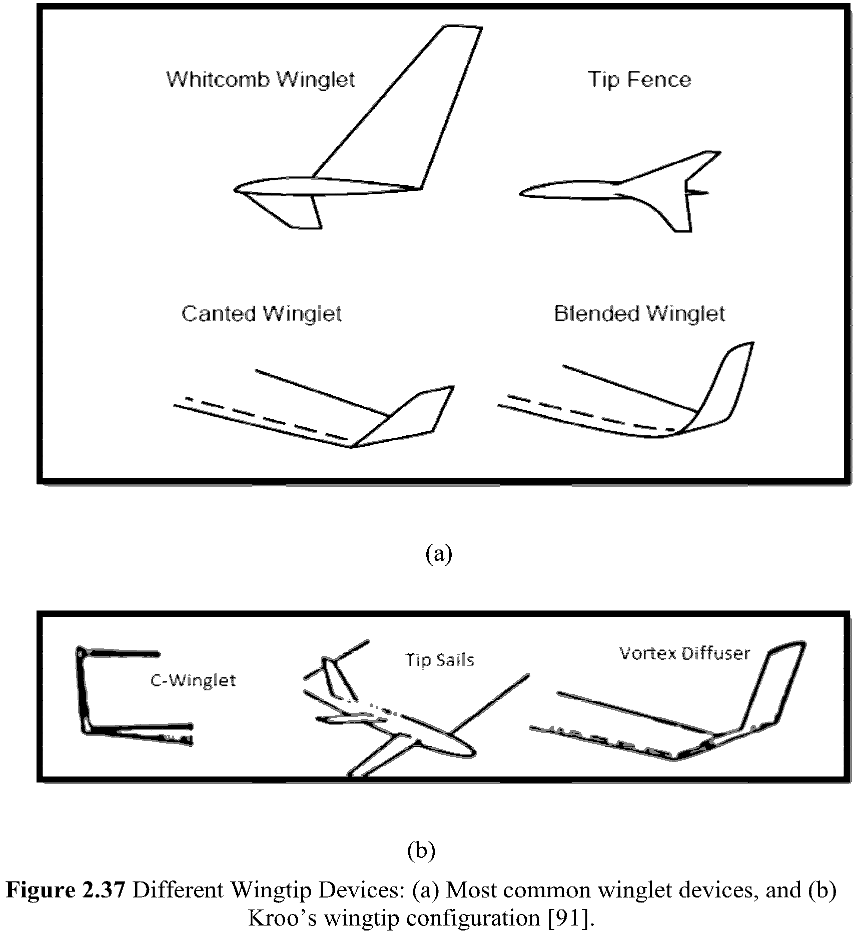 major breakthrough was introduced by Whitcomb [91]. As illustrated in **Figure 2.37 (a),** Whitcomb's winglet design consisted of two parts, a combination of a long upper section and a shorter lower section.

Whitcomb's [91] initial analysis showed that dihedral angles of 72° for the upper and -54° for the lower winglet dihedral angles was ideal. Whitcomb mentioned that the purpose of adding the lower structure was to reduce the aerodynamic loading on the upper winglet [91]. A wind-tunnel investigation at high subsonic speeds showed a 9% improvement in the overall aerodynamic performance through a 20% drag reduction. Likewise, NASA provided good evidence for the efficiency of winglet devices between 1974 and 1976 [92]. They assessed different drag reducing devices and wingtip devices with results showing winglets can improve aircraft efficiency by 10-15 % during cruise.

Similar concepts were also explored by Kuhlman et al. [93]. Their investigation was an initial step to better determine the potential for winglets to reduce drag of low-aspect-ratio fighter-type wing configurations at high subsonic Mach number. Overall, a 12% aerodynamic benefit was obtained using winglets on low aspect ratio wings. Over subsequent years, various other winglet shapes have been investigated by several researchers to find the best possible configurations. The aerodynamic design and experimental investigation of the sailplane wingtip device was investigated by Anderle et al. [94] . The concept investigated consisted of a larger extension winglet, a highly swept back winglet, and a small upward swept winglet. The impetus for the work was to identify the flow field behind the wing tip models. A hot wire system was used to obtain the data and according to the results, a greater vorticity profile was found to exist for non-winglet configurations. Also, the velocity distribution was seen to be substantially higher for this condition. Similar to Anderle [94], the effects of various winglet shapes was also explored by Soltani et al. [95] and Nazarinia et al. [96]. It can be seen from **Figure 2.38** that five different winglets were used with measurements including total wake surveys at various angles of attack, and flow visualization over the wing surface using tufts. Experimental results showed the total pressure data in the wake to exhibit substantial changes for each winglet shape and blended winglets. Examples of these are shown in **Figure 2.38.** The more traditional configuration (shown attached to the wing in **Figure 2.38**) was found to perform the best with the vortices slightly weaker than other types of winglets.

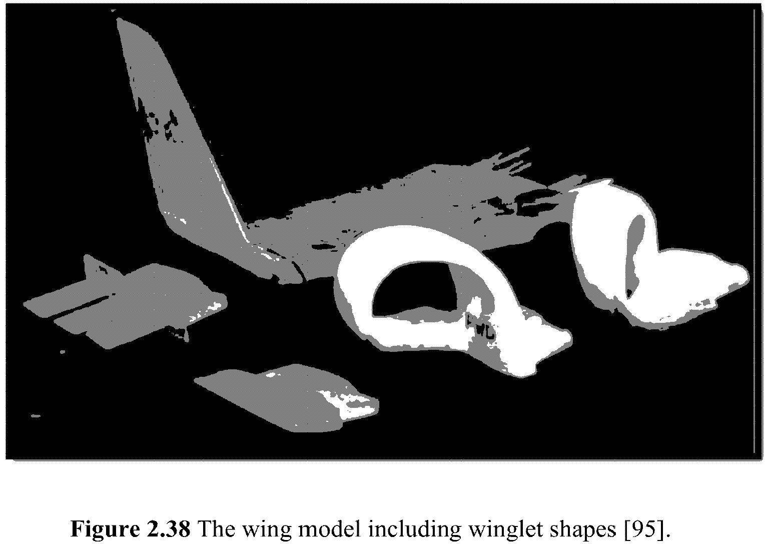

Later, non-planar concepts in a broader taxonomy were discussed by Kroo [97]. A variety of winglet designs and their merits were reported. According to Kroo's research, winglets decrease vortex drag and reduce the fuel consumption particularly from using the vortex diffuser wing tip devices, shown in Figure 2.37 (b). In addition, Kroo mentioned a further study for 'C' and 'tip sails' winglet configurations to reduce drag coefficients (applied to large aircraft and tailless designs [98] from **Figure 2.37**(b) first left configuration).

A study using triangular, rectangular and circular winglets was also presented by Inam [99]. The tests were carried out in a closed loop system wind tunnel with several Reynolds numbers. The results indicate that sharp or swept edge winglets (triangular) are capable of decreasing the induced drag by up to 31%. Various winglet concepts were also studied by Hossain et al. [100]. Elliptical and circular winglets were tested and a 60° Cant angle winglet and achieved a reduction in the drag coefficient of approximately 25-30% together with an improvement in lift coefficient of approximately 10-20% **(Figure 2.39).** A preliminary CFD study was also conducted by Babigian et al. [101] to compare the wingtip vortices and induced drag generated by three different wing and wingtip models. These geometries consisted of a wing with winglets, a clean wing (without winglets), and a wing with a raked wingtip. According to the numerical results, the clean wing configuration produced the highest vortex magnitudes when compared to wing configurations that employed either winglets or raked wingtip designs. Similarly, aerodynamic optimization and evaluation of the KC-135R winglets, raked wingtips and a wingspan extension were investigated by Halpert et al. [102]. Various winglet sizes with different winglet raked angles were investigated. It was shown that swept back winglets with approximately a 25° swept back angle or 25° raked winglets gave the highest aerodynamic performance compared to the other cases presented **(Figure 2.40).** Winglet cant and toe angle were also investigated with results showing winglets with a 15° cant and -4° toe angle were optimal to achieve the best aerodynamic performance.

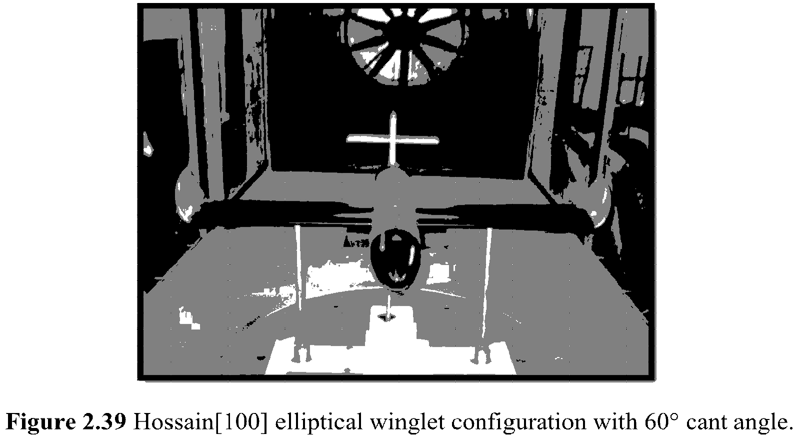

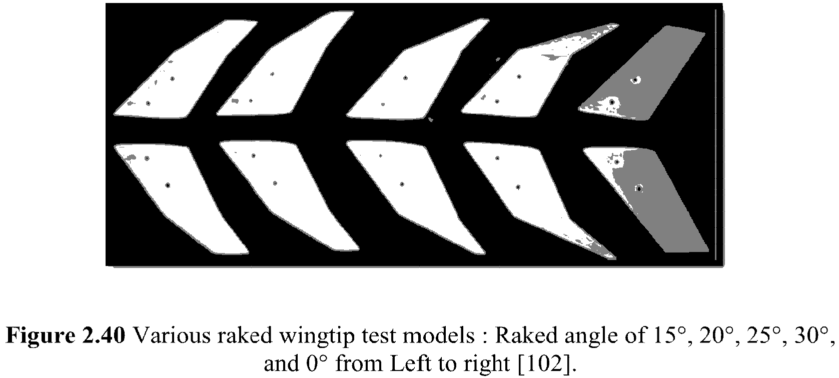

Similar to Halpert et al. [102], the development and integration of new high performance wingtip devices for transport aircraft concept was investigated by Heller et al [103]. As shown in **Figure 2.41,** various winglet configurations were fitted to a transport aircraft model to investigate the aerodynamic effects. According to the wind tunnel testing, the winglet configuration as shown in **Figure 2.41 (a)** (rightmost) achieved a 5% drag reduction target at cruise.

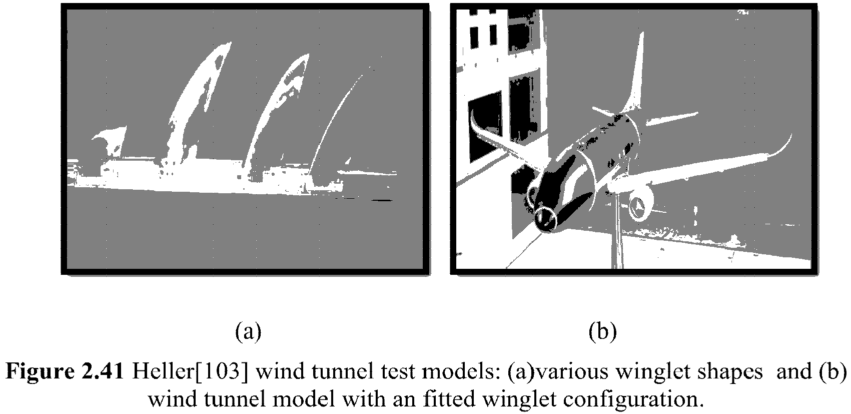

More related specifically to morphing applications, aerodynamic analysis of cant angle winglets has been investigated by Beechook et al. [104] . Four different cant-angled winglet models (0°, 30°, 45°, and 60°) were utilized to understand the effects of cant angle on aircraft performance. The winglets are shown in **Figure 2.42,** was used together with tests. Lift force for a 45° cant angle winglet was found to produce best results with low vortex generation at low angle of attack (low induced drag). Similar to Beechook[104], Yen et al. [105], and Gerontakos et al. [106] investigated the effects of winglet dihedral on the flow behaviour and aerodynamic performance of wing profiles. According to their investigation, vortices magnitude reduced by adding winglets and in some of the cases, (17% at Γ = 90°[105] and 6% at Γ = 67.5°[106]) enhanced performance benefits compared to other winglet dihedral angles was achieved.

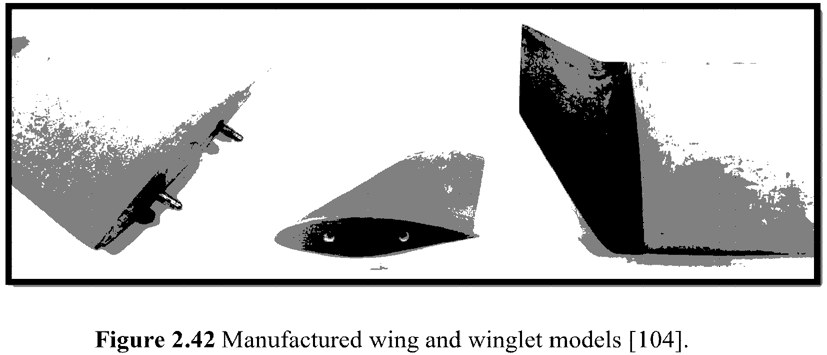

In recent years, blended winglets has been introduced to reduce induce drag, maximize lift distribution, and minimize flow separation [107]. From wind tunnel, and real flight test results, blended winglets decrease total drag by approximately 2% by reducing the discontinuity between the winglets and wing tips [107]. When applied to a Boeing 737-400 Business jet plane and a 7% drag reduction was observed.

The sharklet, as shown in **Figure 2.43** has also been introduced to reduce induced drag and boost the aerodynamic performance. Results taken from real flight testing, show fuel consumption decreases of 15% compared to a non-winglet configuration with 4-5% further benefits compared to other winglet models [108].

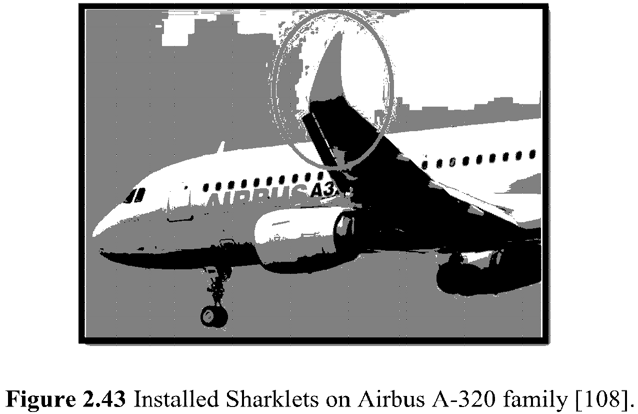

The latest winglet technology uses a highly degree of sweep, helping to improve the aerodynamic efficiency of an aircraft by reducing the induced drag. An example can be on the Boeing 787 Dreamliner (**Figure 2.44** left-side picture) and Airbus A-350 XWB (**Figure 2.44** right side of the picture). Boeing uses approximately 40° sweep for its winglets and according to real flight tests, obtains 3.5%-4.5% drag reduction compared to other conventional winglets [107]. Developments in blended winglets with a high sweep technology have recently been proposed by the Airbus Company[109]. Instead of using a mounted winglet, they manufacture the wing and winglet components together with higher degrees of sweep. Flight tests have shown 25% reduced fuel burn compared to other aircraft [109].

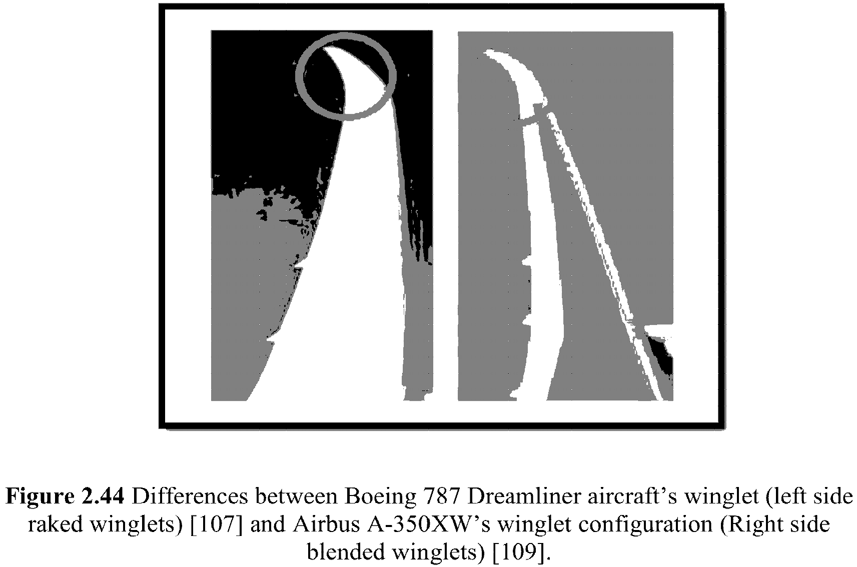

A split-tip design has also been proposed by Klug [110]. For this design, leading auxiliary winglets are located upstream of the elastic wing axis, and possess both forward sweep and sweepback. The combination of these features permits a simultaneous reduction in the induced drag and in the stress caused by wind gusts, increasing the effectiveness of the wing's ailerons [110]. Prior to this multiple winglet design, biologists also carried out extensive research and concluded that multiple winglets were highly effective in terms of the improving aerodynamic performance of soaring birds; they could reduce drag by 6% [111]. Other multi winglet projects have been completed by Smith et al. [112]. **Figure 2.45** (a) illustrates Smith's five aluminium multiple flat winglets. The winglets are mounted at the tip of an NACA 0012 airfoil shaped wing. The numerical simulations were done using Cobalt flow simulation software in three stages. The first stages involved only the base wing without winglets, and the second stage consisted of five flat winglets without any dihedral angle (all of the winglets were tilted at a 0° dihedral angle) with the last stage having, each winglet at a different dihedral angle, (through ±20° in 10° steps). Experimental results showed multiple winglets could increase the lift curve slope (15-20%) through deflecting the winglets (five multiple winglet deflection with 20°, 10°, 0°, -10°, -20° respectively) with good improvement shown for the lift to drag ratio(∼9%) [112].

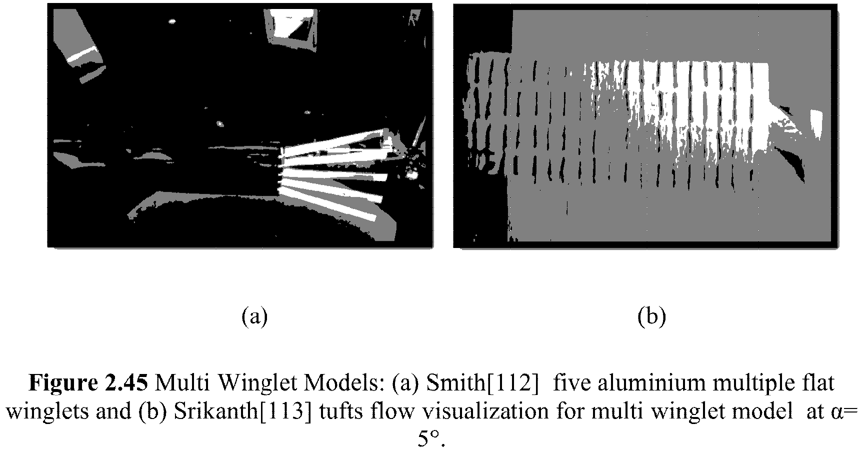

An extensive experimental study has also been conducted to investigate the potential of multi-winglets to reduce the induced drag and increase the lift coefficient without increase in wing span [113]. These concepts consisted of multiple and single winglet configurations as well as a wing without winglet model. The concept, shown in **Figure 2.45** (b), showed a 15% reduction in induced drag when multi winglets were used. At high angles of attack, maximum lift coefficient was 26.5% better than the other configurations tested.

### 2.7 Morphing Winglets

It is clear winglets have a beneficial impact on the aerodynamic efficiency of an aircraft during cruise. Unfortunately, fixed position winglets do not provide the optimum solution for aircraft performance in all flight regimes as the lift requirements for aircraft change due to fuel burn. Recent studies have started to investigate possible ways of alleviating this fixed condition through incorporating methods to actively optimize the winglet position under different flight conditions. A novel method of controlling aircraft via adaptable cant-angled winglet concepts was investigated by Bourdin et al. [114] [115]. The concept consists of a pair of winglets with adaptive cant angle, independent actuation mounted at the tips of a flying wing. The objective of the research was to explore a novel method for primary aircraft control by changing the dihedral angle of the winglets. Experimental testing used a swept wing configuration made of expanded polypropylene foam and a Zagi 12% airfoil profile **(Figure 2.46 (a)**). The winglet was also made of foam material and connected via a hinge system; with rotation capability of ±90°. To achieve the winglet rotation four high torque robot servos were used. Initial numerical calculation was carried out with wind tunnel test validation. The results showed greater possible manoeuvrability characteristics and a better lift/drag ratio at the +30° cant angle position.

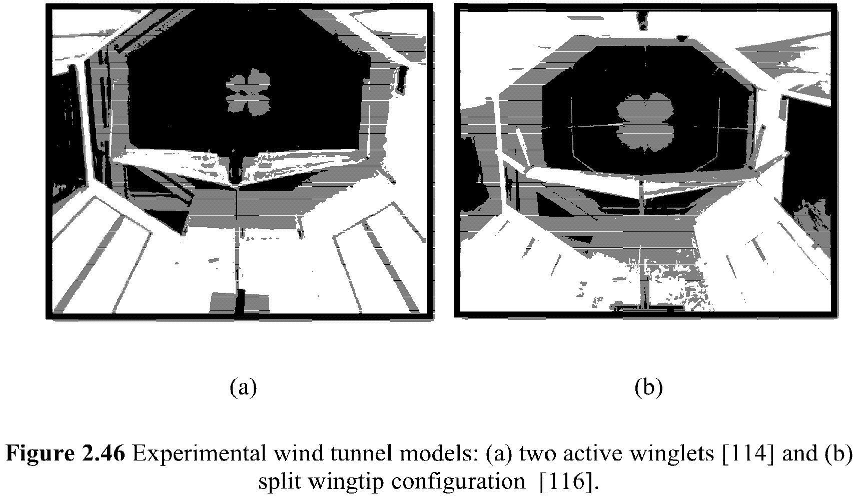

Although the concept was effective, a single pair of folding wing-tips was not able to substitute for all conventional control surfaces, so another concept was developed. To achieve a full control envelope, Bourdin et al. [116] [117] adapted a second pair of winglets (**Figure 2.46** (b)) using similar design method. Four active winglets were tested and produced more efficient control moments than the single winglets. Also they led to a redundancy for the possible flight control system. Similar flying wing geometries were also investigated by Ameri et al. [118] [119]. This work focused on the dynamic and shape changing response as well as aeroelastic effects of active morphing winglets. A dynamic simulation model of the flying wing was built using the SimMechanics Simulink tool and the aerodynamic loads were provided by Athena Vortex Lattice software package. The results of this work show a strong and non-negligible dependency of the aerodynamic transient behaviour on shape variation[119].

Ursache et al. [120] has also studied morphing winglet (MORPHLET) concepts to increase the flight performance of an aircraft. A narrow body jet wing was used as a simulation model **(Figure 2.47).**

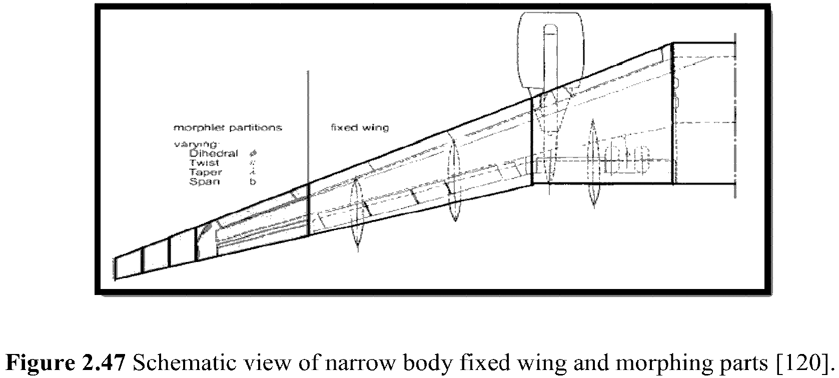

Three different flight regimes (initial cruise, final cruise, and end of descent) were considered to investigate the best possible configuration of the MORPHLET configurations. A Matlab integrated Vortex Lattice method was used for the aerodynamic modelling and a genetic algorithm was used for the Multi-disciplinary optimization. The preliminary optimization results show that in order to achieve high aerodynamic performance significant shape changing is needed. To get the full benefit during the initial cruise and descent, the winglet span needs to be increased, and a 33° cant angled MORPHLET structure configured for cruise. Using these geometric properties in three different flight regimes, the range could be improved by 5.17% with induced drag could be reduced by 18.5%. Subsequent work developed MORPHLET mechanical prototypes for tested. These winglets were allowed to alter cant and twist angle using a servo actuation system; the prototype is shown in **Figure 2.48** (b). Corrugated skins were used to achieve desired flexibility (**Figure 2.48** (a)).

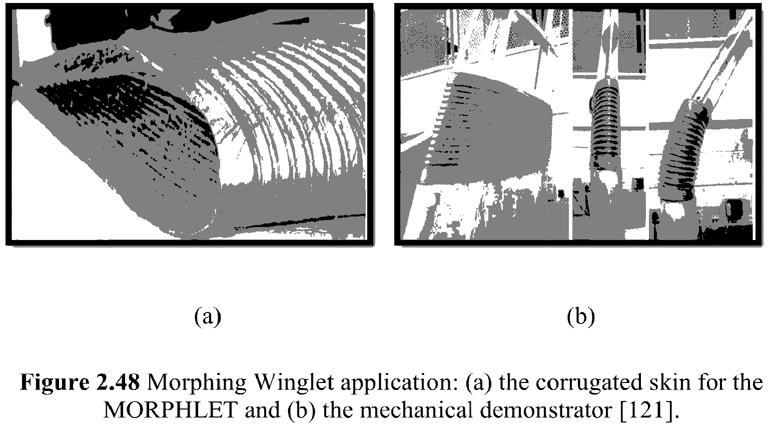

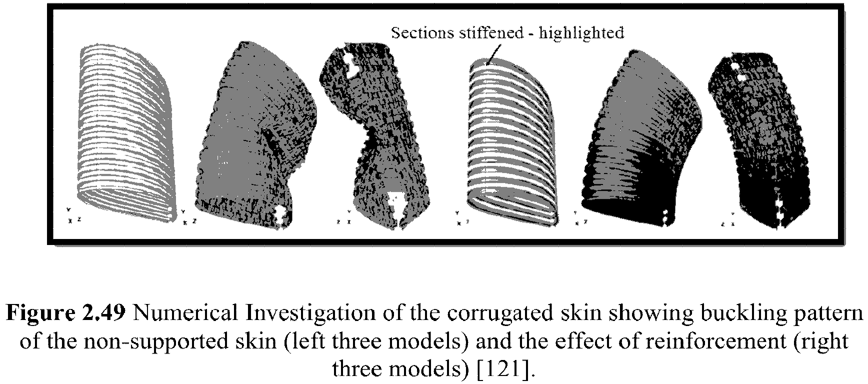

Although the numerical and experimental data show good agreement, it was difficult to design a morphing skin. As illustrated in **Figure 2.49**, the principle problem lies with on unsupported skin causing it to buckle. In this case, careful support design is needed with corrugation space and depth chosen with sufficient stiffness placed between the corrugations **(Figure 2.49** (right three models)).

To enhance wing lift capability, bistable winglets were introduced by Gatto et al. [122]. A swept wing configuration was used as the base model for this study with the wings made from blue foam and a lacquered skin to provide a smooth aerodynamic surface finish. For the winglets, bistable composite materials were used together with a customised transition (between wing and winglet), insert aid bistable winglet deployment. As shown in **Figure 2.50**, two separate winglet configurations, "snapped" and "unsnapped", were tested. Results obtained showed enhanced performance for to lift with the unsnapped configuration (take-off) during cruise, for the snapped configuration.

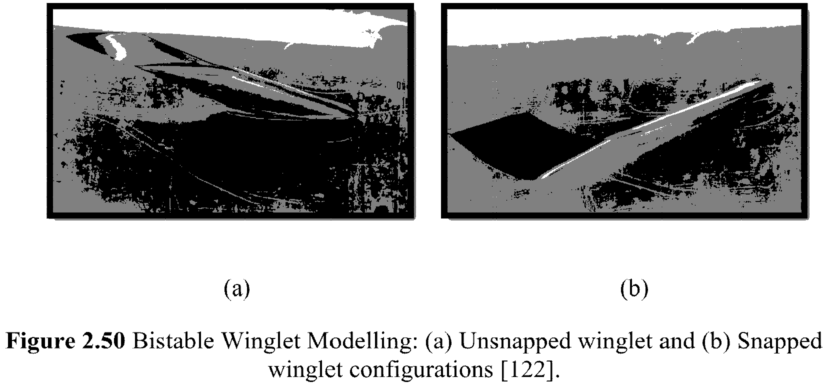

Multidisciplinary design optimization of a morphing wingtip has been studied by Falcao et al. [123] [124]. The aim of the project was to illustrate the potential benefits of variable wing-tip devices via a Multidisciplinary optimization technique. The investigated concepts consist of variable winglets that are able to rotate about two different axes: the aircraft's longitudinal axis (winglet cant angle from 0° to 180°) and the vertical axis (toe angle from 0° to 8°). Computations carried out in CFX showed distinct advantage over the fixed winglet configuration, giving estimated 25% additional aerodynamic efficiency with winglets positioned at the desired angle (42.49° of cant and 1.22° of toe angle) according to the flight conditions. Further investigation into acro-structural design optimization for morphing winglet concepts was also carried out (Falcao et al. [125]). Servo actuation and a hinged mechanism were proposed as an alternative mechanism to alter winglet shape. Similarly, Smith et al. [126] [127] also studied multidisciplinary design optimization(MDO) concentrating on active nonplanar polymorphing wing concepts. MDO was applied to the problem of maximizing the performance benefit through the retrofit of a morphing nonplanar outer wing system to a commercial narrow body aircraft. Through optimizing the outer partition span for the maximum range sizing case and re-optimizing the partition twist and cant angles for different flight conditions, it was determined that the morphing system not only provides a substantial 6% specific air range improvement over the datum aircraft but is also able to maintain a 4.5 to 5.5% SAR enhancement for all of the analysed flight phases. With fixed sizing geometry the improvements fall to approximately 3.5%. These results also indicate substantial improvements for the lift to drag ratio in climb, take-off, and for reducing landing field length [127].

After active multiple winglet concept was investigated by Shelton et al. [128]. The goal of the research was to determine the potential benefits of active multiple winglets to augment both cruise and manoeuvring performance. Five winglets were applied to a Dragon Eye Unmanned Air Vehicle as shown in **Figure 2.51**(a). Multiple winglets for low speed aircraft were also studied by Cosin [129] and Catalano et al. [130]. Six different cant angled winglet models as shown in **Figure 2.51** (b) were tested with results showing performance increase through the induced drag enhancement. Cant angles of 15°, 0° and, -30° showed a 7% improvement in the lift/drag ratio over other configurations.

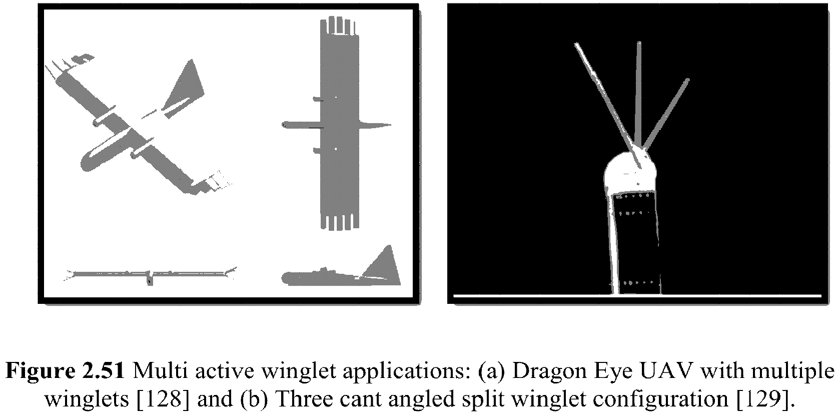

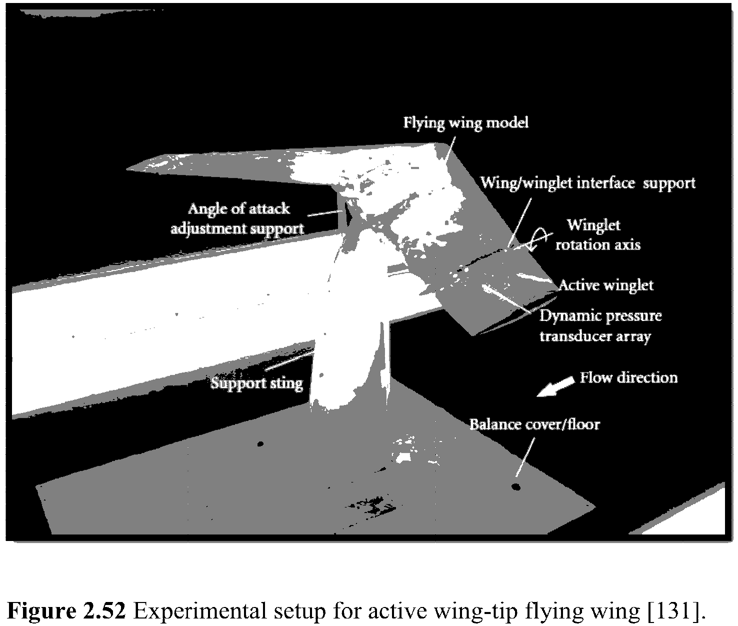

The effect of articulated winglets on wing surface pressure aerodynamics has also been investigated by Gatto et al. [132] [131]. This study aimed to further extend and understand the concept of variable winglets for roll control. In this study, a swept wing model made of blue foam was used with winglet rotation capability set a 0° to ±75° **(Figure 2.52).** Dynamic pressure sensors were also placed inside the wing and winglet model. With results sharing changes in pressure coefficient with dihedral angle changes. This investigation provided insight into the roll control aerodynamic mechanism as well as insight into real time changes in lift distribution.

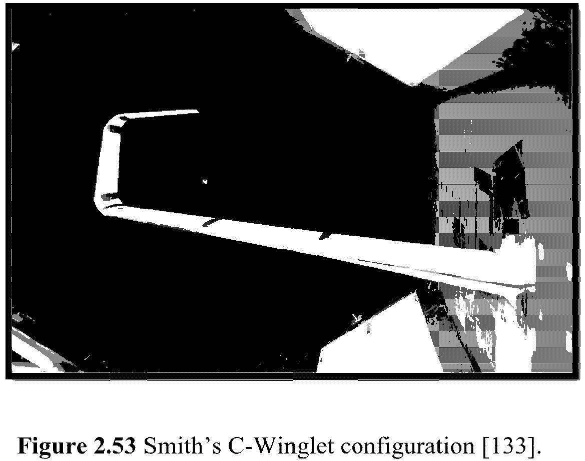

Studies using novel design concepts of twisted and cant angled C wingtip configurations were also presented in [134] [133]. This concept consisted of 4 different degrees of twist and 5 different degrees of cant angle. To decide the wing geometry, TAU CFD codes were used to define optimal conditions. **Figure 2.53** shows the wind tunnel model, angled up to 90° (cant angle). In total, 20 different outboard parts were manufactured and tested with results indicating that in most of the dihedral cases concerned, lift production reduced as the dihedral angle increased. Drag was also found to be considerably lower than expected. For the twist cases, high twist angles tended to increase the lift coefficient with winglet twist angles of up to φ=-3° providing good aerodynamic efficiency.

### 2.8 Morphing Skins

The development of suitable morphing skins is very challenging. The desire to have a suitable aerodynamic fairing to cover the underlying morphing structure is fundamental, but signifies a major problem for morphing technologies. Instead, very few of the concepts for morphing skin deal with the conflicting problems are requiring a smooth and continuous surface that contains adequate structural compliancy while adequately carrying the aerodynamic loads. In widely cited article by Thill et al. [40], potential solutions for flexible morphing skins is presented. In this article, flexibility and stiffness problems in morphing air vehicles are thought to be solved by using novel materials like elastomeric skins, flexible matrix composites, and composite corrugated structures. Many papers mention that elastomers are promising solutions for morphing skins [27] [40][135][136] with one of the most commonly cited being DARPA's high strain-failure silicon skin [27]. The important feature of this skin is that it has low density cross-links, which provides the ability to undergo large deformation as well as the ability to return to the original shape. However, they were generally unsuitable for carrying an aerodynamic load, which questions their suitability. Furthermore, if elastomers work against the strain material, larger actuation power to both hold and actuate the deformed shape is typical. These Elastomer skins for morphing wing skins has also been studied by Kikuta [137]. Different thermoplastic polymers, co-polyesters, and woven materials were investigated experimentally. From test results, Tecoflex 80A was found to be the best polymer material as it more easily strain and return to its original shape, however this material was found to lack the ability to carry the aerodynamic load.

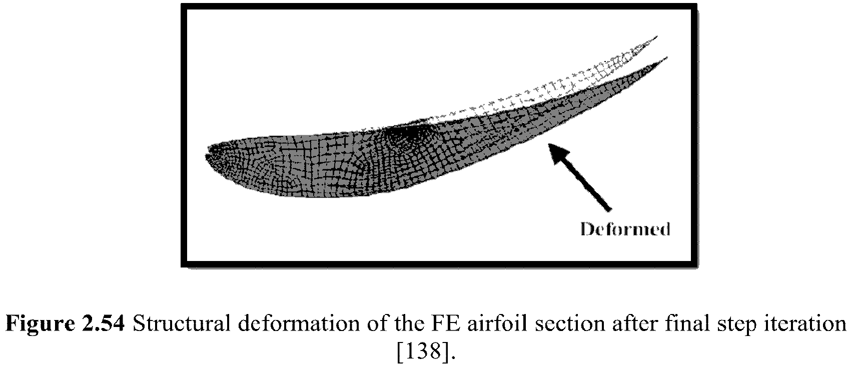

Auxetic materials are another approach in for stretchable structural concepts for morphing aircraft applications. These materials are able to become narrow when compressed and expand when elongated due to their negative Poisson's ratio. These materials can be foams, ceramics, composites, or polymers. Morphing airfoil concepts using such materials hexagonal and chiral honeycomb structures have been studied by Bornengo et al.[138]. A set of numerical (finite element, FE) simulations was carried out into shear and elastic deformations of elements when subjected to uniaxial loading. An acrylonitrile-butadiene-styrene (ABS) plastic honeycomb structure was used within a truss-like internal structure for an adaptive wing box. The box allowed conforming deformations with external flow, giving a variation in the camber-line and trailing-edge displacement of 5mm **(Figure 2.54).**

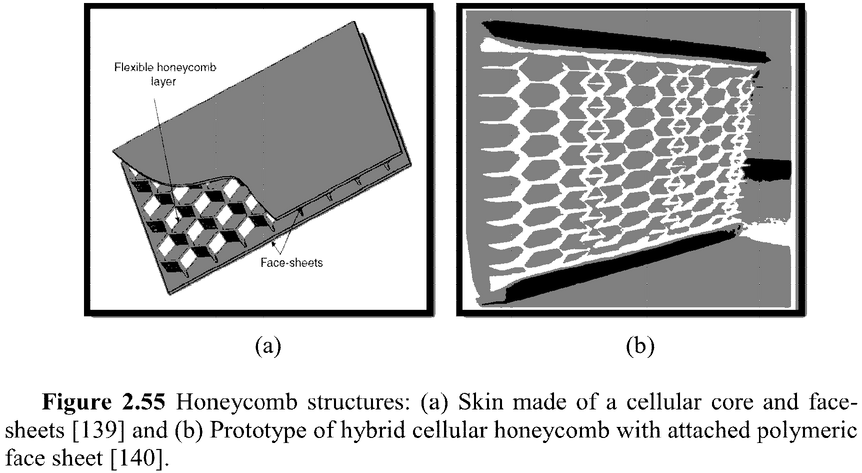

Olympio[141] was the first to suggest the idea of flexible skins comprising a cellular substructure (Honeycomb) and pretension face sheet for morphing applications **(Figure 2.55 (a)**). Olympia and Gandhi et al. [140] [139] [142] extended these concepts by designing the zero Poisson's ratio honeycomb structures for 1D morphing skin applications. This can be seen from **Figure 2.55 (b)**. Comparing the properties shows that the hybrid and accordion honeycombs proposed generally have similar in-plane axial stiffness and strain capabilities as conventional honeycombs when the latter is unrestrained in the non-morphing direction. However, with the zero Poisson's ratio of the hybrid and accordion honeycombs, it is observed that the axial stiffness in the morphing direction will not increase when the skins are restrained in the non-morphing direction. The zero Poisson's ratio of the accordion and hybrid cellular honeycombs is not helpful from an out-of-plane load carrying ability standpoint. However, the out-of-plane load carrying ability of the accordion honeycombs can be superior to those of conventional honeycombs if the 'continuous fibers' are sufficiently thick, leading to a very large modulus in the non-morphing direction. The effective out-of-plane stiffness of hybrid cellular honeycombs, on the other hand, is poorer than conventional cellular honeycombs [140]. Similarly, studies on the design of a flexible skin for a shear morphing wing concept have also investigated a flexible skin and honeycomb structure [5]. According to the research, a honeycomb cellular structure was found to be effective a way to reduce the peak strain, which results in reducing the actuation energy, but wrinkling was found at the face-sheet, which disrupted the aerodynamic smooth surface finish [5]. Similar to Olympio et al[141], elastomeric matrix composites for a passive 1D morphing aircraft skin were investigated by Bubert et al. [143]. This research focused on the development of a passive anisotropic elastomer composite skin with the potential for use in a 1D span-morphing UAV wingtip. The proposed morphing skin prototype including the PAM actuation system is shown in **Figure 2.56**. It can be seen that a flexible honeycomb structure was used to support the out-of-plane loads with the structure covered by a very thin elastomeric fiber composite surface layer. To provide stiffness and correctly align substructures, 4 carbon rods were used. Also, to achieve the span changing, a PAM system was used to extend the honeycomb structures as well as the skin. Design goals of 100% global strain and 100% area change were demonstrated on a laboratory prototype using the combined skin and actuation mechanism. Also, the morphing skin strained smoothly and exhibited a very low in-plane Poisson's ratio [143].

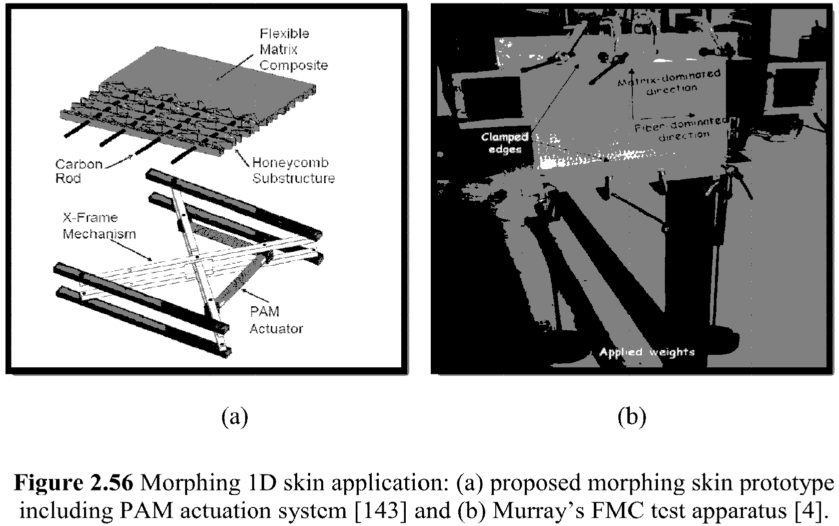

Other efforts at ID morphing skins have been made by Murray et al. [4]. The purpose of this investigation was to analyse the in-plane properties and out of plane deflection of FMC skins. This analysis was then compared with experimental results to validate the concept. The model for the skin comprises a flexible matrix and was constructed using glass fiber and Dragon Skin Shore 10A elastomer matrix. The test setup is shown in **Figure 2.56** (b). As can be seen, the top and the bottom surfaces were clamped, and while the top clamp was secured, weights were suspended from the bottom to extend the FMC skin in the matrix dominated direction. This was done to measure the strain. Other tests were conducted to measure the out of plane midpoint deflection of the membrane when it was clamped along its edges and subjected to out of plane loads. According to the results, aligning the fiber dominated direction to the normal morphing direction does not only impede the in-plane stiffness, but also increases its capacity to carry out of plane loads (it does not deform the skin). However, if the skin uses only the matrix dominated direction, due to low modulus properties, the pretension needed to keep out of plane displacement is limited , leading to rupture [4].

As an alternative, the use of corrugated skins has been investigated by several researchers [136][144][145][146][7][8]. The benefits of these materials allow the wing structure to be stiff to withstand the bending due to aerodynamic forces, but also flexible (chord-wise direction) to adapt to different flight conditions. A fundamental drawback of corrugated laminates however, is their low out of plane stiffness, which is likely to be unable to resist aerodynamic loading at the typical speeds required actual for flight. Yokozeki et al. [136] demonstrated the use of such corrugated composite sheets for flexible wing structures **(Figure 2.57**(a)). The corrugated samples underwent four different tests to assess their mechanical properties with predominantly. Tensile and flexural tests conducted in the longitudinal and transverse directions. A simple analytical model, based on a sinusoidal cross-section of the corrugation, was used to calculate the longitudinal and transverse Young's modulus as well as the longitudinal and transverse flexural modulus of the corrugated structure. The composite corrugated structures were found to be sufficiently rigid against aerodynamic forces. Moreover, as a further improvement, a stiff rod and flexible rubber were used to provide stiffness to the morphing skin in the longitudinal direction. Yokozeki et al. [136] installed stiff carbon fiber rods and one-sided filling (e.g. flexible rubber) as shown in **Figure 2.57** (b). It was found that the flexible rubber decreased the specific stiffness with suggestions that a thin film should be used instead of rubber. Furthermore stiff rods were found to be an effective method of increasing stiffness in the longitudinal direction without loss of flexibility in the transverse direction. Overall these hence the modified composite corrugated skins were found to be very stiff as well as lightweight [136].

Although Yokozeki et al. [136] tried to come up with a smooth aerodynamic surface, a non-smooth surface at low Reynolds numbers could be beneficial Tamai et al. [147]. An experimental study was conducted to investigate the flow behaviour around a corrugated dragonfly airfoil **(Figure 2.58** (a)) compared with a traditional airfoil, and flat plate. The measurement results clearly show that the corrugated dragonfly airfoil performs much better over the traditional airfoil and flat plate in preventing flow separation; the airfoil stalls at a lower Reynolds number **(Figure 2.58** (d)). Also, the detailed PIV measurements near the leading edge of the airfoil provide details of the underlying physics as to why the corrugated dragonfly airfoil can suppress flow separation and stall at low Reynolds numbers. Instead of having laminar separation, the protruding corners of the corrugated dragonfly airfoil were found to be acting as "turbulators", generating unsteady vortices to rapidly promote the transition of the boundary layer from laminar to turbulent [147].

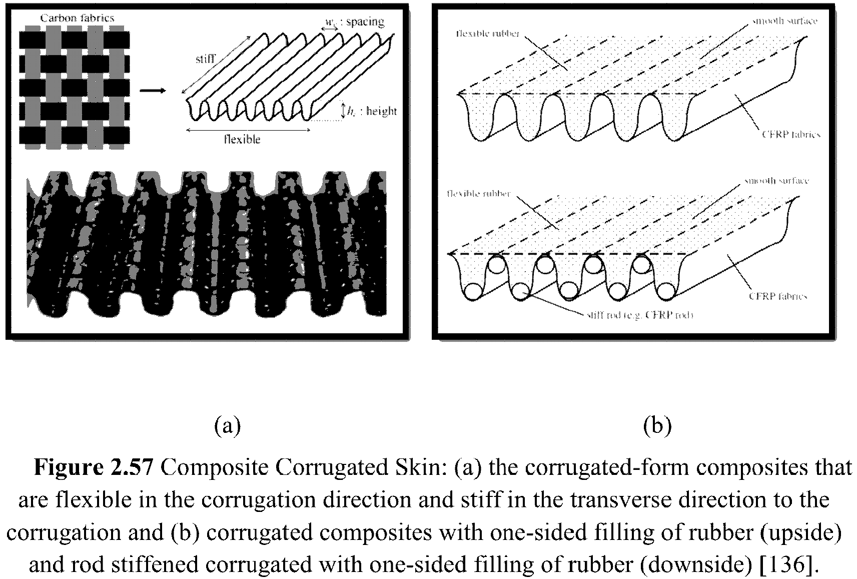

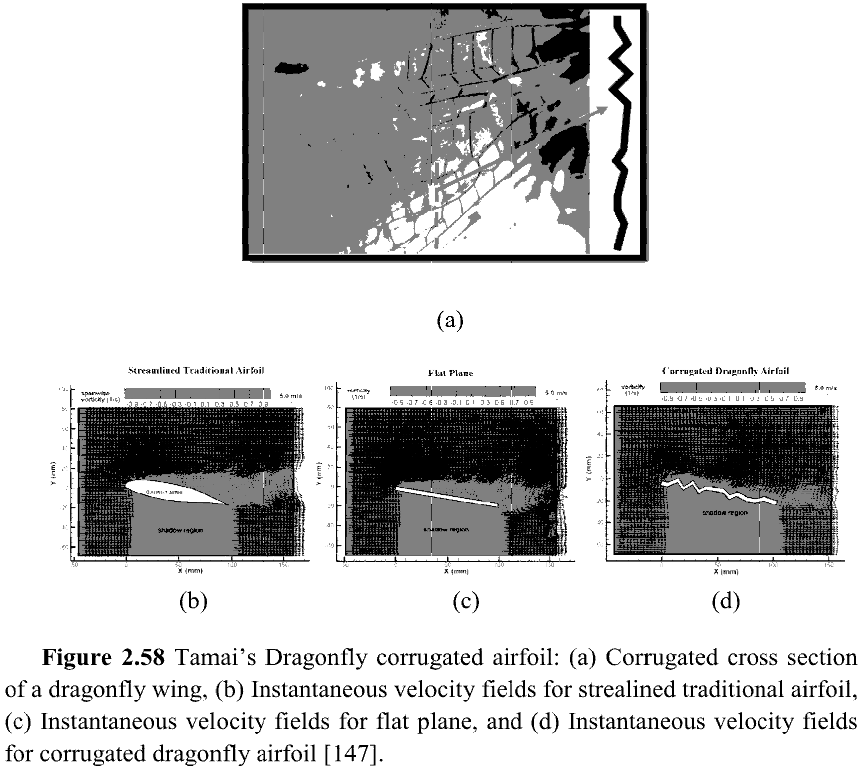

As stated previously, corrugated laminates have very low out of plane stiffness, which prevents them from resisting aerodynamic loading at the speeds required for conventional flight. However, a corrugated sandwich structure (suggested by Thill et al. [148] [149]), has attempted to overcome the out of plane stiffness problem. Experimental analysis of the corrugated sandwich structures is presented in [148]. Various geometries (rectangular, triangular, re-entrant, round, sinusoidal, and trapezoidal) were attempted to analyse the effect of the geometry on the structural elastic strain and equivalent elastic tensile modulus traverse to the corrugation direction. The results show that the rectangular geometry achieved 50% structural strain if stiffness is of no primary concern. Also, corrugated laminates with a traverse equivalent elastic modulus of about 4GPa can be designed. Furthermore, the re-entrant configuration gave the highest strain value while the triangular corrugations had the highest modulus. The results indicate that by using corrugated laminates structures, the requirements for morphing aircraft skin would be met [148]. Although corrugated structures offer potential solutions for morphing skin, they have some detrimental effects on aerodynamic performance due to their non-smooth surfaces. In this regard, Thill et al. [150] investigated the effect of corrugated trailing edged airfoil both experimentally and numerically. Various corrugated models with different corrugations (sinusoidal, triangular, and trapezoidal) were used **(Figure 2.59).** The results highlighted the fact that the aerodynamic performance is highly dependent on the corrugation wavelengths and amplitudes as well as the Reynolds number with the best performance achieve with low amplitude and low wavelength profile. Changing the sinusoidal to triangular and trapezoidal had very effects. Some penalties associated with corrugated skin were also observed. Due to the non-smooth surface, the rear section had a detrimental effect on the aerodynamic performance but these effects were minimised by adequately designing the corrugation shapes. Additionally, to reduce the drag penalty, a segmented skin on top of the corrugated profile was suggested for the suction surface [150].

Details of the structural and aerodynamic behaviour of composite corrugated sandwich structures were investigated by Thill et al. [144]. **Figure 2.60**(a) shows the rectangular corrugated sandwich structure with additional foam supports that were used and applied to the NACA 0024 airfoil profile as a test model. The tested parameters involved changing the chord length (maximum 4%) and deflecting the trailing edge of the structure (maximum 12°). According to the results, as would be 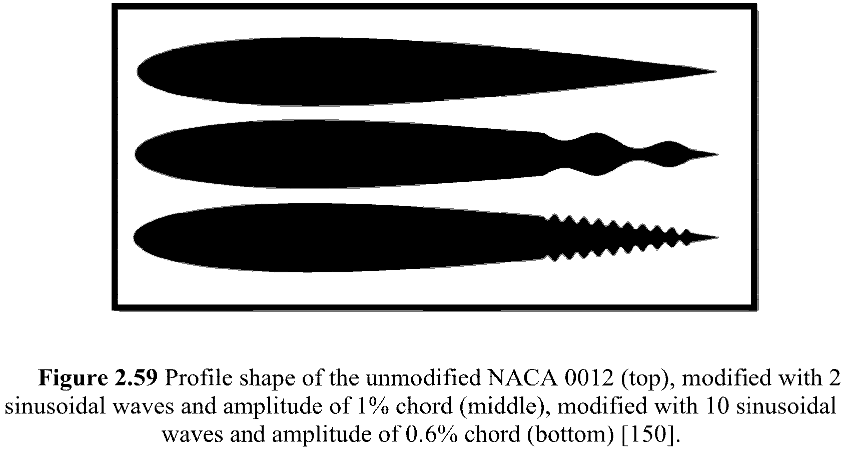 expected, increasing the chord length and deflecting the trailing edge downwards tended to increase the lift slope and in general, results showed that the structure generates a low drag profile. Additional support however is needed to stiffen the morphing skin as well as maintain smooth surfaces, because, as can also be seen in **Figure 2.60** (b), the lower surface bulges inwards when it is not under tension (the wind tunnel demonstration showed the concepts work well under aerodynamic load at only low speeds). The author also noted that as a piece of future work, additional ribs could be developed to prevent the skin bulges [144].

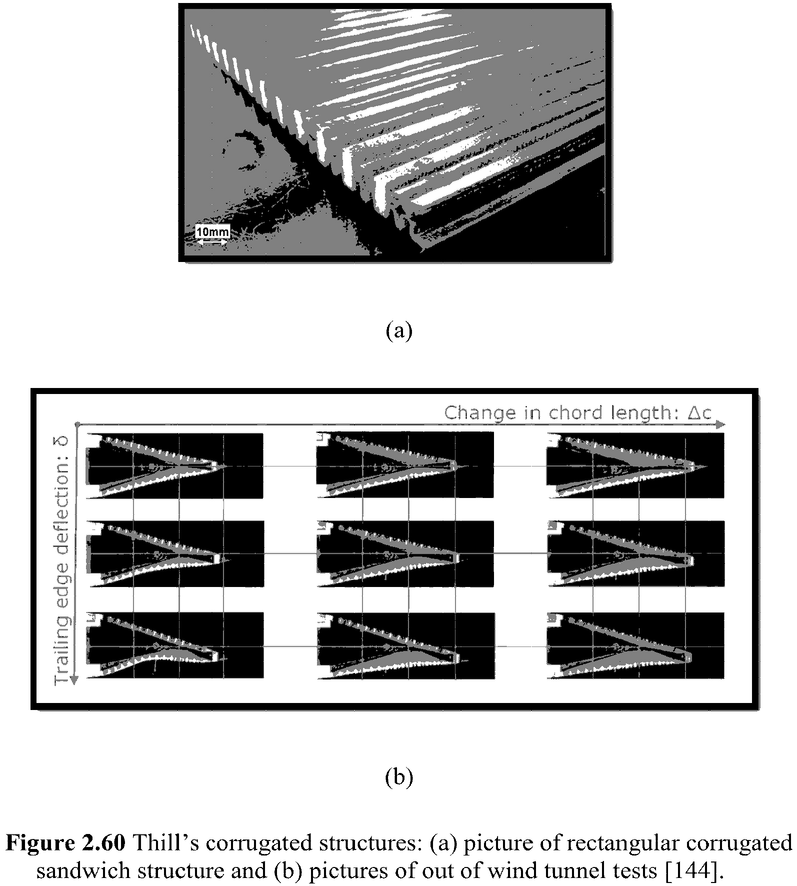

Studies comparing experimental and numerical models for the mechanical behaviour of coated corrugated panels made of glass fiber have been carried out by Dayyani et al. [7]. The results obtained from this study show good agreement between the numerical and experimental testing. Also, Dayyani et al. [7] proposed ideas to deal with the smooth surface problem. According to these ideas, a composite corrugated covered with a pre-stretched coating and a triangular corrugated core with an elastomer coating could be a solution for morphing skin, with the main drawback being corrugated skin requires frequent elastomer covering to provide smooth surfaces. Shaw et al [8] also investigated optimization of a composite corrugated skin for buckling in morphing aircraft. This work analysed the performance of corrugated panels under buckling loads, and optimized the corrugation patterns to improve weight, buckling performance, and actuation compliance.

### 2.9 The Morphing Concept

Previous sections emphasize the morphing skin and mechanism challenges. These include added weight, a compliant skin, and/or overall complexity. These are important reasons for creating novel design concepts to allow the aircraft skin to vary with an aerodynamic smooth surface as well as to provide high stiffness to withstand aerodynamic loads.

A study of early designs and approximation techniques made the assumption that changing the twist in the outboard sections of the wings can improve the desired control forces needed for manoeuvring flight. Wing warping techniques were employed by the Wright Brothers to control the first powered, heavier than air, aircraft through wing twist via subtended cables [2]. Similar to wing twist concepts, winglet twist can also provide performance increases. The use of winglets to increase the aerodynamic efficiency of an aircraft through the production of forward thrust has been around for many years [91]. Unfortunately, fixed positioned winglets do not provide the optimum solution for aircraft performance in all flight regimes as the lift requirements for aircraft can change within a typical flight due to fuel burn. Therefore, ultimately, this proposed concept was aimed to provide a novel alternative mechanism for morphing winglets to enhance the performance and controllability of the aircraft.

Prior to the variable twist concept, a novel design concept was proposed as shown in **Figure 2.61**, which consists of multiple ribs with each rib assembled with multiple carbon rods. As is known for morphing concepts challenges such as surface deformation and the strength under aerodynamic load are the main issues. Therefore, these carbon rods are used at the origin of the wing chord to provide stiffness for the structure and to offer an aerodynamically smooth surface finish while allowing the wing twist. The main Carbon tube is also placed at the quarter chord of the model to provide actuator torque. This also provides durability to the wing structure and alignment together with the other morphing elements.

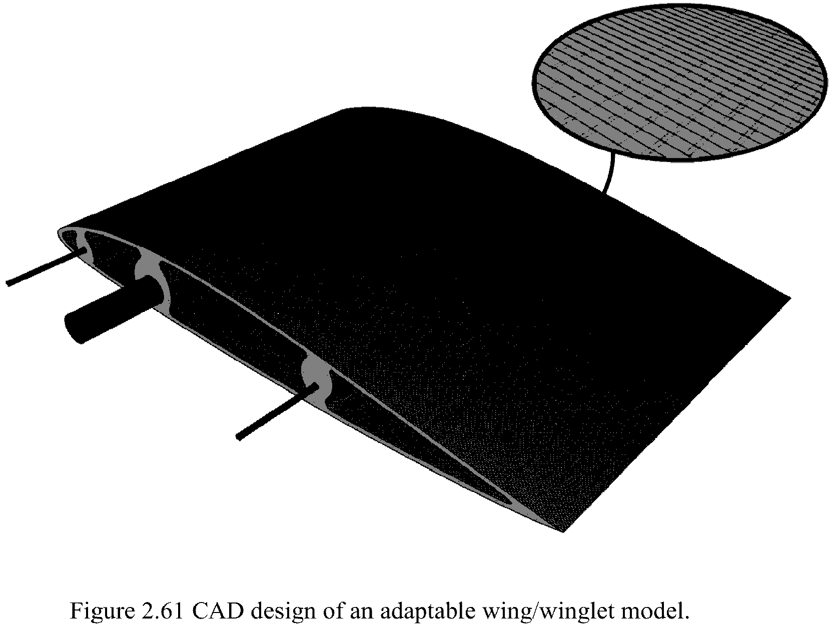

The morphing elements are made of thin wood materials. The thickness size decision was made from initial structural analysis, with the surface smoothness the main consideration to decide the right size for the morphing elements. Following that, the weight of the morphing elements was also reduced to increase twist angle and to reduce friction effects, hence low actuation energy is required to achieve twist. In Assembly, significant attentions needed for the interface between the ribs and rods, consequently they were tightly fitted to reduce any wrinkling and separation on the surface. This helps to achieve the similar drag profile relative the baseline fixed wing configurations. In addition, due to wood's rough surface, morphing elements need to be sanded and lacquered to receive the full benefits of the morphing twist system. A servo actuator is used with a servo-driven mechanism to actuate the twist. To enact twist deformation on the structure, moment (3.43 Nm) was applied to the main carbon tube. This moment was estimated through the torsion equation with desired twist change (minimum ±6°). Although, the friction effects are negligible in this model due to small surface area between each rib and the interface between the ribs and rods, additional torque was also estimated and the servo actuator was chosen based on high torque requirements. To allow the actuator tube to rotate the entire model, an end section was designed and placed at the tip of the structure with rods a fixed. When servo torque is applied to the carbon tube, the end-support would enact twist by rotating all morphing elements correspondingly. This co-ordination was controlled by the carbon rods and the end-section.

One of the important benefits of this concept is the ability to maintain a skin with a low drag (smooth surface finish) while twist deformation in an action. Moreover, the structure is lightweight and strong to carry aerodynamic loads. Comparing with other mechanisms in literature, this mechanism largely meets all requirements addressed for morphing wing challenges. Therefore, it is considered suitable for morphing wing applications and is the principal founds of this research work.

### CHAPTER 3 THE CONCEPT

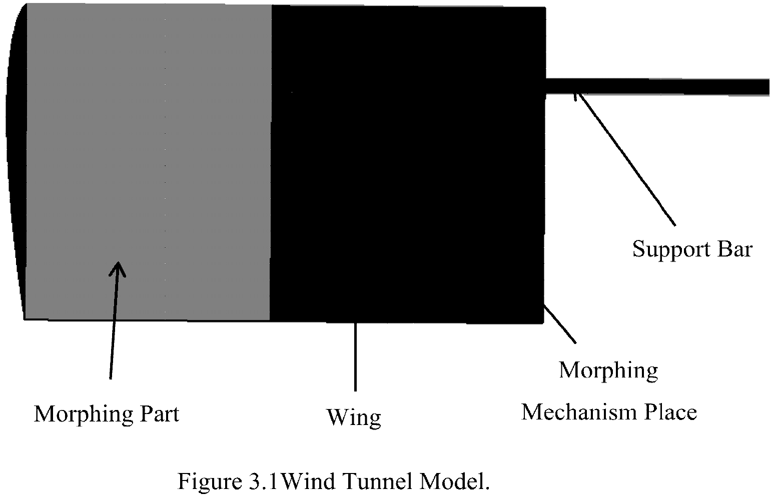

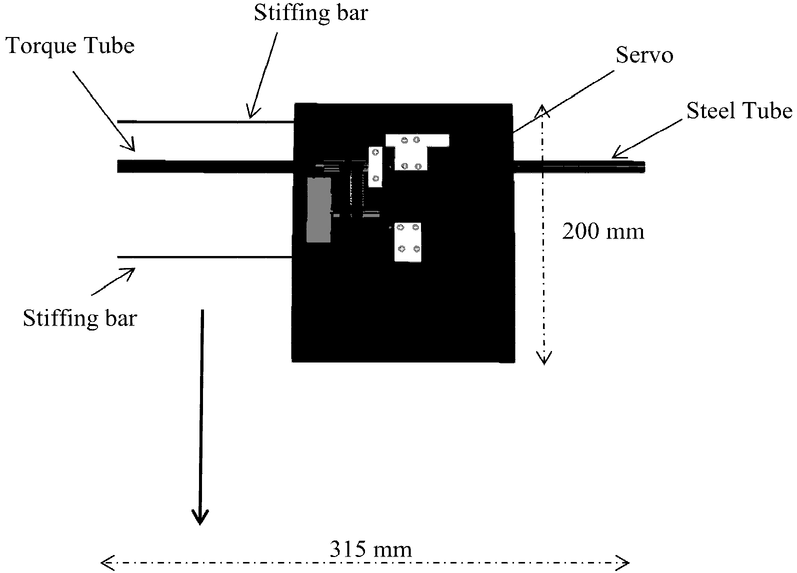

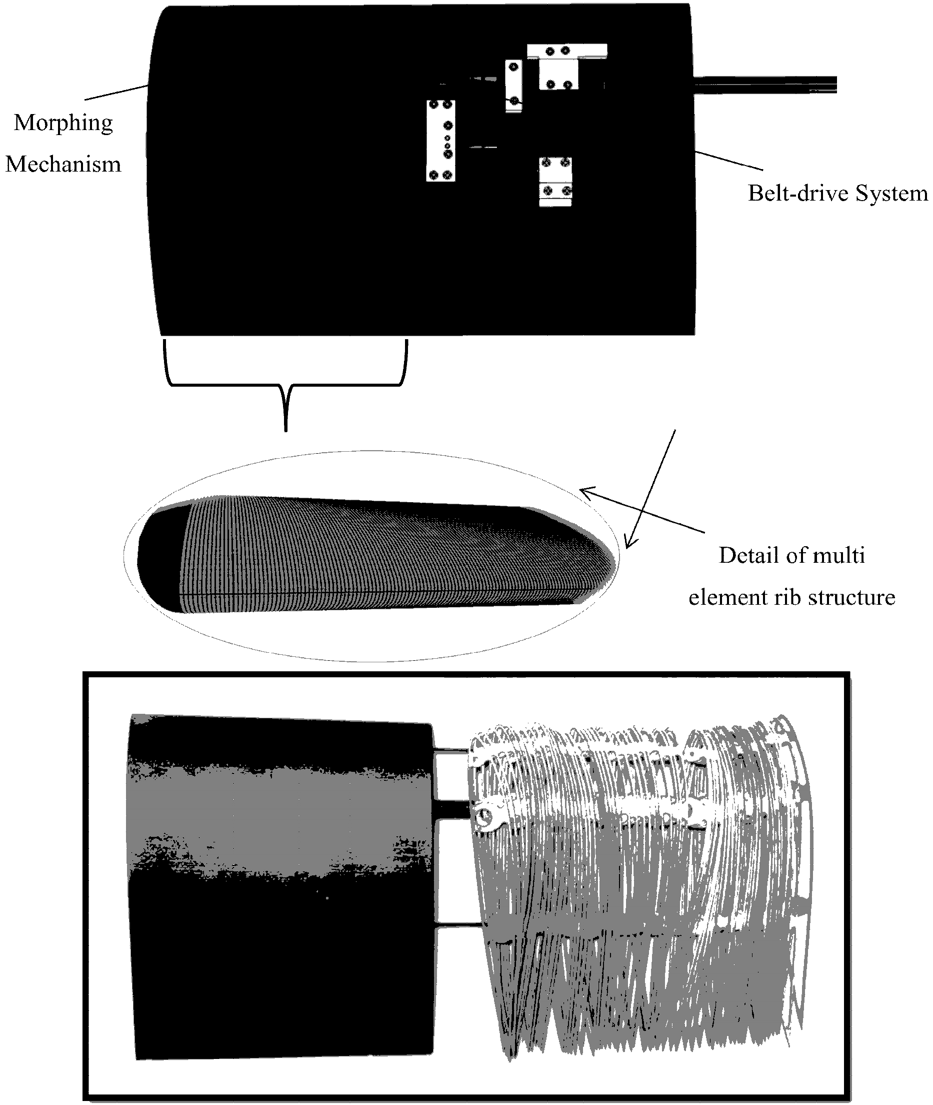

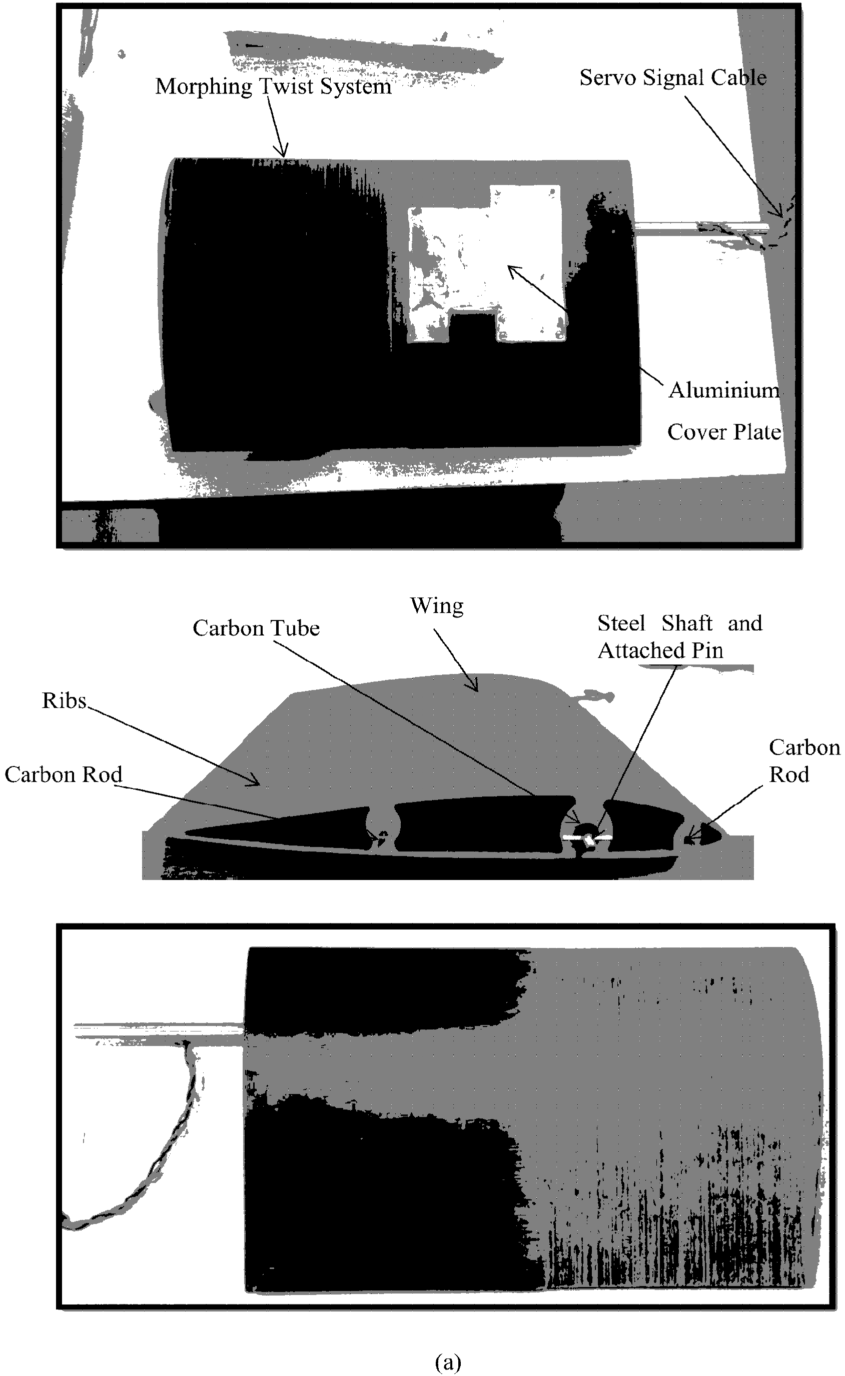

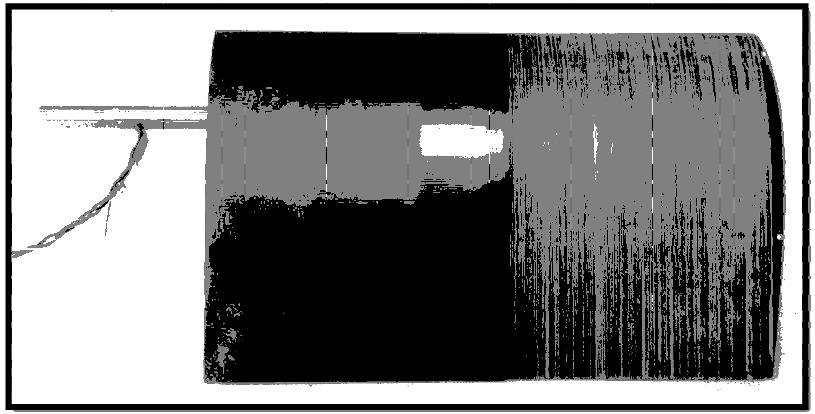

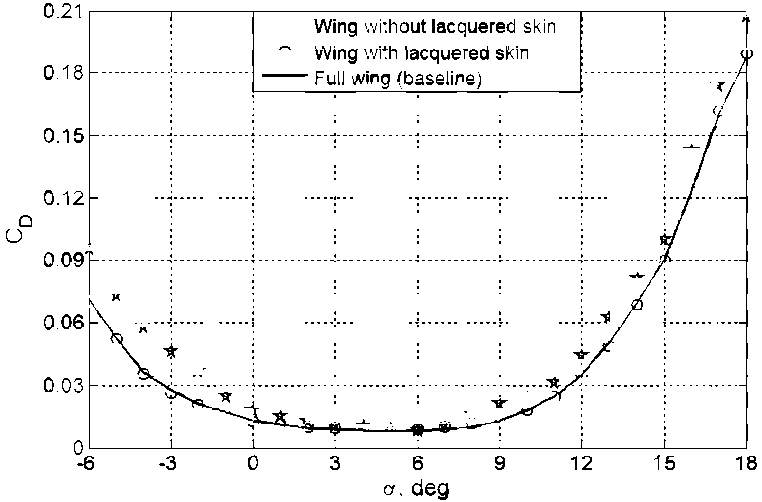

Please ignore the blue stars. The black line outlines the drag characteristics of a completely fixed and rigid wing. The red circles is our new concept. The results are almost identical indicating that the concept does not suffer any aerodynamic disadvantage. 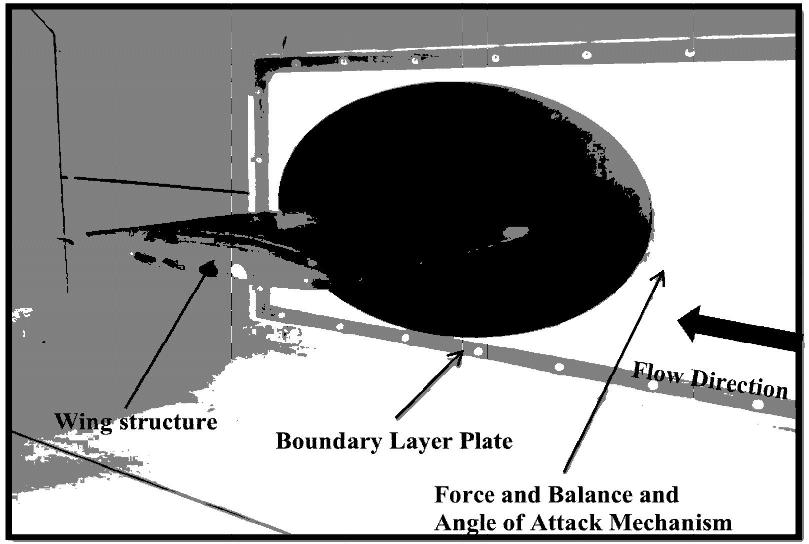 The concept being testing in the wind tunnel 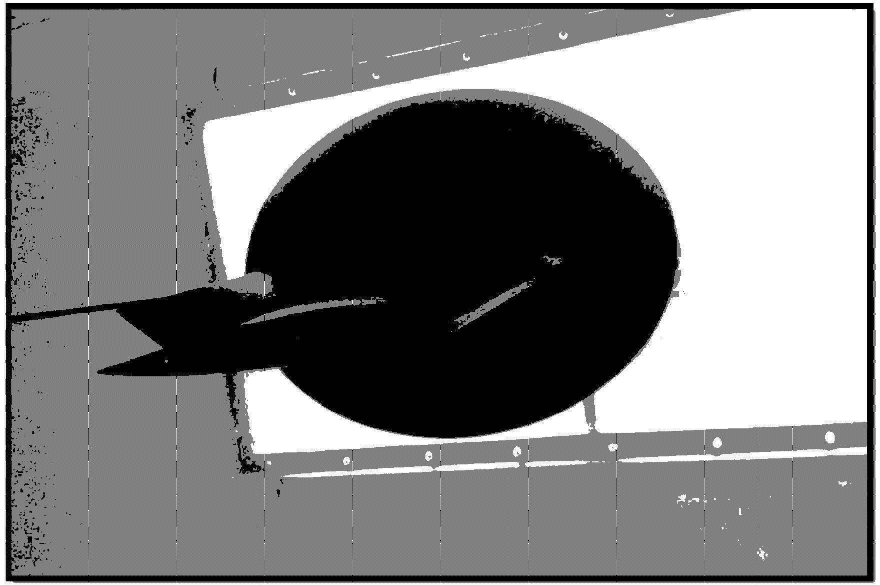 We also tested the concept against fixed controll surfaces used on almost every aircraft today and found measureable advantages in control authority and efficiency

| **No twist** | |
|---|---|
| 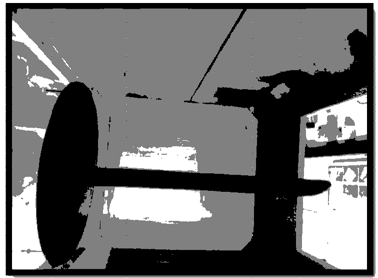 | |
| **-2° twist** | **+2° twist** |
| 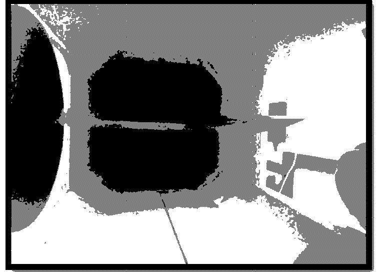 | 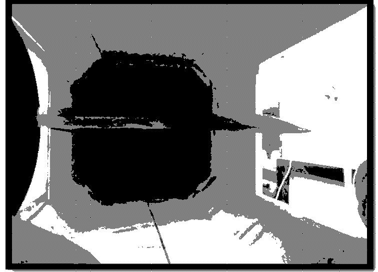 |
| **-4° twist** | **+4° twist** |
| 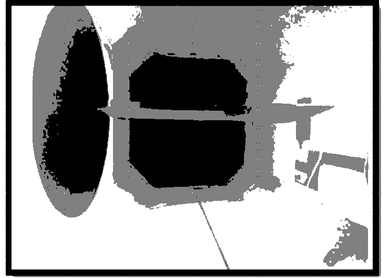 | 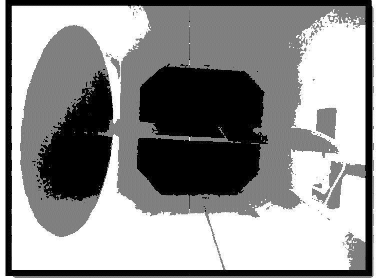 |
| **-6° twist** | **+6° twist** |
| 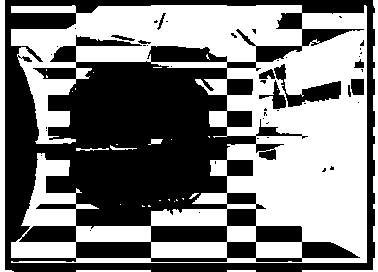 | 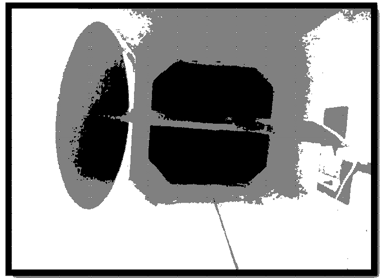 |

Some pictures of the twist actuation in operation in the wind tunnel. 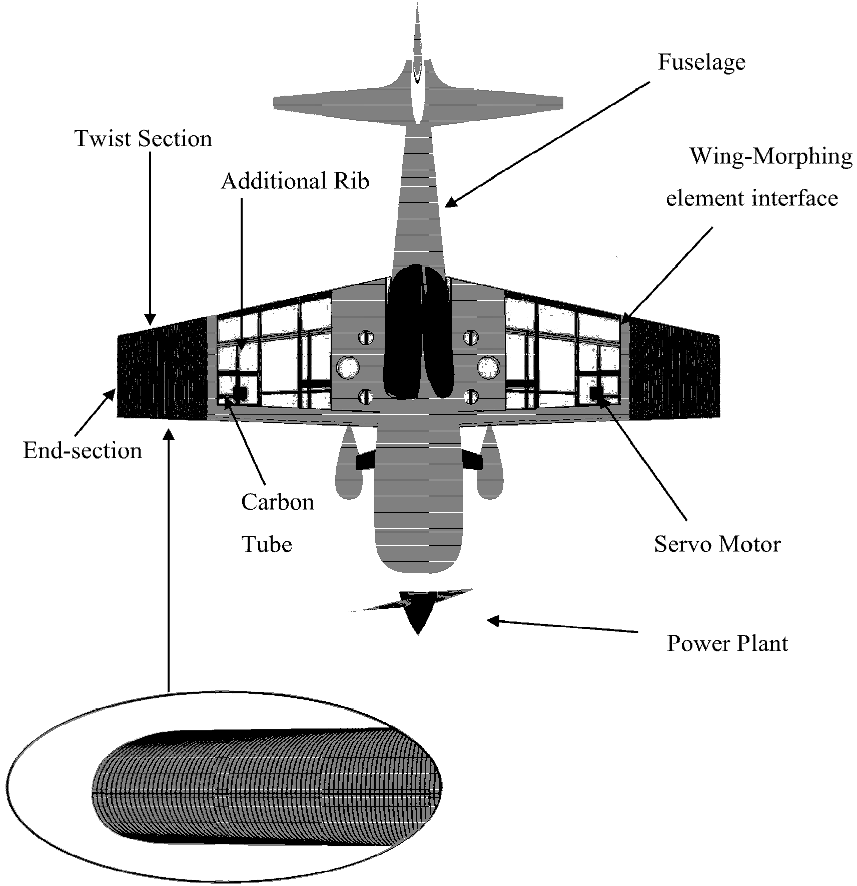 We also integrated the concept onto an actual small-scale model aircraft as you can see here 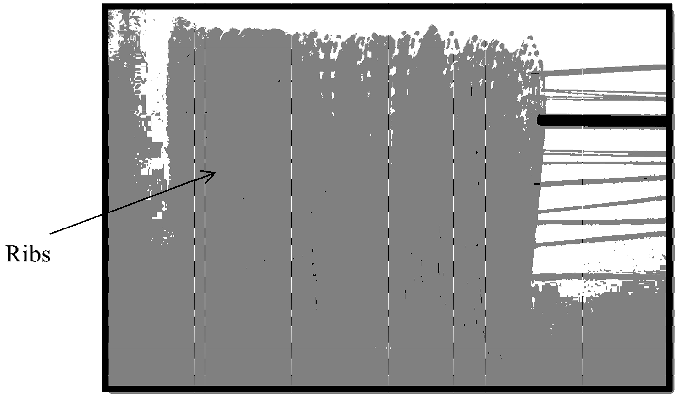 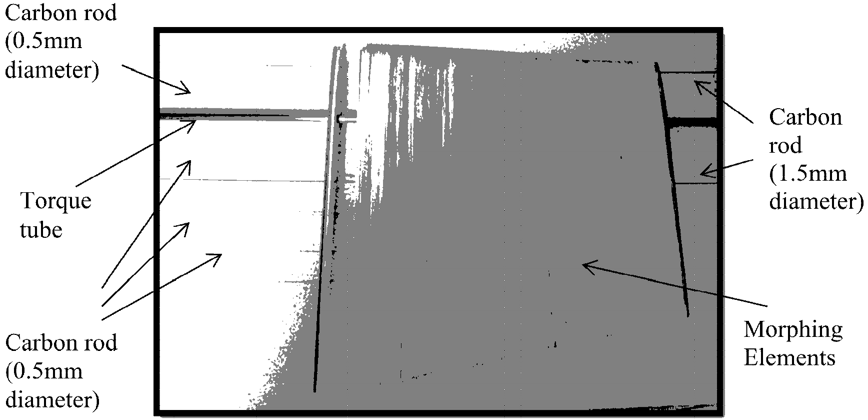 The morphing element and the multi-element rib structure 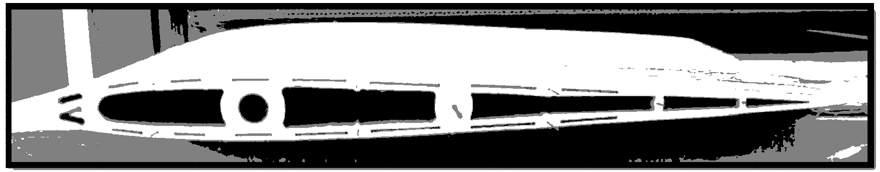 Completed element 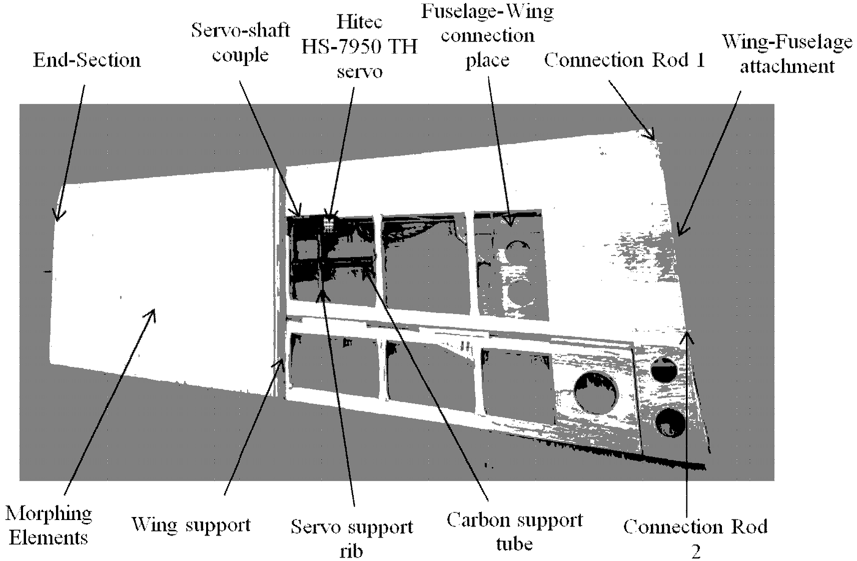 Final structure. 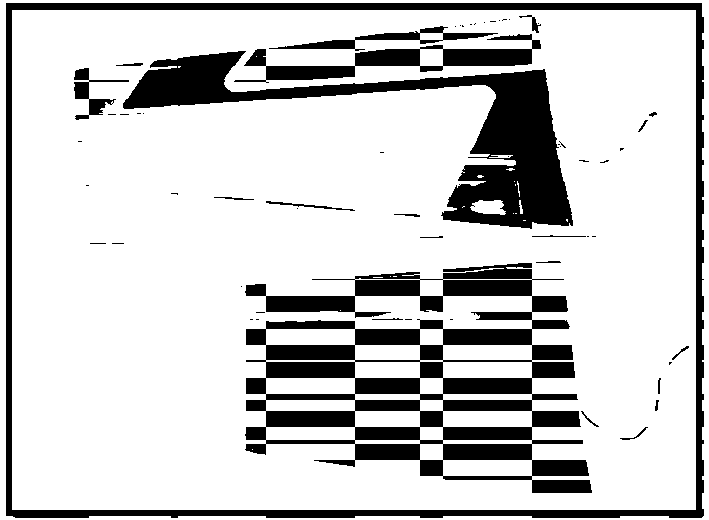 Fixed wing for comparison against our concept. 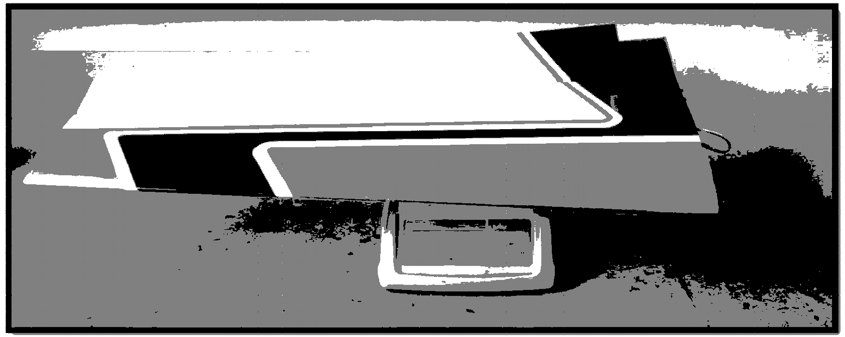 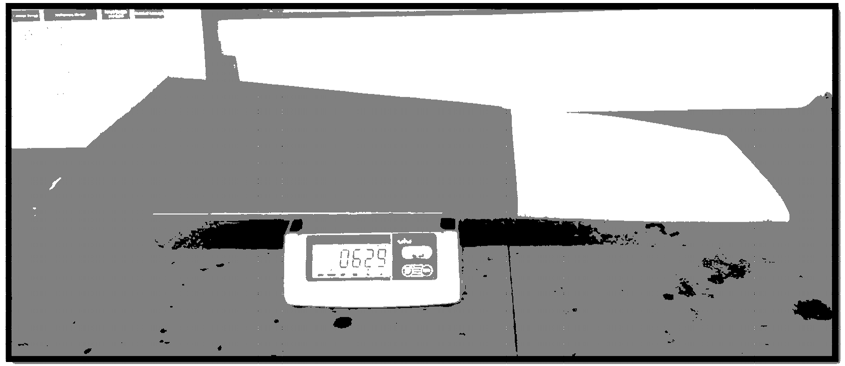 Final weights are very similar - low weight penalty. I would also add that we did not fully optimise the structure of our concept. 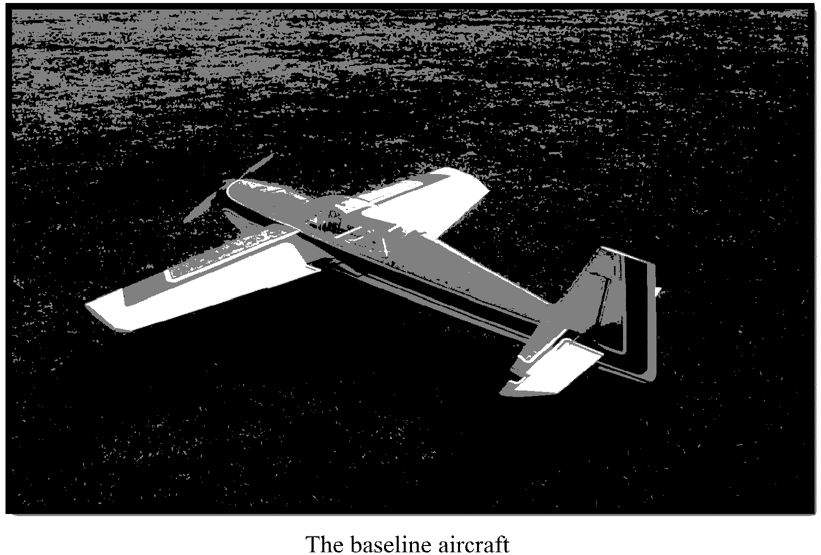 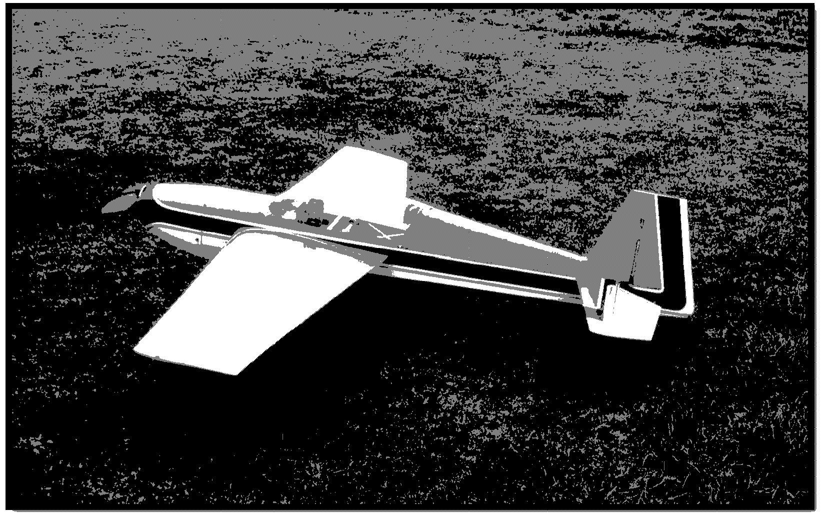 With the concept integrated 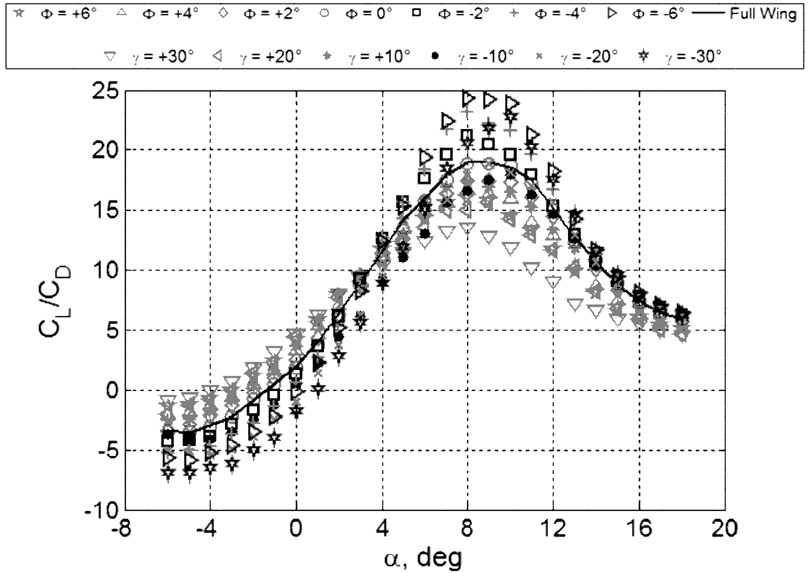 This is perhaps the most important result. It shows that the new concept outperforms the traditional systems used on aircraft today. CL/CD is a measure of aerodynamic efficiency

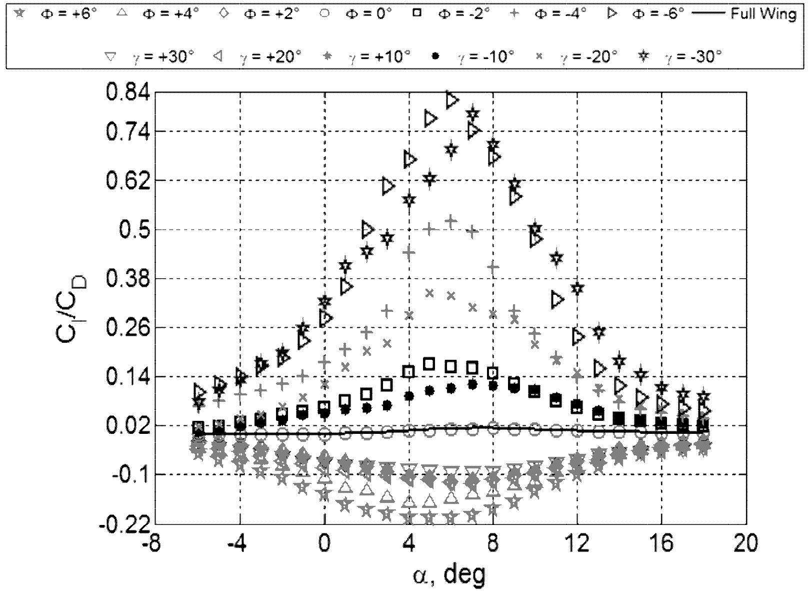

This figure also shows results that indicate it produces superior control moments with less aerodynamic drag. 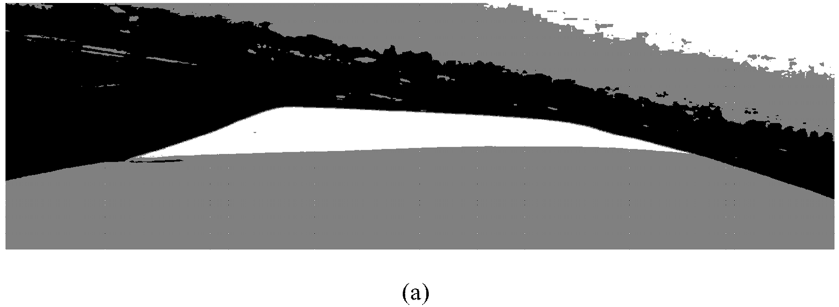 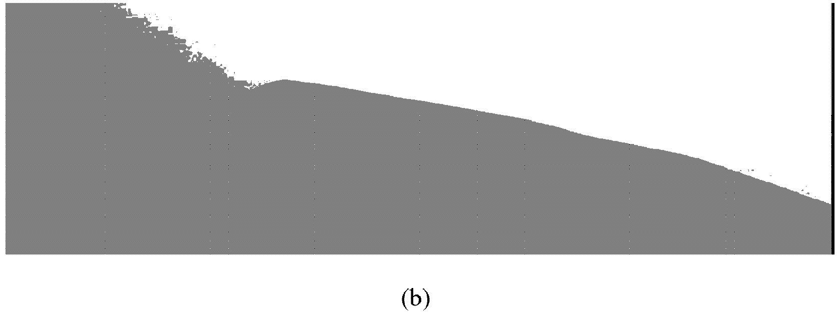 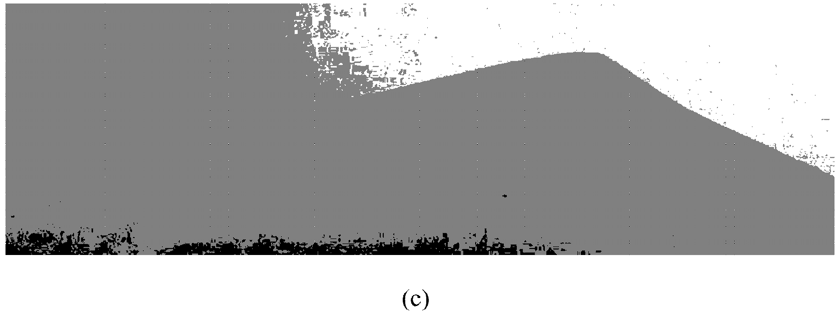 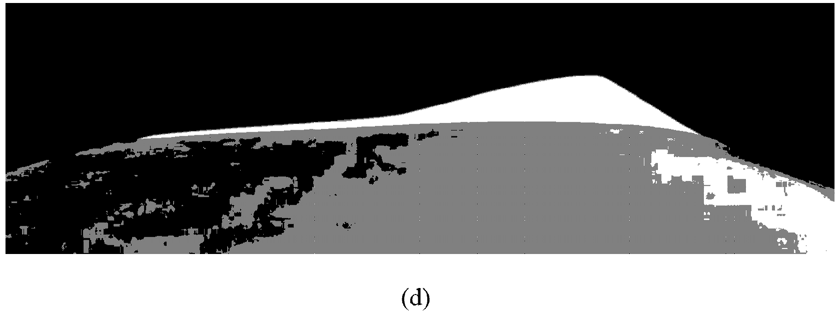 The new system in action being flown 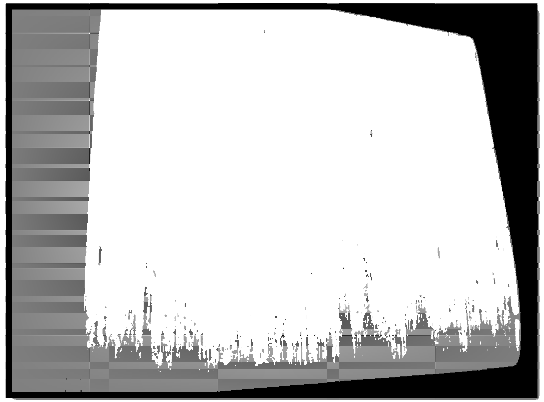 The morphing system after the flight.

### REFERENCES

[1] D. McRuer and D. Graham, "Flight Control Century: Triumphs of the Systems Approach," J. Guid. Control. Dyn., vol. 27, no. 2, pp. 161-173, 2004.
[2] F. E. C. Culick, "The Wright Brothers : First Aeronautical Engineers," vol. 41, no. 6, pp. 8-11, 2003.
[3] A. K. Jha and J. N. Kudva, "Morphing Aircraft Concepts, Classifications, and Challanges," vol. 5388, pp. 213-224, Jul. 2004.
[4] G. Murray, F. Gandhi, and C. Bakis, "Flexible Matrix Composite Skins for One-dimensional Wing Morphing," J. Intell. Mater. Syst. Struct., vol. 21, no. 17, pp. 1771-1781,2010.
[5] K. R. Olympio, F. Gandhi, L. Asheghian, and J. Kudva, "Design of a Flexible Skin for a Shear Morphing Wing," J. Intell. Mater. Syst. Struct., vol. 21, no. 17, pp. 1755-1770, 2010.
[6] E. a. Bubert, B. K. S. Woods, K. Lee, C. S. Kothera, and N. M. Wereley, "Design and Fabrication of a Passive 1D Morphing Aircraft Skin," J. Intell. Mater. Syst. Struct., vol. 21, no. 17, pp. 1699-1717, 2010.
[7] I. Dayyani, S. Ziaei-Rad, and M. I. Friswell, "The mechanical behavior of composite corrugated core coated with elastomer for morphing skins," J. Compos. Mater., vol. 48, no. 13, pp. 1623-1636, 2013.
[8] A. D. Shaw, I. Dayyani, and M. I. Friswell, "Optimisation of composite corrugated skins for buckling in morphing aircraft," Compos. Struct., vol. 119, pp. 227-237, Jan. 2015.
[9] P. H. F., "The Parker Variable Camber Wing," Washington, 1920.
[10] V. J. Bumelli, "Burnelli GX3," 1,917,428.
[11] J. A. D. Ackroyd and N. Riley, "Hermann Glauert FRS, FRAeS (1892 - 1934)," vol. 1, pp. 22-73, 2011.
[12] W. Document, "Makhonin's -telescoping-wing." [Online]. Available: http://www.ww2aircraft.net/forum/ other-mechanical-systems-tech/ makhonine-telescoping-wing-8527.html. [Accessed: 01-Dec-2013].
[13] John Valasek, Morphing Aerospace Vehicles and Structures, 1st ed. West Sussex: John Wiley and Son Ltd, 2012.
[14] V.B.Shavrov, "History of aircraft construction in the USSR," vol. 2, pp. 118-120.
[15] National Museum of the United States Air Force, "REPUBLIC XF-91 THUNDERCEPTOR." .
[16] Y. G. and B. Dunbar, "NASA Armstrong Fact Sheet: X-5 Research Aircraft," NASA*..*
[17] T. A. Weisshaar and T. H. E. M. Challenge, "Morphing Aircraft Technology - New Shapes for Aircraft Design," 2006.
[18] R. J. H., "Mission Adaptive Wing Camber Control Systems for Transport Aircraft," AIAA Pap., pp. 85-5006, 1985.
[19] V. K. K. & L. J. Y. R. Zheng Min, "Aircraft morphing wing concepts with radical geometry change," IES J. Part A Civ. Struct. Eng., vol. 3, no. 3, pp. 188-195,2010.
[20] "MiG 105-11," Encyclopedia Astronautica.*.*
[21] P. W. Merlin, "A new twist in flight research: the F-18 active aeroelastic wing project," in nasa aeronautics book series, 2013.
[22] R. W. DeCAMP, "Mission Adaptive Wing Research Programme," Aircr. Eng.
[23] H. R. J. Norman D.K, Gangsaas D., "An integrated maneuver enhancement and gust alleviation mode for the AFTI/F-11 MAW aircraft," in AIAA Guidance, Navigation and Control Conference and Exhibit, 1983, vol. 83, p. 2217.
[24] J. W. Smith, W. P. Lock, and G. a. Payne, "Variable-camber systems integration and operational performance of the AFTI/F-111 mission adaptive wing." 1992.
[25] E. W. Pendleton, D. Bessette, P. B. Field, G. D. Miller, and K. E. Griffin, "Active Aeroelastic Wing Flight Research Program: Technical Program and Model Analytical Development," J. Aircr., vol. 37, no. 4, pp. 554-561, 2000.
[26] D. Voracek, E. Pendleton, E. Reichenbach, K. Griffin, and L. Welch, "The Active Aeroelastic Wing Phase I Flight Research Through January 2003," no. April, 2003.
[27] J. N. Kudva, "Overview of the DARPA Smart Wing Project," J. Intell. Mater. Syst. Struct., vol. 15, no. 4, pp. 261-267, 2004.
[28] B. P. Kudva, J. N., Martin, C. A., Scherer, L. B., Jardine, A. P., McGowan, A. R., Lake, R. C., Sendeckyj, G. P., and Sanders, "Overview of DARPA/AFRL/NASA Smart Wing Program," 1997, pp. 230-236.
[29] NASA, "21st Century Aerospace Vehicle, Morphing Airplane." .
[30] T. G. Ivanco, R. C. Scott, M. H. Love, S. Zink, and T. a. Weisshaar, "Validation of the Lockheed Martin morphing concept with wind tunnel testing," vol. 23, p. 26, 2007.
[31] T. a. Weisshaar, "Morphing Aircraft Systems: Historical Perspectives and Future Challenges," J. Aircr., vol. 50, no. 2, pp. 337-353, 2013.
[32] K. Joshi, S. P., Jha, A. K. Rodrian, J. E., Alphenaar, R. A., and Szema, "Design of the NextGen MorphingWingWind Tunnel Model," AIAA Pap. 2007, p. 1731.
[33] D. J. Anderson, G. R., Cowan, D. L., and Piatek, "Aeroelastic Modeling, Analysis and Testing of a Morphing Wing Structure," in 48th AIAA/ASME/ASCE/AHS/ASC Structures, Structural Dynamics and Materials Conference, p. 1734.
[34] A. Y. N. Sofia, S. a. Meguid, K. T. Tan, and W. K. Yeo, "Shape morphing of aircraft wing: Status and challenges," Mater. Des., vol. 31, no. 3, pp. 1284-1292, Mar. 2010.
[35] S. P. Joshi, Z. Tidwell, W. A. Crossley, S. Ramakrishnan, P. Engineer, and S. Engineer, "Comparison of Morphing Wing Strategies Based Upon Aircraft Performance Impacts," no. April, pp. 1-7, 2004.
[36] B. D. Roth and W. A. Crossley, "AIAA 2003-6733 AIAA 2003-6733 Application of Optimiation Techniques in the Conceptual Design of Morphing Aircraft," no. November, pp. 1-11, 2003.
[37] E. T. Martin and W. A. Crossley, "AIAA 2002-5859 Multiobjective Aircraft Design to Investigate Potential Geometric Morphing Features," no. October, pp. 1-8, 2002.
[38] S. Ricci and M. Terraneo, "Application of MDO techniques to the preliminary design of morphed aircraft," no. September, pp. 1-14, 2006.
[39] R. De Breuker, M. Abdalla, Z. Gürdal, and D. Lindner, "Energy-Based Aeroelastic Analysis of a Morphing Wing," vol. 6523, no. 0, pp. 652308-652308-12, Apr. 2007.
[40] C. Thill, J. Etches, I. Bond, K. Potter, and P. Weaver, "Morphing skins," no. 3216, pp. 1-23, 2008.
[41] A. V. and L. Z. Ignazio Dimino, Monica Ciminello, Antonio Concilio, Rosario Pecora, Francesco Amoroso, Marco Magnifico, Martin Schueller, Andre Gratias, "Distributed Actuation and Control of a Morphing Wing Trailing Edge," Smart Intell. Aircr. Struct. Proc. Final Proj. Conf., 2016.
[42] D. Moorhouse, B. Sanders, M. Von Spakovsky, and J. Butt, "Benefits and design challenges of adaptive structures for morphing aircraft," Aeronaut. J., vol. 110, no. 1105, pp. 157-162, 2006.
[43] J. R. Butt, "A Study of Morphing Wing Effectiveness in Fighter Aircraft using Exergy Analysis and Global Optimization Techniques," p. 141, 2005.
[44] B. Sanders, "Aerodynamic and Aeroelastic Characteristics of Wings with Conformal Control Surfaces for Morphing Aircraft Introduction," vol. 40, no. 1,2003.
[45] J.-S. Bae, T. M. Seigler, and D. J. Inman, "Aerodynamic and Static Aeroelastic Characteristics of a Variable-Span Morphing Wing," J. Aircr., vol. 42, no. 2, pp. 528-534, Mar. 2005.
[46] J. Wittmann, H. Steiner, and A. Sizmann, "Framework for Quantitative Morphing Assessment," 50th AIAA/ASME/ASCE/AHS/ASC Struct. Struct. Dyn. Mater. Conf., no. May, pp. 1-18, 2009.
[47] S. Barbarino, O. Bilgen, R. M. Ajaj, M. I. Friswell, and D. J. Inman, "A Review of Morphing Aircraft," J. Intell. Mater. Syst. Struct., vol. 22, no. 9, pp. 823-877, Aug. 2011.
[48] J. C. Gomez and E. Garcia, "Morphing unmanned aerial vehicles," Smart Mater. Struct., vol. 20, no. 10, p. 103001, Oct. 2011.
[49] M. I. Friswell, "The prospects for morphing aircraft," pp. 1-14.
[50] D. A. Neal and H. Robertshaw, "Design, Control, and Experimental Modelling of a Morphing Aircraft Configuration," pp. 1-10.
[51] J. Blondeau, J. Richeson, D. J. Pines, and A. Norfolk, "Design , development and testing of a morphing aspect ratio wing using an inflatable telescopic spar 44th AIAA / ASME / ASCE / AHS Structures , Structural," Aerosp. Eng., vol. 1718, no. April, pp. 1-11, 2003.
[52] J. B. Samuel and D. J. Pines, "Design and Testing of a Pneumatic Telescopic Wing for Unmanned Aerial Vehicles," J. Aircr., vol. 44, no. 4, pp. 1088-1099, 2007.
[53] Y. Kubo, M. Miyazaki, and K. Kato, "Effects of end plates and blockage of structural members on drag forces," J. Wind Eng. Ind. Aerodyn., vol. 32, no. 3, pp. 329-342, Oct. 1989.
[54] R. D. Vocke, C. S. Kothera, B. K. S. Woods, and N. M. Wereley, "Development and Testing of a Span-Extending Morphing Wing," J. Intell. Mater. Syst. Struct., vol. 22, no. 9, pp. 879-890, 2011.
[55] R. M. Ajaj, E. I. Saavedra Flores, M. I. Friswell, G. Allegri, B. K. S. Woods, a. T. Isikveren, and W. G. Dettmer, "The Zigzag wingbox for a span morphing wing," Aerosp. Sci. Technol., vol. 28, no. 1, pp. 364-375, 2013.
[56] R. M. Ajaj, E. I. S. Flores, M. I. Friswell, and B. K. S. Woods, "Structural Design and Modelling of the Zigzag Wingbox for Span Morphing Wing," pp. 1-18, 1931.
[57] D. A. Perkins, "Adaptive wing structures," Proc. SPIE, vol. 5762, pp. 132-142, 2005.
[58] R. Jones, "Wing Planforms for High-Speed Flight," 1945.
[59] N. Marmier, P., Werely, "Morphing Wings of a Small Scale UAV Using Inflatable Actuators for Sweep Control," in 44th AIAA/ASME/ASCE/AHS/ASC Structures, Structural Dynamics, and Materials Conference*.*
[60] D. A. N. Iii, D. J. Inman, and C. Woolsey, "Design , Development , and Analysis of a Morphing Aircraft Model for Wind Tunnel Experimentation by Design , Development, and Analysis of a Morphing Aircraft Model for Wind Tunnel Experimentation," 2006.
[61] F. Mattioni, A. Gatto, P. Weaver, M. Friswell, and K. Potter, "The application of residual stress tailoring of snap-through composites for variable sweep wings," 47th AIAA/ASME/ASCE/AHS/ASC Struct. Struct. Dyn. Mater. Conf. 14th AIAA/ASME/AHS Adapt. Struct. Conf. 7th, no. May, pp. 1-12, May 2006.
[62] J. J. Joo, "Optimal actuator location within a morphing wing scissor mechanism configuration," Proc. SPIE, vol. 6166, no. May 2012, pp. 616603-616603-12, 2006.
[63] L. Prandtl, "Application of Modern Hydrodynamics to Aeronautics," Naca, vol. 116, no. 116. 1923.
[64] W. F. Phillips, "Lifting-Line Analysis for Twisted Wings and Washout-Optimized Wings," J. Aircr., vol. 41, no. 1, pp. 128-136, 2004.
[65] W. F. Phillips, N. R. Alley, and W. D. Goodrich, "Lifting-Line Analysis of Roll Control and Variable Twist," J. Aircr., vol. 41, no. 5, pp. 1169-1176, 2004.
[66] R. Barrett, "Active aeroelastic tailoring of an adaptive Flexspar stabilator," Smart Mater. Struct., vol. 5, no. 6, pp. 723-730, 1996.
[67] D. Sahoo and C. Cesnik, "Roll maneuver control of UCAV wing using anisotropic piezoelectric actuators," 43rd AIAA/ASME/ASCE/AHS/ASC Struct. Struct. Dyn. Mater. Conf., no. April, pp. 1-11, 2002.
[68] H. Garcia, M. Abdulrahim, and R. Lind, "Roll Control for a Micro Air Vehicle Using Active Wing Morphing," in AIAA Guidance, Navigation and Control Conference (Austin, TX), 2003, pp. 1-12.
[69] B. Stanford, M. Abdulrahim, R. Lind, and P. Ifju, "Investigation of Membrane Actuation for Roll Control of a Micro Air Vehicle," J. Aircr., vol. 44, no. 3, pp.741-749,2007.
[70] M. Abdulrahim, H. Garcia, G. F. Ivey, and R. Lind, "Flight Testing A Micro Air Vehicle Using Morphing For Aeroservoelastic Control," J. Aircr., vol. 42, N° 1, no. January- February, pp. 1-17, 2005.
[71] M. Majji, O. Rediniotis, and J. Junkins, "Design of a Morphing Wing: Modeling and Experiments," AIAA Atmos. Flight Mech. Conf. Exhib., pp. 1-9, Aug. 2007.
[72] R. Vos, Z. Gurdal, and M. Abdalla, "Mechanism for Warp-Controlled Twist of a Morphing Wing," J. Aircr., vol. 47, no. 2, pp. 450-457, Mar. 2010.
[73] D. M. Elzey, A. Y. N. Sofia, and H. N. G. Wadley, "A bio-inspired, high-authority actuator for shape morphing structures," Proc. SPIE, vol. 5053, pp. 92-100, 2003.
[74] A. Y. N. Sofla, D. M. Elzey, and H. N. G. Wadley, "Two-way Antagonistic Shape Actuation Based on the One-way Shape Memory Effect," J. Intell. Mater. Syst. Struct., vol. 19, no. 9, pp. 1017-1027, 2008.
[75] H. Lv, J. Leng, and S. Du, "A Survey of Adaptive Materials and Structures Research in China," in 50th AIAA/ASME/ASCE/AHS/ASC Structures, Structural Dynamics, and Materials Conference, 2009, no. May, pp. 1-8.
[76] M. Abdulrahim and R. Lind, "Flight Testing and Response Characteristics of a Variable Gull-Wing Morphing Aircraft," no. August, 2004.
[77] M. Majji, "Robust Control of Redundantly Actuated Dynamical System," Texas A&M Univesity, 2006.
[78] J. E. Cooper, "Adaptive Stiffness Structures for Air Vehicle Drag Reduction," Multifunct. Struct. Sensors Antennas, Meet. Proc. RTO-MP-AVT-141, pp. 15.1 - 15.12, 2006.
[79] K. E. Griffin and M. a. Hopkins, "Smart Stiffness for Improved Roll Control," J. Aircr., vol. 34, no. 3, pp. 445-447, 1997.
[80] P. C. Chen, D. Sarhaddi, R. Jha, D. D. Liu, S. Antonio, R. Yurkovich, and T. B. Company, "Variable stiffness spar approach for aircraft manoeuvre enhancement using ASTROS," J. Aircr., vol. 37, no. 5, 2000.
[81] R. M. Ajaj, M. I. Friswell, W. G. Dettmer, G. Allegri, and a. T. Isikveren, "Performance and control optimisations using the adaptive torsion wing," Aeronaut. J., vol. 116, no. 1184, pp. 1061-1077, 2012.
[82] R. M. Ajaj, "Roll control of a Male UAV using the adaptive torsion wing," no. 3809, pp. 299-314, 2013.
[83] R. M. Ajaj, M. I. Friswell, D. D. Smith, G. Allegri, a T. Isikveren, A. Concepts, D. Chief, and T. Officer, "Roll Control of a UAV Using an Adaptive Torsion Structure," Aerosp. Eng., no. April, pp. 1-15, 2011.
[84] R. M. Ajaj, M. I. Friswell, W. G. Dettmer, G. Allegri, a T. Isikveren, A. Concepts, D. Chief, and T. Officer, "Conceptual Modeling of an Adaptive Torsion Wing Structure," Aerosp. Eng., no. April, pp. 1-15, 2011.
[85] S. Barbarino, E. I. S. Flores, R. M. Ajaj, I. Dayyani, and M. I. Friswell, "A review on shape memory alloys with applications to morphing aircraft," Smart Mater. Struct., vol. 23, no. 6, p. 063001-, 2014.
[86] D. J. Hartl and D. C. Lagoudas, "Aerospace applications of shape memory alloys," Proc. Inst. Mech. Eng. Part G J. Aerosp. Eng., vol. 221, no. 4, pp. 535-552, 2007.
[87] N. C., C. A., and K. Y, "Application of shape memory alloy (SMA) spars for aircraft maneuver enhancement," in Smart Structures and Materials, 2002, pp. 226-23.
[88] J. D. Jacob, A. Simpson, and S. Smith, "Design and Flight Testing of Inflatable Wings with Wing Warping," SAE World Aerosp. Congr., pp. 1-3392:1306-15, 2005.
[89] B. K. Woods, O. Bilgen, and M. I. Friswell, "Wind tunnel testing of the fish bone active camber morphing concept," J. Intell. Mater. Syst. Struct., vol. 25, no. 7, pp. 772-785, Feb. 2014.
[90] R. Eppler, "Induced drag and winglets," Aerosp. Sci. Technol., vol. 1, no. 1, pp. 3-15, 1997.
[91] R. T. Whitcomb, "Wind Tunnel Subsonic Mounted Approach Results Speeds For and At Selected Wing-tip Winglets National Aeronautics and Space Administration •," Washington D. C., 1976.
[92] R. Hallion, "NASA's Contributions to Aeronautics: Aerodynamics, Structures, Propulsion, and Controls," Washington, 2010.
[93] J. M. Kuhlman and P. Liaw, "Winglets on low-aspect-ratio wings," vol. 25, no. 10, pp. 932-941, 1988.
[94] A. P., L. Smrdek, and F. N. Coton, "Aerodynamic design and experimental investigation of the sailplane wingtip devices," Acta Polytech., vol. 43, no. 3, 2003.
[95] M. R. Soltani, K. Ghorbanian, and M. Nazarinia, "Experimantal Investigation of The Effect of Various Winglet Shapes On The Total Pressure Distribution Behind a Wing."
[96] M. Nazarinia, M. R. Soltani, and K. Ghorbanian, "Experimental Study of Vortex Shapes behind a Wing Equipped with Di erent Winglets," vol. 3, no. 1, pp. 1-15,2006.
[97] I. Kroo, "Nonplanar Wing Concepts For Increased Aircraft Efficiency Introduction -- Why Nonplanar Wings ? What is possible ? Assessing the Potential," pp. 1-29, 2005.
[98] A. Ning and I. Kroo, "Tip Extensions, Winglets, and C-wings: Conceptual Design and Optimization," 26th AIAA Appl. Aerodyn. Conf., Aug. 2008.
[99] M. I. Inam, M. Mashud, A. Al-Nahian, and S. M. S. Selim, "Induced drag reduction for modern aircraft without increasing the span of the wing by using winglet," Int. J. Mech. Mech. Eng., vol. 10, no. 3, pp. 69-74, 2010.
[100] A. Hossain, P. Raj, A. Rahman, and A. Aziz, "Analysis of Longitudinal Aerodynamic Characteristics of an Aircraft Model with and Without Winglet," vol. 2, no. 3, pp. 143-150, 2008.
[101] R. Babigian and S. Hayashibara, "Computational Study of the Vortex Wake Generated by a Three-Dimensional Wing with Dihedral, Taper, and Sweep," in 27th AIAA Applied Aerodynamics Conference, 2009, no. June, pp. 1-13.
[102] J. F. Halpert, D. H. Prescott, T. R. Yechout, and M. Arndt, "Aerodynamic Optimization and Evaluation of KC-135R Winglets , Raked Wingtips , and a Wingspan Extension," no. January, 2010.
[103] G. Heller, P. Kreuzer, S. Dirmeier, and F. D. Gmbh, "Development and Integration of A New High Performance Wingtip Device For Transonic Aircraft," pp. 1-7, 2002.
[104] A Beechook and J. Wang, "Aerodynamic Analysis of Variable Cant Angle Winglets for Improved Aircraft Performance," no. September, pp. 13-14, 2013.
[105] S. C. Yen and Y. F. Fei, "Winglet Dihedral Effect on Flow Behavior and Aerodynamic Performance of NACA0012 Wings," J. Fluids Eng., vol. 133, no. 7, p. 071302, 2011.
[106] P. Gerontakos and T. Lee, "Effects of Winglet Dihedral on a Tip Vortex," vol. 43,no.1,pp.2-9,2006.
[107] R. Faye and Micheal Winter, "Blended winglets," Boeing, no. 17, 2012.
[108] AIRBUS, "Airbus launches Sharklet retrofit for in-service A320 Family aircraft." .
[109] AIRBUS, "AIRBUS A350 XWB," 2015..
[110] H. G. Klug and P. E. F. Peters, "Auxiliary wing tips for an aircraft," 1988.
[111] V. Tucker, "Gliding birds: reduction of induced drag by wing tip slots between the primary feathers," J. Exp. Biol., vol. 180, no. 1, pp. 285-310, 1993.
[112] M. J. Smith, N. Komerath, R. Ames, O. Wong, and J.Pearson, "Performance Analysis Of A Wing With Multiple Winglets," 2001.
[113] S. G and S. B., "Experimental Investigation on the Effect of Multi-Winglets," Int. J. Mech. Ind. Eng., vol. 1, no. 1, pp. 43-46, 2011.
[114] P. Bourdin, A.. Gatto, and M. Friswell, "The Application of Variable Cant Angle Winglets for Morphing Aircraft Control," in 24th Applied Aerodynamics Conference, 2006, no. June, pp. 1-13.
[115] P. Bourdin, A. Gatto, and M. I. Friswell, "Aircraft Control via Variable Cant-Angle Winglets," Journal of Aircraft, vol. 45, no. 2. pp. 414-423, 2008.
[116] P. Bourdin, A. Gatto, and M. I. Friswell, "Potential of Articulated Split Wingtips for Morphing-Based Control of a Flying Wing," in 25th AIAA Applied Aerodynamics Conference, 2007, no. June, pp. 1-16.
[117] P. Bourdin, A. Gatto, and M. I. Friswell, "Performing co-ordinated turns with articulated wing-tips as multi-axis control effectors," Aeronaut. J., vol. 114, no. 1151, pp. 35-47, 2010.
[118] N. Ameri, "Modelling Continuously Morphing Aircraft for Flight Control," no. August, pp. 1-23, 2008.
[119] N. Ameri, M. Lowenberg, and M. Friswell, "Modelling the dynamic response of a morphing wing with active winglets," AIAA Atmos. Flight ..., no. August, 2007.
[120] N. M. Ursache, T. Melin, A. T. Isikveren, and M. I. Friswell, "Morphing Winglets for Aircraft Multi-phase Improvement," 7th AIAA Aviat. Technol. Integr. Oper. Conf. ATIO May, no. September, pp. 18 - 20, 2007.
[121] N. M. Ursache, T. Melin, a T. Isikveren, and M. I. Friswell, "Technology integration for active poly-morphing winglets development," Proc. ASME Conf. Smart Mater. Adapt. Struct. Intell. Syst. SMASIS2008, vol. 1, pp. 775-782, 2008.
[122] A. Gatto, F. Mattioni, and M. I. Friswell, "Experimental Investigation of Bistable Winglets to Enhance Aircraft Wing Lift Takeoff Capability," J. Aircr., vol. 46, no. 2, pp. 647-655, Mar. 2009.
[123] L. Falcão, A. Gomes, and A. Suleman, "Multidisciplinary Design Optimisation of a Morphing Wingtip," 2nd Int. Conf. Eng. Optim., pp. 1-7, 2010.
[124] L. Falcao, A. a Gomes, and A. Suleman, "Design and Analysis of an Adaptive Wingtip," in 52nd AIAA/ASME/ASCE/AHS/ASC Structures, Structural Dynamics and Materials Conference, 2011.
[125] L. Falcao, a. a. Gomes, and a. Suleman, "Aero-structural Design Optimization of a Morphing Wingtip," J. Intell. Mater. Syst. Struct., vol. 22, no. 10, pp. 1113-1124, 2011.
[126] D. D. Smith and R. M. Ajaj, "Multiobjective Optimization for the Multi-Phase Design of Active Polymorphing Wings," in 52nd AIAA/ASME/ASCE/AHS/ASC Structures, Structural Dynamics and Materials Conference<, 2011, no. 4-7 April.
[127] D. D. Smith, R. M. Ajaj, and S. Park, "Multi-diciplinary Design Optimization Of An Active Morphing Wing," in 27th International congress of the Aeronautical Sciences, 2010, pp. 1-11.
[128] A. Shelton, A. Tomar, J. Prasad, M. Smith, and N. Komerath, "Active Multiple Winglets for Improved Unmanned-Aerial-Vehicle Performance," J. Aircr., vol. 43, no. 1, pp. 110-116, 2006.
[129] C. R., C. F.M., C. L.G.N., and E. R.M.U., "Aerodynamic Analysis of Multi-Winglets for Low," in 27th International congress of the Aeronautical Sciences, 2010, pp. 1-10.
[130] F. M. Catalano, "Experimental Analysis Of Aerodynamics Characteristics Of Adaptive Multi--Winglets," in 24th International congress of the Aeronautical Sciences, 2004, pp. 1-9.
[131] A. Gatto, P. Bourdin, and M. I. Friswell, "Experimental investigation into the control and load alleviation capabilities of articulated winglets," Int. J. Aerosp. Eng., vol. 2012, 2012.
[132] A. Gatto, P. Bourdin, and M. I. Friswell, "Experimental Investigation into Articulated Winglet Effects on Flying Wing Surface Pressure Aerodynamics," J. Aircr., vol. 47, no. 5, pp. 1811-1815, 2010.
[133] D. D. Smith, M. H. Lowenberg, D. P. Jones, and M. I. Friswell, "Computational and Experimental Validation of the Active Morphing Wing," J. Aircr., vol. 51, no. 3, pp. 925-937, May 2014.
[134] D. D. Smith, M. H. Lowenberg, D. P. Jones, M. I. Friswell, and S. Park, "Computational and Experimental Analysis Of The Active Morphing Wing Concept," 2012, pp. 1-9.
[135] M. M. Keihl, R. S. Bortolin, B. Sanders, S. Joshi, and Z. Tidwell, "Mechanical properties of shape memory polymers for morphing aircraft applications," in Smart Structures and Materials 2005: Industrial and Commercial Applications of Smart Structures Technologies, 2005.
[136] T. Yokozeki, S. I. Takeda, T. Ogasawara, and T. Ishikawa, "Mechanical properties of corrugated composites for candidate materials of flexible wing structures," Compos. Part A Appl. Sci. Manuf, vol. 37, no. 10, pp. 1578-1586, 2006.
[137] M. T. Kikuta, "Mechanical Properties of Candidate Materials for Morphing Wings," Virginia Polytechnic Institute and State University, 2003.
[138] D. Bornengo, F. Scarpa, and C. Remillat, "Evaluation of hexagonal chiral structure for morphing airfoil concept," Proc. Inst. Mech. Eng. Part G J. Aerosp. Eng., vol. 219, no. 3, pp. 185-192, 2005.
[139] K. R. Olympio and F. Gandhi, "Flexible Skins for Morphing Aircraft Using Cellular Honeycomb Cores," J. Intell. Mater. Syst. Struct., vol. 21, no. 17, pp. 1719-1735,2010.
[140] K. R. Olympio and F. Gandhi, "Zero Poisson's Ratio Cellular Honeycombs for Flex Skins Undergoing One-Dimensional Morphing," J. Intell. Mater. Syst. Struct., vol. 21, no. 17, pp. 1737-1753, 2010.
[141] K. R. Olympio, "Design of a passive flexible skin for morphing aircraft structure," The Pennsylvania State Univesity, 2006.
[142] K. Olympio and F. Gandhi, "Zero-v Cellular Honeycomb Flexible Skins for One-Dimensional Wing Morphing," in 48th AIAA/ASME/ASCE/AHS/ASC Structures, Structural Dynamics, and Materials Conference*.*
[143] E. a. Bubert, B. K. S. Woods, K. Lee, C. S. Kothera, and N. M. Wereley, "Design and Fabrication of a Passive ID Morphing Aircraft Skin," J. Intell. Mater. Syst. Struct., vol. 21, no. 17, pp. 1699-1717, Sep. 2010.
[144] C. Thill, J. a Etches, I. P. Bond, K. D. Potter, and P. M. Weaver, "Composite corrugated structures for morphing wing skin applications," Smart Mater. Struct., vol. 19, no. 12, p. 124009, 2010.
[145] Y. Xia and M. I. Friswell, "Equivalent models of corrugated laminates for morphing skins," vol. 7977, p. 797711-797711-10, 2011.
[146] Y. Xia, O. Bilgen, and M. I. Friswell, "The effect of corrugated skins on aerodynamic performance," J. Intell. Mater. Syst. Struct., vol. 25, no. 7, pp. 786-794, 2014.
[147] M. Tamai, Z. Wang, G. Rajagopalan, and H. Hu, "Aerodynamic Performance of a Corrugated Dragonfly Airfoil Compared with Smooth Airfoils at Low Reynolds Numbers," 45th AIAA Aerosp. Sci. Meet. Exhib., pp. 1-12, 2007.
[148] C. Thill, J. a Etches, I. P. Bond, P. M. Weaver, and K. D. Potter, "Experimental and parametric analysis of corrugated composite structures for morphing skin applications," 19Th Int. Conf. Adapt. Struct. Technol., 2008.
[149] C. Thill, J. a. Etches, I. P. Bond, K. D. Potter, P. M. Weaver, and M. R. Wisnom, "Investigation of trapezoidal corrugated aramid/epoxy laminates under large tensile displacements transverse to the corrugation direction," Compos. Part A Appl. Sci. Manuf., vol. 41, no. 1, pp. 168-176, 2010.
[150] C. Thill, J. D. Downsborough, S. J. Lai, I. P. Bond, and D. P. Jones, "Aerodynamic study of corrugated skins for morphing wing applications," Aeronaut. J., vol. 114, no. 1154, pp. 237-244, 2010.
[151] H. Y. Mark Drela, "AVL 3.30 User Primer."
[152] C. E. Lan, "A quasi-vortex-lattice method in thin wing theory," vol. 11, no. 9, 1974.
[153] Krishnamoorthy Karamcheti, "Principles of ideal fluid aerodynamics." John Wiley & Sons, New York, p. 518, 1967.
[154] R. L. Pereira, "Validation of software for the calculation of aerodynamic coefficients w i th a focus on the software package Tornado," p. 55, 2010.
[155] F. Hitchens, "Reflex Camber Airfoil," The Encyclopedia of Aerodynamics. Andrews UK Limited, 2015.
[156] P. J. Roache, "Quantification of Uncertainty in Computational Fluid Dynamics," Annu. Rev. Fluid Mech., vol. 29, no. 1, pp. 123-160, 1997.
[157] C. Marchi and A. Silva, "Multi-dimensional discretization error estimation for convergent apparent order," J. Brazilian Soc. Mech...., vol. XXVII, no. 4, 2005.
[158] "ANSYS Mechanical APDL Theory Reference," vol. 15317, no. November, pp.724-746, 2013.
[159] TheConnector, "Easy Meshing with Structured Accuracy." [Online]. Available: http://www.pointwise.com/theconnector/May-2012/Overset-Grids-in-Pointwise.shtml. [Accessed: 24-Aug-2015].
[160] J. T. M. and C. T. Shaw, Finite Elements in Mechanical Design. McGraw Hill International, 1996.
[161] A. Inc., "ANSYS 10.0 Documentation : Selecting a Solver," 2005.
[162] A. Barlow, J. B., Rae, W. H., Jr., and Pope, Low-Speed Wind Tunnel Testing, 3rd ed. New York: Wiley-Interscience, 1999.
[163] C. J. Wenzinger, "Wind Tunnel Investigations of aodinary and split flaps on airfoils of different profile," Langley Field, VA, 1935.
[164] R. C. P. and J. A. Shortal, "Wind Tunnel Investigations of wings with ordinary ailerons and full span external airfoil flaps," Langley Field, VA., 1937.
[165] M. Sadraey, Aircraft Design: A Systems Engineering Approach, Chapter 12 Design of Control Surfaces. Wiley Publications, 2012.
[166] P. F. Ailerons and F. Ailerons, "ProAdvice 3 : AILERON SIZING," pp. 1-12, 2011.
[167] S. Esdu, "Rolling moment derivative , L ξ for plain ailerons at subsonic speeds," no. August 1988, 1992.
[168] I. H. Abbott and A. E. Von Doenhoff, "Theory of Wing Sections: Including a Summary of Airfoil data," Press, vol. 11, p. 693, 1959.
[169] I. Lekakis, "Calibration and signal interpretation for single and multiple hot-wire/hot-film probes," Meas. Sci. Technol., vol. 7, no. 10, pp. 1313-1333, 1999.
[170] F. E. Jorgensen, "How to measure turbulence with hot-wire anemometersa practical guide," Dantec Dyn., p. 3244, 2002.
[171] A. INC., "MC3A manual(Dynanometer Instructions)." p. 2000.
[172] AMTI, "DigiAmp Technical Reference Manual," 2003.
[173] A. M. T. Inc., "Dynamometer Instructions (MC3A manual)." Watertown, Massachusetts.
[174] P. W. C. E. L Houghton, Aerodynamics for Engineering Students, 5th ed. Oxford: Butterworth Heinemann, 2003.
[175] F. M. T. J. and B. T., "Experimental studies of the Eppler 61 airfoil at low Reynolds numbers," AIAA Pap., vol. 82, no. 0345.
[176] P. R. B. and D. K. Robinson, Data Reduction and Error Analysis for the Physical Science, 3rd ed. New York: McGraw Hill Higher Education, 2003.
[177] W. G. S. Hugh W. Coleman, Experimentation and Uncertainty Analysis for Engineers. John Wiley & Sons, 1999.
[178] J. R. Taylor, An Introduction to Error Analysis: The Study of Uncertainties in Physical Measurements, vol. 51, no. 2. California: University Science Books, 1983.
[179] W. Horten, Reimar and Horten, "Toward the theory of Flying Wings," 1984. [Online]. Available: http://www.nurflugel.com/Nurflugel/Horten_Nurflugels/horten_nurflugels.ht ml. [Accessed: 08-Feb-2016].
[180] M. Simons, "Model Aircraft Aerodynamics." pp. 1-331, 1994.
[181] T. Cebeci, Numerical and Physical Aspects of Aerodynamic Flows IV. New York: Springer-Verlag- Berlin Heidelberg GmbH, 1990.
[182] N. S. Khot, J. V. Zweber, D. E. Veley, H. -Oslash, and F. E. Eastep, "Flexible Composite Wing with Internal Actuation for Roll Maneuver," J. Aircr., vol. 39, no. 4, pp. 521-527, Jul. 2002.
[183] N. S. Khot, F. E. Eastep, and R. M. Kolonay, "Method for Enhancement of the Rolling Maneuver of a Flexible Wing," J. Aircr., vol. 34, no. 5, pp. 673-678, 1997.

## Claims

1. A blade or wing including a blade or wing element (14) including many adjacent ribs (20) slidable with respect to one another whereby to vary the aerodynamic configuration of the blade or wing element (14) by causing a twist thereof, wherein the leading edge and trailing edge of each rib are at the leading edge and trailing edge of the blade or wing;
wherein the ribs are adjacent and substantially without gaps between adjacent ribs (20) whereby to provide a substantially smooth surface to the blade or wing element.

2. A blade or wing according to any preceding claim, including a plurality of actuators, each actuator being coupled to an associated rib (20) and being operable to rotate the respective associated rib.

3. A blade or wing according to claim 2, wherein each actuator is coupled to a main spar and is operable to rotate the respective rib (20) with respect to the main spar.

4. A blade or wing according to claim 3, wherein each actuator is coupled to the main spar via a lever arm.

5. A blade or wing according to claim 4, wherein each actuator is operable to cause the respective lever arm to rotate about a pivot position in the main spar to cause a rotation of the respective rib (20).

6. A blade or wing according to any of claims 2 to 5, wherein each actuator includes a servomotor.

7. A blade or wing according to any preceding claim, wherein the ribs (20) are coupled together by a linkage member configured to resist relative rotation of the ribs (20).

8. A blade or wing according to any preceding claim, including at least one stiffening rod coupled to each of the ribs to resist relative rotation of the ribs (20).

9. A blade or wing according to any preceding claim, wherein the ribs (20) are uncovered.

10. A blade or wing according to any preceding claim, wherein the ribs (20) are compliant to deformation in width.

11. A blade or wing according to any preceding claim, wherein each rib comprises an elastomeric material and a rigid metal support.

12. A blade or wing according to any preceding claim, wherein the wing element is over the complete wing span.

13. An aerodynamic apparatus including a blade or wing according to any of claims 1 to 12.

14. An aerodynamic apparatus according to claim 13, wherein the apparatus is one of an aircraft, or a wind turbine.

15. A method of assembling a blade or wing according to any of claims 1 to 12 including compressing the plurality of ribs before coupling the or an at least one stiffening rod.

## Patentansprüche

1. Blatt oder Flügel mit einem Blatt- oder Flügelelement (14) mit vielen benachbarten Rippen (20), die relativ zueinander verschiebbar sind, um dadurch die aerodynamische Konfiguration des Blatt- oder Flügelelementes (14) zu verändern, indem eine Verdrehung desselben bewirkt wird, wobei die Vorderkante und die Hinterkante jeder Rippe an der Vorderkante und der Hinterkante des Blattes oder Flügels sind;
wobei die Rippen benachbart und im Wesentlichen ohne Zwischenräume zwischen benachbarten Rippen (20) sind, wodurch dem Blatt- oder Flügelelement eine im Wesentlichen glatte Oberfläche verliehen wird.

2. Blatt oder Flügel nach einem vorhergehenden Anspruch, umfassend eine Mehrzahl von Aktuatoren, wobei jeder Aktuator mit einer zugehörigen Rippe (20) gekoppelt ist und betätigbar ist, um die jeweils zugehörige Rippe zu rotieren.

3. Blatt oder Flügel nach Anspruch 2, wobei jeder Aktuator mit einem Hauptholm gekoppelt ist und betätigbar ist, um die jeweilige Rippe (20) in Bezug auf den Hauptholm zu rotieren.

4. Blatt oder Flügel nach Anspruch 3, wobei jeder Aktuator mit dem Hauptholm über einen Hebelarm gekoppelt ist.

5. Blatt oder Flügel nach Anspruch 4, wobei jeder Aktuator betätigbar ist, um zu bewirken, dass der jeweilige Hebelarm um eine Schwenkposition im Hauptholm rotiert, um eine Rotation der jeweiligen Rippe (20) zu bewirken.

6. Blatt oder Flügel nach einem der Ansprüche 2 bis 5, wobei jeder Aktuator einen Servomotor umfasst.

7. Blatt oder Flügel nach einem der vorhergehenden Ansprüche, wobei die Rippen (20) durch ein Verbindungselement miteinander verbunden sind, das so konfiguriert ist, dass es einer relativen Rotation der Rippen (20) widersteht.

8. Blatt oder Flügel nach einem der vorhergehenden Ansprüche, umfassend mindestens eine Versteifungsstange, die mit jeder der Rippen verbunden ist, um einer relativen Rotation der Rippen (20) zu widerstehen.

9. Blatt oder Flügel nach einem der vorhergehenden Ansprüche, wobei die Rippen (20) unbedeckt sind.

10. Blatt oder Flügel nach einem der vorhergehenden Ansprüche, wobei die Rippen (20) bei einer Verformung in der Breite nachgiebig sind.

11. Blatt oder Flügel nach einem der vorhergehenden Ansprüche, wobei jede Rippe ein elastomeres Material und eine starre Metallstütze aufweist.

12. Blatt oder Flügel nach einem der vorhergehenden Ansprüche, wobei sich das Flügelelement über die gesamte Flügelspannweite erstreckt.

13. Aerodynamischer Apparat, umfassend ein Blatt oder einen Flügel nach einem der Ansprüche 1 bis 12.

14. Aerodynamischer Apparat nach Anspruch 13, wobei es sich bei dem Apparat um ein Flugzeug oder eine Windturbine handelt.

15. Verfahren zum Zusammenbau eines Blattes oder Flügels nach einem der Ansprüche 1 bis 12, umfassend ein Zusammendrückens der Vielzahl von Rippen vor einem Koppeln der oder einer wenigstens einen Versteifungsstange.

## Revendications

1. Pale ou aile comprenant un élément de pale ou d'aile (14) comprenant de nombreuses nervures adjacentes (20) aptes à coulisser les unes par rapport aux autres, ce qui permet de faire varier la configuration aérodynamique de l'élément de pale ou d'aile (14) en entraînant une torsion de celui-ci, le bord d'attaque et le bord de fuite de chaque nervure se trouvant au bord d'attaque et au bord de fuite de la pale ou aile ;
les nervures étant adjacentes et sensiblement sans intervalle entre des nervures adjacentes (20), ce qui permet de munir d'une surface sensiblement lisse l'élément de pale ou d'aile.

2. Pale ou aile selon la revendication 1, comprenant une pluralité d'actionneurs, chaque actionneur étant couplé à une nervure associée (20) et étant actionnable pour faire tourner la nervure associée respective.

3. Pale ou aile selon la revendication 2, dans laquelle chaque actionneur est couplé à un longeron principal et est actionnable pour faire tourner la nervure respective (20) par rapport au longeron principal.

4. Pale ou aile selon la revendication 3, dans laquelle chaque actionneur est couplé au longeron principal par l'intermédiaire d'un bras de levier.

5. Pale ou aile selon la revendication 4, dans laquelle chaque actionneur est actionnable pour amener le bras de levier respectif à tourner autour d'une position de pivotement dans le longeron principal pour amener une rotation de la nervure respective (20).

6. Pale ou aile selon l'une quelconque des revendications 2 à 5, dans laquelle chaque actionneur comprend un servomoteur.

7. Pale ou aile selon l'une quelconque des revendications précédentes, dans laquelle les nervures (20) sont couplées ensemble par un élément de liaison configuré pour résister à une rotation relative des nervures (20).

8. Pale ou aile selon l'une quelconque des revendications précédentes, comprenant au moins une tige de raidissement couplée à chacune des nervures pour résister à une rotation relative des nervures (20).

9. Pale ou aile selon l'une quelconque des revendications précédentes, dans laquelle les nervures (20) sont découvertes.

10. Pale ou aile selon l'une quelconque des revendications précédentes, dans laquelle les nervures (20) acceptent une déformation en largeur.

11. Pale ou aile selon l'une quelconque des revendications précédentes, dans laquelle chaque nervure comprend un matériau élastomère et un support métallique rigide.

12. Pale ou aile selon l'une quelconque des revendications précédentes, dans laquelle l'élément d'aile se trouve sur la totalité de l'envergure de l'aile.

13. Appareil aérodynamique comprenant une pale ou aile selon l'une quelconque des revendications 1 à 12.

14. Appareil aérodynamique selon la revendication 13, l'appareil étant l'un parmi un aéronef ou une éolienne.

15. Procédé d'assemblage d'une pale ou aile selon l'une quelconque des revendications 1 à 12, comprenant comprimer la pluralité de nervures avant le couplage de la ou de l'au moins une tige de raidissement.
